# EUROPEAN PATENT APPLICATION

(11) **EP 4 640 957 A1**
(43) Date of publication of application: **29.10.2025**
(21) Application number: 25171025.7
(22) Date of filing: 16.04.2025
(51) Int. Cl.: E02F 3/76, E02F 3/84, E02F 3/96

(54) **DOZER BLADE DRIVE MECHANISM**

(30) Priority: 26.04.2024 JP 2024072485; 13.09.2024 JP 2024159107
(71) Applicant: Nabtesco Corporation, Tokyo 102-0093 (JP)
(72) Inventor: Kitanaka, Soichiro, Chiyoda-ku, Tokyo, 102-0093 (JP); Nagayama, Hiromi, Chiyoda-ku, Tokyo, 102-0093 (JP); Nishitani, Keisuke, Chiyoda-ku, Tokyo, 102-0093 (JP); Sato, Masataka, Chiyoda-ku, Tokyo, 102-0093 (JP); Tanaka, Kohei, Chiyoda-ku, Tokyo, 102-0093 (JP); Tanaka, Motohiro, Chiyoda-ku, Tokyo, 102-0093 (JP); Komori, Etsuro, Chiyoda-ku, Tokyo, 102-0093 (JP); Yoshioka, Teruhiko, Chiyoda-ku, Tokyo, 102-0093 (JP); Hisada, Kazuki, Chiyoda-ku, Tokyo, 102-0093 (JP)
(74) Representative: Grünecker Patent- und Rechtsanwälte PartG mbB

(57) **Abstract**

A dozer blade drive mechanism (100) includes: a connection member (70) rotatably connected to a vehicle body (520) of a construction machine (500) at a first connection point (21A), the connection member being capable of having a dozer blade (300) mounted to a second connection point (23A) opposite to the first connection point; a motive power generating device (30) including an electric motor (31) serving as a drive source, the motive power generating device being configured to generate torque around a torque central axis (31A) parallel to a rotation central axis (21A) of the connection member; and a link mechanism (40) configured to transmit the torque generated by the motive power generating device as a rotational motion of the dozer blade around the rotation central axis. The torque central axis is located between the dozer blade and a middle of a line segment connecting the first connection point and the second connection point.

## Description

### TECHNICAL FIELD

The present disclosure relates to a dozer blade drive mechanism.

### BACKGROUND

The hydraulic excavator disclosed in Japanese Patent Application Publication No. 2002-88796 ("the '796 Publication") includes a dozer blade, a dozer cylinder, and a dozer arm. The dozer arm connects the dozer blade and the frame of the hydraulic excavator. The dozer arm rotates around the connection point to the frame. The dozer cylinder connects the dozer blade and the frame at a position above the dozer arm. Hydraulic fluid is supplied to and discharged from the dozer cylinder. The dozer cylinder extends and retracts in response to the hydraulic fluid supplied and discharged. The dozer blade is raised and lowered in response to extending and retracting of the dozer cylinder. The '796 Publication only discloses a hydraulic pressure as the power source for raising and lowering the dozer blade. The '796 Publication does not consider any other options than the hydraulic pressure as the power source for raising and lowering the dozer blade.

### SUMMARY

One aspect provides a dozer blade drive mechanism. The dozer blade drive mechanism comprises: a connection member rotatably connected to a vehicle body of a construction machine at a first connection point, the connection member being capable of having a dozer blade mounted to a second connection point opposite to the first connection point; a motive power generating device including an electric motor serving as a drive source, the motive power generating device being configured to generate torque around a torque central axis parallel to a rotation central axis of the connection member; and a link mechanism configured to transmit the torque generated by the motive power generating device as a rotational motion of the dozer blade around the rotation central axis. When viewed in a direction parallel to the torque central axis, with respect to a front-rear direction of the construction machine, the torque central axis is located between the dozer blade and a middle of a line segment connecting the first connection point and the second connection point.

In one embodiment, the link mechanism may include a first link and a second link, the first link being configured to rotate around the torque central axis by the torque received from the motive power generating device, the second link being rotatably connected to the first link at a third connection point and rotatably connected to the dozer blade at a fourth connection point, and when viewed in a direction parallel to the torque central axis, a length of a first line segment may be 50 to 200% of a length of a second line segment, where the first line segment connects the torque central axis and the third connection point, and the second line segment connects the third connection point and the fourth connection point.

In one embodiment, the link mechanism may include a first link and a second link, the first link being configured to rotate around the torque central axis by the torque received from the motive power generating device, the second link being rotatably connected to the first link at a third connection point and rotatably connected to the dozer blade at a fourth connection point, and assuming that the dozer blade is in contact with a ground surface on which the construction machine is located, the fourth connection point may be located downward of the third connection point.

In one embodiment, when viewed in a direction parallel to the torque central axis, assuming that the dozer blade is in contact with the ground surface, an inferior angle formed by a first line segment and a second line segment may be 75 to 105 degrees, where the first line segment connects the torque central axis and the third connection point, and the second line segment connects the third connection point and the fourth connection point.

In one embodiment, assuming that the dozer blade is in contact with the ground surface, the first line segment may be parallel to the ground surface. Another aspect provides a dozer blade drive mechanism. The dozer blade drive mechanism comprises: a motive power generating device located in a traveling crawler of a construction machine, the motive power generating device including an electric motor and configured to generate torque; and a connection member connected to the motive power generating device at a connection point, the connection member being rotatable by the torque received from the motive power generating device and capable of having a dozer blade mounted to a mounting point opposite to the connection point.

In one embodiment, the motive power generating device and the connection member may form a first power transmission mechanism, the dozer blade drive mechanism may further include a second power transmission mechanism, and the first power transmission mechanism and the second power transmission mechanism may be provided for the traveling crawler and another traveling crawler of the construction machine, respectively.

In one embodiment, each of the power transmission mechanisms may include a universal coupling that is located at the mounting point and configured to connect the connection member and the dozer blade, and the dozer blade drive mechanism may further include a control device configured to separately control the electric motors of the first power transmission mechanism and the second power transmission mechanism.

In one embodiment, the dozer blade drive mechanism may further comprise: a driven sprocket having an annular shape coaxial with a rotation central axis of the motive power generating device, the driven sprocket having a plurality of teeth on an outer circumferential surface thereof, the driven sprocket being penetrated by the motive power generating device; and a bearing located between the driven sprocket and the motive power generating device and supporting the driven sprocket so as to be rotatable relative to the motive power generating device, the driven sprocket may be located at an end in the traveling crawler, the end being opposite to a driving sprocket for traveling, across a center of the traveling crawler, and the connection member may extend from the connection point toward a side opposite to the driving sprocket.

Yet another aspect provides a dozer blade drive mechanism. The dozer blade drive mechanism comprises: a motive power generating device mounted to a vehicle body of a construction machine, the motive power generating device including an electric motor and configured to generate torque; and a connection member connected to the motive power generating device at a connection point, the connection member being rotatable by the torque received from the motive power generating device and capable of having a dozer blade mounted to a side opposite to the connection point.

In one embodiment, the vehicle body may include a wall for mounting the motive power generating device, and the wall may extend across a middle between a pair of crawlers. In one embodiment, the motive power generating device and the connection member may form a first power transmission mechanism, the dozer blade drive mechanism may further include a second power transmission mechanism, and the first power transmission mechanism and the second power transmission mechanism may be located on one side and another side, respectively, across a middle between a pair of crawlers.

Still another aspect provides a dozer blade drive mechanism. The dozer blade drive mechanism comprises: a motive power generating device mounted to an upper body rotatable relative to a lower body of a construction machine, the motive power generating device including an electric motor serving as a drive source, the motive power generating device being configured to generate torque; and a connection member connected to the motive power generating device at a connection point, the connection member being rotatable by the torque received from the motive power generating device and capable of having a dozer blade mounted to a side opposite to the connection point.

In one embodiment, the construction machine may include a bucket for excavation, and when viewed in a direction parallel to a rotation central axis of the motive power generating device, the bucket may be located in a first direction as viewed from the connection point, where the first direction is a direction in which the dozer blade is located as viewed from the connection point.

In one embodiment, the motive power generating device may include a transmission member configured to output torque in accordance with rotation of the electric motor, the transmission member may include a first member and a second member arranged in a direction along a rotation central axis of the motive power generating device, the first member may have: a first flat surface facing the second member; and a recess formed in the first flat surface and extending along a first axis parallel to the first flat surface, and the second member may have: a second flat surface facing the first flat surface; and a protrusion protruding from the second flat surface at a position facing the recess, the protrusion extending along the first axis.

Still another aspect provides a dozer blade drive mechanism. The dozer blade drive mechanism comprises: a connection member rotatably connected to a vehicle body of a construction machine at a connection point, the connection member being capable of having a dozer blade mounted to a side opposite to the connection point; a motive power generating device including an electric motor serving as a drive source, the motive power generating device being configured to generate torque; a conversion mechanism configured to convert the torque generated by the motive power generating device into a linear motion in a direction along a power central axis, the power central axis being an axis along a top-bottom direction of the construction machine; and a link mechanism configured to transmit the linear motion produced by conversion of the conversion mechanism as a rotational motion of the dozer blade.

In one embodiment, the conversion mechanism may include: a nut configured to rotate by the torque received from the motive power generating device; a threaded shaft penetrating the nut; and a plurality of balls interposed between the nut and the threaded shaft.

In one embodiment, the motive power generating device may include a speed reducer configured to change a rotational speed of the electric motor and output a resulting rotational speed, the speed reducer may be shaped like a tube having a central axis coinciding with the power central axis, and the speed reducer may include an output member for outputting torque to the nut, the output member being located on one end surface side in a direction along the power central axis, the nut may be connected to the output member of the speed reducer, and the threaded shaft and the nut may penetrate the speed reducer.

In one embodiment, the motive power generating device may be connected to the vehicle body so as to be rotatable around a central axis parallel to a rotation central axis of the connection member. Still another aspect provides a dozer blade drive mechanism. The dozer blade drive mechanism comprises: a connection member rotatably connected to a vehicle body of a construction machine at a connection point, the connection member being capable of having a dozer blade mounted to a side opposite to the connection point; a motive power generating device including an electric motor serving as a drive source, the motive power generating device being configured to generate torque; and an eccentric cam configured to rotate around a rotation central axis parallel to a rotation central axis of the connection member by the torque received from the motive power generating device, and the eccentric cam has a cam surface forming an outer circumferential surface thereof, and the cam surface is in contact with the connection member.

In one embodiment, the eccentric cam may constitute a first eccentric cam, the cam surface may constitute a first cam surface, and the rotation central axis of the first eccentric cam may constitute a first rotation central axis, the dozer blade drive mechanism may further comprise: a second eccentric cam configured to rotate around a second rotation central axis parallel to the first rotation central axis, and the second eccentric cam being located opposite the first eccentric cam across the connection member; and an interlocking mechanism configured to cause the first eccentric cam and the second eccentric cam to rotate in conjunction with each other, the second eccentric cam may have a second cam surface forming an outer circumferential surface thereof, and the second cam surface may be in contact with the connection member from an opposite side than the first cam surface, the first eccentric cam and the second eccentric cam may have a same shape and same dimensions, and the first eccentric cam and the second eccentric cam may rotate in conjunction with each other so that a direction in which, as viewed from the first rotation central axis, a furthest point of the first cam surface from the first rotation central axis is located coincides with a direction in which, as viewed from the second rotation central axis, a furthest point of the second cam surface from the second rotation central axis is located.

In one embodiment, the dozer blade drive mechanism may further comprise: a spring configured to impart a biasing force to the connection member so that the connection member rotates toward one direction side relative to the vehicle body, and when a distance from the rotation central axis of the eccentric cam to a contact point between the cam surface and the connection member is smallest, the one direction side may be opposite to a side on which the contact point is located, as viewed from the rotation central axis of the eccentric cam.

Still another aspect provides a dozer blade drive mechanism. The dozer blade drive mechanism comprises: a connection member rotatably connected to a vehicle body of a construction machine at a connection point, the connection member having a dozer blade mounted to a side opposite to the connection point; a motive power generating device mounted to the dozer blade, the motive power generating device including an electric motor serving as a drive source, the motive power generating device being configured to generate torque around a central axis parallel to a rotation central axis of the connection member; and a link mechanism connecting the motive power generating device and the vehicle body, the link mechanism being configured to transmit the torque generated by the motive power generating device as a rotational motion of the dozer blade around the rotation central axis.

### BRIEF DESCRIPTION OF THE DRAWINGS

Fig. 1 is a side view schematically showing the configuration of an excavator relating to a first embodiment.
Fig. 2 is a top view schematically showing the excavator relating to the first embodiment.
Fig. 3 shows a base posture of a connection mechanism of the first embodiment.
Fig. 4 shows the posture of the connection mechanism taken when the dozer blade of the first embodiment is in the upper limit position of its movable range.
Fig. 5 shows the posture of the connection mechanism taken when the dozer blade of the first embodiment is in the lower limit position of its movable range.
Fig. 6 is a side view schematically showing the configuration of an excavator relating to a second embodiment.
Fig. 7 is a top view schematically showing the configuration of the excavator relating to the second embodiment.
Fig. 8 is a perspective view of a first member of a transmission member.
Fig. 9 is a perspective view of a second member of the transmission member.
Fig. 10 schematically shows an example of the use of the dozer blade relating to the second embodiment.
Fig. 11 is a side view schematically showing the configuration of an excavator relating to a third embodiment.
Fig. 12 is a top view schematically showing the configuration of the excavator relating to the third embodiment.
Fig. 13 is a side view schematically showing the configuration of an excavator relating to a fourth embodiment.
Fig. 14 is a top view schematically showing the configuration of the excavator relating to the fourth embodiment.
Fig. 15 schematically shows a motive power generating device of the fourth embodiment.
Fig. 16 is a top view showing an aspect of the excavator relating to the fourth embodiment.
Fig. 17 is a top view showing an aspect of the excavator relating to the fourth embodiment.
Fig. 18 is a top view showing a modification example of the excavator relating to the fourth embodiment.
Fig. 19 is a side view schematically showing the configuration of an excavator relating to a fifth embodiment.
Fig. 20 is a top view schematically showing the configuration of the excavator relating to the fifth embodiment.
Fig. 21 is a sectional view schematically showing a dozer blade drive mechanism of the fifth embodiment.
Fig. 22 is a top view schematically showing a link mechanism relating to the first embodiment.
Fig. 23 is a side view showing the dozer blade of the fifth embodiment rotated upward.
Fig. 24 is a side view showing the dozer blade of the fifth embodiment rotated downward.
Fig. 25 is a side view schematically showing the configuration of an excavator relating to a sixth embodiment.
Fig. 26 is a top view schematically showing the configuration of the excavator relating to the sixth embodiment.
Fig. 27 schematically shows a first aspect of the dozer blade drive mechanism of the sixth embodiment.
Fig. 28 schematically shows a second aspect of the dozer blade drive mechanism of the sixth embodiment.
Fig. 29 shows a modification example of the dozer blade drive mechanism of the sixth embodiment.
Fig. 30 is a side view schematically showing the configuration of an excavator relating to a seventh embodiment.
Fig. 31 shows the dozer blade of the seventh embodiment rotated upward.
Fig. 32 shows the dozer blade of the seventh embodiment rotated downward.

### DESCRIPTION OF THE PREFERRED EMBODIMENTS

### <First Embodiment>

A dozer blade drive mechanism relating to the first embodiment will be described with reference to the appended drawings. The drawings may show the components in an enlarged manner for the sake of better intelligibility. The dimensions of the components and the ratios thereof may be different from those of the actual components, and among the drawings.

### <Overall Configuration>

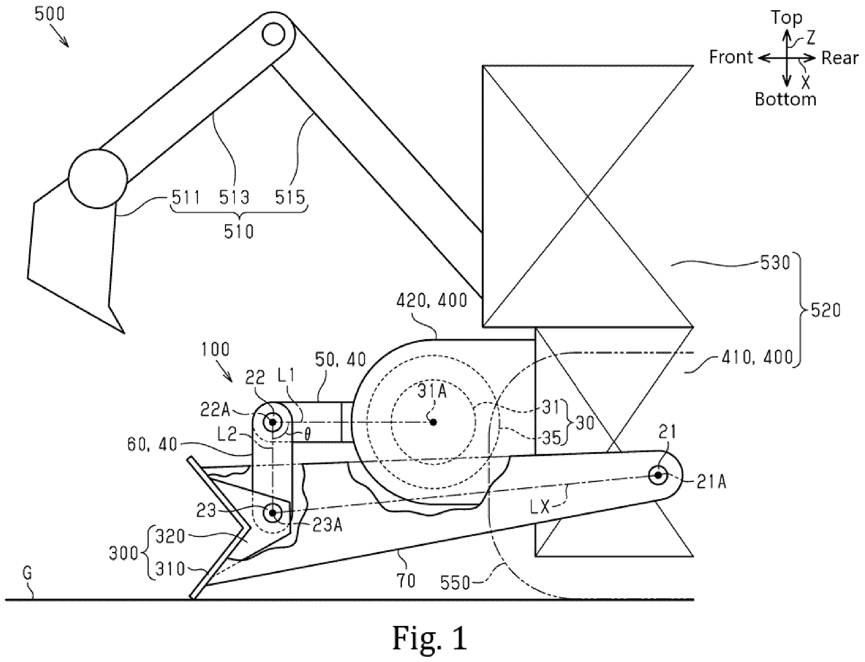

As shown in Fig. 1, an excavator 500, serving as a construction machine, includes a vehicle body 520. The vehicle body 520 includes a lower case 400 and an upper body 530. The lower case 400 is also referred to simply as the lower body. The upper body 530 is located opposite the ground surface G across the lower case 400. The upper body 530 includes an operator seat and a battery compartment. In the present embodiment, the excavator 500 is used as a reference to define the top (high, upper, upward), bottom (low, downward), left, right, front (forward), and rear. Specifically, when viewed from the lower case 400, the upper body 530 is located in the upward direction, and the opposite direction is the downward direction. A specific one of the directions orthogonal to the upward direction is the frontward direction, and the opposite direction is the rearward direction. Furthermore, the direction that is orthogonal to both of the upward and frontward directions faces the leftward and rightward directions, which are opposite to each other. In the following, the frontward and rearward directions may be referred to collectively as the X direction, the leftward and rightward directions as the Y direction, and the upward and downward directions as the Z direction. The upper body 530 is rotatable about an axis extending substantially in the Z direction to the left and right relative to the lower case 400.

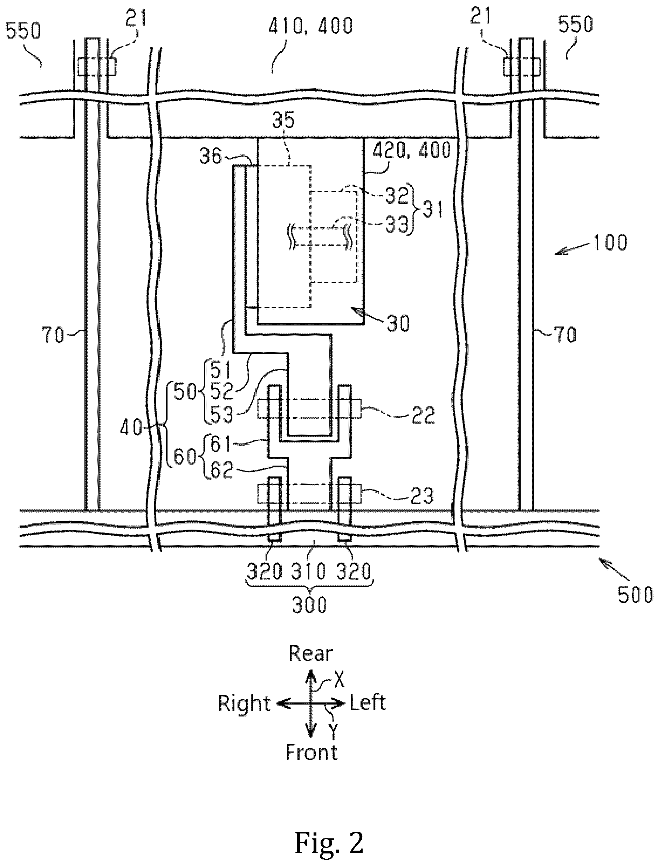

The lower case 400 includes a case main portion 410 and a case front portion 420. The case main portion 410 is contoured like a rectangular parallelepiped, for example. The case main portion 410 houses various mechanisms necessary to operate the excavator 500. The case main portion 410 is not limited to a box-like shape, but can have any shape capable of having necessary components mounted thereto. The case front portion 420 is positioned frontward of the case main portion 410. The case front portion 420 is fixed to the case main portion 410. As shown in Fig. 2, the case front portion 420 extends across the middle portion of the case main portion 410 in the Y direction. The upper body 530 is not shown in Fig. 2. The case front portion 420 as a whole is contoured like a rectangular parallelepiped. As shown in Fig. 1, the outer surface of the case front portion 420 opposite to the case main portion 410 is curved in an arc so that, for example, the middle portion is convex toward the front when viewed in the Y direction. The interior of the case front portion 420 is hollow.

As shown in Figs. 1 and 2, the excavator 500 includes a pair of traveling units 550. The traveling units 550 are provided on the left and right sides across the lower case 400. The traveling units 550 each include an endless belt-like crawler and an operating mechanism that circles the crawler. The operating mechanism is located within the region enclosed by the crawler. In the traveling unit 550, the operating mechanism is included in the elements of the vehicle body 520.

As shown in Fig. 1, the excavator 500 includes a work attachment 510. The work attachment 510 includes a boom 515 shaped like a column, a work arm 513 shaped like a column, and a bucket 511 shaped like a box. The boom 515 extends frontward from the upper body 530. The boom 515 can rotate upward and downward about the connection point to the upper body 530 relative to the upper body 530. The work arm 513 is connected to the distal end of the boom 515. The work arm 513 can rotate upward and downward about the connection point to the boom 515 relative to the boom 515. The bucket 511 is connected to the distal end of the work arm 513. The bucket 511 can rotate upward and downward about the connection point to the work arm 513 relative to the work arm 513. The work attachment 510 is not shown in Fig. 2.

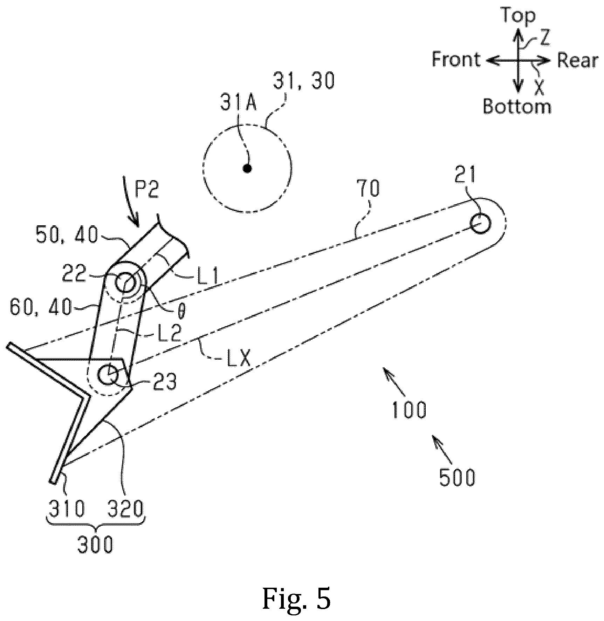

As shown in Fig. 1, the excavator 500 includes a dozer blade 300. The dozer blade 300 is positioned frontward of the case front portion 420. The dozer blade 300 includes a dozer blade body 310 and a pair of mounting pieces 320. The dozer blade body 310 is shaped like a plate. When viewed in the Y direction, the dozer blade body 310 is bent at a middle portion in the Z direction so that it is convex toward the rear. As shown in Fig. 2, the dozer blade body 310 is long in the Y direction. Fig. 2 shows the arrangement of the components at the time when the dozer blade 300 is in the lower limit position shown in Fig. 5, viewed from the upper side. The pair of mounting pieces 320 are located near the middle of the dozer blade body 310 in the Y direction . The pair of mounting pieces 320 extend rearward from the rear surface of the dozer blade body 310. The pair of mounting pieces 320 are spaced apart from each other in the Y direction. As shown in Fig. 1, the pair of mounting pieces 320 are located within the region in the Z direction where the dozer blade body 310 is present. The pair of mounting pieces 320 are connected to the lower case 400 via a connection mechanism 100 described in the following.

### <Connection Mechanism>

As shown in Fig. 2, the excavator 500 includes a connection mechanism 100. The connection mechanism 100 is also referred to as the dozer blade drive mechanism. The connection mechanism 100 includes a pair of arms 70. The arms 70 are also referred to as the connection members. The pair of arms 70 are located on the left and right sides of the lower case 400. The pair of arms 70 are symmetrical in the Y direction. Therefore, only one of the pair of arms 70 will be detailed below. The arm 70 is long in the front-rear direction. One end of the arm 70 is penetrated by a first support shaft 21. The first support shaft 21 is fixed to the case main portion 410. Thus, the arm 70 is connected to the case main portion 410 via the first support shaft 21. The first support shaft 21 is shaped like a circular column. The central axis 21A of the first support shaft 21 extends substantially in the Y direction. As shown in Fig. 1, the arm 70 can rotate around the first support shaft 21 relative to the case main portion 410. Thus, the central axis 21A of the first support shaft 21 is the rotation central axis of the arm 70. The arm 70 extends straight from the first support shaft 21 in the forward direction. The dozer blade 300 can be mounted via a mounting means to the front end of the arm 70, i.e., the end of the arm 70 opposite to the connection point to the case main portion 410. Various mounting means, such as bolting or welding, can be employed. In this embodiment, the rear surface of the dozer blade body 310 is mounted to the front end of the arm 70. In Fig. 1, the arm 70 is partially cut out to elucidate the positional relationship between the components.

Suppose that, as shown in Figure 1, the ground surface G on which the crawlers of the traveling units 550 are traveling is flat and that the flat ground surface G continues forward of the crawlers along the underside of the crawlers. On the precondition that the excavator 500 is located on such ground surface G, the lower end of the dozer blade body 310 is assumed to be in contact with the ground surface G. This assumption is herein referred to as the base assumption. In this base assumption, the first support shaft 21 is located near the middle portion of the dozer blade body 310 in the Z direction, slightly upward of the middle portion. Thus, the arm 70 is inclined slightly downward so that it is lowered toward the front.

### <Motive Power Generating Device>

As shown in Fig. 1, the connection mechanism 100 includes a motive power generating device 30. As shown in Fig. 2, the motive power generating device 30 includes a motor 31, a speed reducer 35, and a transmission member 36.

The motor 31 is the drive source of the motive power generating device 30. The motor 31 includes a housing 32 and an output shaft 33. The motor 31 operates electrically upon receiving electricity fed from a battery, which is not shown. The housing 32 is fixed to the inner side of the case front portion 420. Most part of the output shaft 33 is located inside the housing 32. A part of the output shaft 33 protrudes toward the right from the housing 32. The output shaft 33 is shaped like a circular column. The output shaft 33 is rotatable relative to the housing 32. The output shaft 33 rotates about its own central axis 31A. The central axis 31A of the output shaft 33 extends substantially in the Y direction. Thus, the central axis 31A of the output shaft 33 is substantially parallel to the central axis 21A of the first support shaft 21 and thus the rotation central axis of the arm 70. The output shaft 33 can rotate in both forward and reverse directions in accordance with the power supplied to the motor 31. The central axis 31A of the output shaft 33 may be hereinafter referred to as the central axis 31A of the motor 31. As shown in Fig. 1, the central axis 31A of the output shaft 33 is located upward of the central axis 21A of the first support shaft 21.

As shown in Fig. 2, the speed reducer 35 is adjacent to the motor 31 in the direction along the central axis 31A of the output shaft 33 of the motor 31. In this embodiment, the speed reducer 35 is positioned on the right side of the motor 31. The speed reducer 35 is housed in the case front portion 420. The speed reducer 35 is connected to the output shaft 33 of the motor 31. The speed reducer 35 receives the torque of the output shaft 33 of the motor 31. The speed reducer 35 multiplies the torque of the output shaft 33 of the motor 31 with a predetermined ratio and outputs the resulting torque. The speed reducer 35 may be of, for example, an eccentric oscillation gear type or planetary gear type. The speed reducer 35 can be of any type as long as it is capable of multiplying the torque from the motor 31 and outputting the resulting torque.

The transmission member 36 is connected to the speed reducer 35. In this embodiment, the transmission member 36 is positioned on the right side of the speed reducer 35. For example, the transmission member 36 is positioned to be exposed from the case front portion 420. For example, the transmission member 36 is shaped like a plate. The transmission member 36 receives the torque output from the speed reducer 35. The transmission member 36 rotates in accordance with the torque received from the speed reducer 35. The rotation central axis of the transmission member 36 coincides with the central axis 31A of the motor 31. Thus, the transmission member 36 outputs torque around the central axis 31A of the motor 31. As described above, the motive power generating device 30 serves to generate torque around the central axis 31A of the motor 31 using the motor 31 as the drive source.

### <Link Mechanism>

As shown in Fig. 1, the connection mechanism 100 includes a link mechanism 40. The link mechanism 40 includes a first link 50 and a second link 60. A plan view of the excavator 500 facing parallel to the central axis 31A of the motor 31 is hereinafter referred to as the specified plan view. As shown in Fig. 1, the first link 50 is a link component that appears straight in the specified plan view. On the other hand, as shown in Fig. 2, the first link 50 has a crank shape with two bends as viewed in the Z direction. Specifically, the first link 50 includes a connecting portion 51 that extends straight in the front-rear direction, a step portion 52 that is bent with respect to the connecting portion 51, and an extension portion 53 that extends straight in the front-rear direction from the end of the step portion 52 opposite to the connecting portion 51. The connecting portion 51 and the extension portion 53 are parallel to each other and misaligned in the X direction. In this embodiment, the connecting portion 51 is positioned on the right side of the motive power generating device 30. The connecting portion 51 is fixed to the transmission member 36 of the motive power generating device 30. The connecting portion 51 operates integrally with the transmission member 36. Thus, the connecting portion 51, and thus the entire first link 50, rotates around the central axis 31A of the motor 31 by the torque received from the motive power generating device 30. The end of the connecting portion 51 that is closer to the step portion 52 reaches forward of the case front portion 420. The step portion 52 and the extension portion 53 are located forward of the case front portion 420. The extension portion 53 is located near the middle of the case front portion 420 in the Y direction.

As shown in Fig. 1, the second link 60 is a link component that appears straight in the specified plan view. On the other hand, as shown in Fig. 2, the second link 60 has a U-shaped leg portion 61 and a trunk portion 62 that extends straight from the bottom of the U shape in the leg portion 61 toward the opposite side to the bifurcated parts of the U shape, as viewed in the Z direction. The end of the extension portion 53 in the first link 50 is located between the bifurcated parts of U shape in the leg portion 61. The leg portion 61 and the extension portion 53 of the first link 50 are penetrated by a second support shaft 22. Thus, the leg portion 61 and the extension portion 53 of the first link 50 are connected via the second support shaft 22. The second support shaft 22 is retained to the leg portion 61 and the extension portion 53 by means of a retainer not shown. The second support shaft 22 is shaped like a circular column. The central axis 22A of the second support shaft 22 extends substantially in the Y direction. Thus, the central axis 22A of the second support shaft 22 is substantially parallel to the central axis 21A of the first support shaft 21. The leg portion 61 and the extension portion 53 of the first link 50 are rotatable relative to the second support shaft 22. In addition, the leg portion 61 and the extension portion 53 of the first link 50 can rotate relative to each other around the second support shaft 22.

The end of the trunk portion 62 of the second link 60 opposite to the leg portion 61 is located between the pair of mounting pieces 320 of the dozer blade 300. The pair of mounting pieces 320 and the trunk portion 62 are penetrated by a third support shaft 23. Thus, the trunk portion 62 and the mounting pieces 320 are connected via the third support shaft 23. The third support shaft 23 is retained to the trunk portion 62 and the mounting pieces 320 by means of a retainer not shown. The third support shaft 23 is shaped like a circular column. The central axis 23A of the third support shaft 23 extends substantially in the Y direction. Thus, the central axis 23A of the third support shaft 23 is substantially parallel to the central axis 22A of the second support shaft 22. The trunk portion 62 and the mounting pieces 320 are rotatable relative to the third support shaft 23. In addition, the trunk portion 62 and the mounting pieces 320 can rotate relative to each other around the third support shaft 23. Thus, the second link 60 can rotate relative to both the first link 50 and the dozer blade 300.

As described above, the first link 50 and the second link 60 connect the motive power generating device 30 and the dozer blade 300. In addition, the second link 60 can rotate relative to both the first link 50 and the dozer blade 300. As a result of such connection structure, when the motive power generating device 30 generates torque, the first link 50 and the second link 60 can transmit this torque to the dozer blade 300 through their rotation. The resultant operation of the dozer blade 300 is described in the section on the operation of the embodiment below.

### <Positional Relationship and Dimensional Relationship>

The following is a description of the positional relationship and dimensional relationship among the components of the connection mechanism 100. As shown in Fig. 1, in the specified plan view, the line segment connecting the central axis 21A of the first support shaft 21 and the central axis 23A of the third support shaft 23 is referred to as the arm line segment LX. The central axis 21A of the first support shaft 21 corresponds to the connection point (first connection point) in the arm 70 to the case main portion 410. The central axis 23A of the third support shaft 23 corresponds to the connection point (second connection point) in the second link 60 to the dozer blade 300. In the specified plan view, the line segment connecting the central axis 31A of the motor 31 and the central axis 23A of the third support shaft 23 is referred to as the link line segment. The positional relationship and dimensional relationship among the components of the connection mechanism 100 is set so that the link line segment is shorter than the arm line segment LX.

Specifically, in the connection mechanism 100, the positions of the support shafts and the lengths of the links and the arm 70 are set to satisfy a first condition in the specified plan view. The first condition is that, with respect to the X direction (front-rear direction of the excavator 500), the central axis 31A of the motor 31 is located closer to the dozer blade 300 than is the middle of the arm line segment LX. In other words, the central axis 31A of the motor 31 is located forward of the middle of the arm line segment LX. In this embodiment, the positions of the support shafts and the lengths of the links and the arm 70 are set so that the first condition is satisfied throughout the entire movable range of the dozer blade 300.

In this embodiment, if the base assumption is true, the arm line segment LX **extends** generally in the X direction. Thus, if the base assumption is true, the first condition being satisfied means that, with respect to the direction along the arm line segment LX, the central axis 31A of the motor 31 is located closer to the dozer blade 300 than is the middle of the arm line segment LX.

In the connection mechanism 100, the dimensional relationship between the first link 50 and the second link 60 is set to satisfy a second condition described below. As shown in Fig. 1, in the specified plan view, the line segment connecting the central axis 31A of the motor 31 and the central axis 22A of the second support shaft 22 is referred to as the first line segment L1. In the specified plan view, the line segment connecting the central axis 22A of the second support shaft 22 and the central axis 23A of the third support shaft 23 is referred to as the second line segment L2. The central axis 22A of the second support shaft 22 corresponds to the connection point (third connection point) in the second link 60 to the first link 50. The central axis 23A of the third support shaft 23 corresponds to the connection point (fourth connection point) in the second link 60 to the dozer blade 300, as described above. The second condition is that the length of the first line segment L1 is set to a predetermined value that is 150% to 200% of the length of the second line segment L2.

In the connection mechanism 100, the positions of the support shafts and the lengths of the links and the arm 70 are set to satisfy a third condition. The third condition is that, supposing that the base assumption is true, the inferior angle θ formed by the first and second line segments L1 and L2 in the specified plan view is 75 to 105 degrees. Specifically, the third condition is that all of the following three requirements are met. The first requirement is that, when the base assumption is true, the central axis 31A of the motor 31 and the central axis 22A of the second support shaft 22 are located at substantially the same position in the Z direction. In other words, in the specified plan view, the first line segment L1 extends generally in the X direction and is parallel to the ground surface G. The second requirement is that, when the base assumption is true, the central axis 23A of the third support shaft 23 is located downward of the central axis 22A of the second support shaft 22. The third requirement is that, when the base assumption is true, the central axis 22A of the second support shaft 22 and the central axis 23A of the third support shaft 23 are located at substantially the same position in the X direction. In other words, in the specified plan view, the second line segment L2 extends generally in the Z direction. In this embodiment, when the third condition is satisfied, the inferior angle θ mentioned above is substantially 90 degrees. The inferior angle θ formed by the first line segment L1 and the second line segment L2 is the angle formed by the first line segment L1 and the second line segment L2 that is smaller than 180 degrees.

### <Operation of First Embodiment>

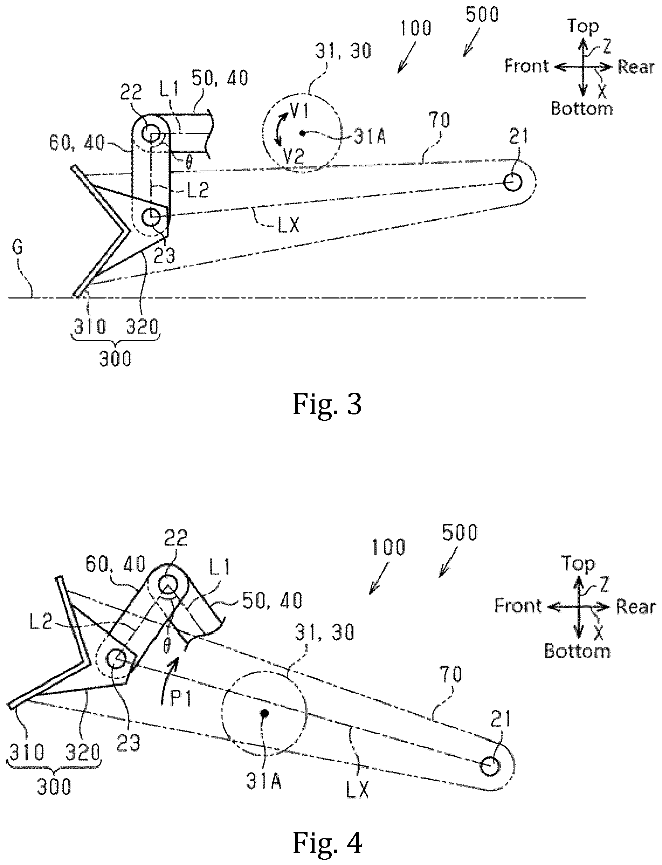

The following now describes how the dozer blade 300 is raised and lowered. A first direction V1 refers to the clockwise direction in Fig. 3, that is, the clockwise direction determined when the excavator 500 is viewed in the specified plan view from the left, and a second direction V2 refers to the direction opposite to the first direction V1. In the following, a base posture refers to the posture of the components of the connection mechanism 100 and the dozer blade 300 taken when the base assumption is true, shown in Fig. 3. In the base posture, the first support shaft 21 is located slightly upward of the third support shaft 23 in the Z direction. As mentioned above, the arm line segment LX extends generally in the X direction.

Suppose now that the components of the connection mechanism 100 are in the base posture. In this state, suppose that the output shaft 33 of the motor 31 rotates in the first direction V1. Then, as shown by the arrow P1 in Fig. 4, the first link 50 rotates upward around the central axis 31A of the motor 31. Along with that, the second link 60, the dozer blade 300, and the arm 70 move upward. At this time, the dozer blade 300 rotates upward around the first support shaft 21 along with the arm 70. In other words, the dozer blade 300 is raised. While the dozer blade 300 is raised from the base posture, the inferior angle θ formed by the first and second line segments L1 and L2 in the specified plan view decreases gradually. When the dozer blade 300 has reached the upper limit position of its movable range, the inferior angle θ formed by the first and second line segments L1 and L2 in the specified plan view is about 70 degrees, for example. In the upper limit position, the third support shaft 23 is located upward of the first support shaft 21, and the second support shaft 22 is located further upward of the third support shaft 23.

As shown in Fig. 3, suppose again that the components of the connection mechanism 100 are in the base posture. In this state, suppose that the output shaft 33 of the motor 31 rotates in the second direction V2. When the ground surface G is dug down by the work attachment 510, for example, the excavator 500 can reach the dozer blade 300 to the side downward of the imaginary plane extending from the lower surface of the crawler. Now, when the output shaft 33 of the motor 31 is rotated in the second direction V2, the first link 50 rotates downward around the central axis 31A of the motor 31, as shown by the arrow P2 in Fig. 5. Along with that, the second link 60, the dozer blade 300, and the arm 70 move downward. At this time, the dozer blade 300 rotates downward around the first support shaft 21 along with the arm 70. In other words, the dozer blade 300 is lowered. While the dozer blade 300 is lowered from the base posture, the inferior angle θ formed by the first and second line segments L1 and L2 in the specified plan view increases gradually. When the dozer blade 300 has reached the lower limit position of its movable range, the inferior angle θ formed by the first and second line segments L1 and L2 in the specified plan view is about 150 degrees, for example. In the lower limit position, the second support shaft 22 is located downward of the first support shaft 21, and the third support shaft 23 is located further downward of the second support shaft 22.

As described above, the first link 50 and the second link 60 serve to transmit the torque generated by the motive power generating device 30 as the rotational motion of the dozer blade 300 around the central axis 21A of the first support shaft 21.

### <Advantageous Effects of First Embodiment>

(1-1) According to this embodiment, the rotation of the output shaft 33 of the motor 31 can be transmitted to the dozer blade 300 via the first link 50 and the second link 60. This allows the dozer blade 300 to be raised and lowered. In other words, according to this embodiment, the dozer blade 300 can be raised and lowered using the motor 31 as the power source. In employing such an electrically powered raising and lowering mechanism for the dozer blade 300, the positions and dimensions of the components of the connection mechanism 100 are set in this embodiment to satisfy the first condition. Specifically, as shown in Fig. 1, with respect to the X direction, the central axis 31A of the motor 31 is located closer to the dozer blade 300 than is the middle of the arm line segment LX. In other words, in this embodiment, the motive power generating device 30, which includes the motor 31, is located relatively close to the dozer blade 300. In accomplishing the raising and lowering of the dozer blade 300 using the motor 31 as the power source, for example, it is conceivable to install the motive power generating device 30 near the rear end of the arm 70 and to apply torque to the rear end of the arm 70 to rotate the arm 70. Compared to such a comparative example, this embodiment provides a shorter distance from the central axis 31A of the motor 31 to the point such as the third support shaft 23 at which the torque of the motive power generating device 30 acts on the dozer blade 300. In such configuration of this embodiment, the torque output from the motor 31 and thus from the motive power generating device 30 can be smaller for raising and lowering the dozer blade 300. The smaller torque of the motive power generating device 30 contributes to the downsizing of the motive power generating device 30.

(1-2) In this embodiment, the dimensional relationship between the first link 50 and the second link 60 is set to satisfy the second condition. Specifically, the length of the first line segment L1 is 150% to 200% of the length of the second line segment L2. This configuration ensures a reasonably large dimension of the first link 50 in the radial direction around the central axis 31A of the motor 31. This contributes to a larger movable range of the dozer blade 300.

(1-3) During use of the excavator 500, loads resulting from collisions with earth and other materials may be input to the dozer blade 300 from the front. These loads may be input to the connection mechanism 100 through the dozer blade 300. Depending on the configuration of the connection mechanism 100, most of these loads may be input to the motive power generating device 30. If most of the external loads may be input to the motive power generating device 30, it is necessary to provide in advance the motive power generating device 30 with a structure for handling such loads so that the motive power generating device 30 can withstand the large loads. An example of the structure for handling the loads is increased sizes of the bearings and support columns provided in the speed reducer 35. However, use of such a structure for handling the loads may increase the size of the motive power generating device 30.

By contrast, in this embodiment, the positions and dimensions of the components of the connection mechanism 100 are set to satisfy the third condition. The third condition includes the following second requirement. As shown in Fig. 1, when the lower end of the dozer blade body 310 is in contact with the ground surface G, the third support shaft 23 is located downward of the second support shaft 22, and the second link 60 extends generally in the top-bottom direction. In this configuration, suppose that a load acts on the dozer blade 300 from the front. The load acting on the dozer blade 300 from the front includes mainly a component in the X direction. This load thus hardly acts as a force to move the components in the direction intersecting the X direction. **Specifically,** this load hardly acts as a force to move upward the second link 60, which extends generally in the Z direction, and thus the second support shaft 22 located at the upper end of the second link 60, and hardly contributes to the rotation of the first link 50. Also, there are gaps between the through holes in the links penetrated by the support shafts and the outer circumferential surfaces of the support shafts, and these gaps allow rotation of the links and the support shafts. Even if the second link 60 moves slightly due to the load acting on the dozer blade 300, the movement of the second link 60 is released by the gap mentioned above and is not transmitted to the first link 50. These and other factors together hardly allow this load acting on the dozer blade 300 from the front to be input to the motive power generating device 30. On the other hand, the load acting on the dozer blade 300 from the front includes a component in the X direction, as described above. Therefore, this load acts mainly on the first support shaft 21 and thus on the case main portion 410, which are located rearward of the dozer blade 300. The case main portion 410 will receive most of this load. In general, this embodiment can prevent the motive power generating device 30 from receiving the force associated with the load acting on the dozer blade 300 from the front. This inhibits an increase in the size of the motive power generating device 30.

(1-4) Since the third condition is satisfied, the inferior angle θ formed by the first line segment L1 and the second line segment L2 is substantially 90 degrees. In other words, in the base posture, the first link 50 and the second link 60 are substantially orthogonal to each other. When the first link 50 and the second link 60 are in such a positional relationship, there is considerable room for the first link 50 and the second link 60 to rotate relative to each other, regardless of whether the dozer blade 300 in the base position is moved upward or downward. Therefore, the configuration of this embodiment can sufficiently secure both the upward and downward movable ranges from the base posture.

(1-5) In this embodiment, all of the three requirements of the third condition are satisfied, so that the second link 60 extends vertically, substantially along the Z direction. As described above, the load acting on the dozer blade 300 from the front includes a component in the X direction. Therefore, the configuration of this embodiment, in which the second link 60 is orthogonal to the load, can considerably inhibit the load on the dozer blade 300 from reaching the motive power generating device 30, in relation to (1-3).

### <Modification Examples of First Embodiment>

The first embodiment can be modified as described below. The first embodiment and the following modification examples can be combined with each other to such an extent that the they are technically consistent with each other.
- It is not essential that the third condition includes the first requirement. Specifically, when the base assumption is true, the first line segment L1 may be inclined to some extent with respect to the X direction in the specified plan view. For example, the first line segment L1 may be inclined about 15 degrees to the downward or upward side with respect to the X direction in the specified plan view. It is also not essential that the third condition includes the third requirement. Specifically, when the base assumption is true, the second line segment L2 may be inclined to some extent with respect to the Z direction in the specified plan view. Only one or both of the first and third requirements may be eliminated from the third condition. As a result of modifying the third condition, it is possible that when the base assumption is true, the inferior angle θ formed by the first and second line segments L1 and L2 in the specified plan view is outside the range of 75 to 105 degrees. Even in this case, the advantageous effect described in (1-3) can still be obtained as long as the third condition includes the second requirement. Furthermore, the base assumption that the lower end of the dozer blade body 310 is in contact with the ground surface G may be eliminated from the second requirement. The dozer blade 300 is basically used with the lower end of the dozer blade body 310 in contact with the ground surface G. However, even when the lower end of the dozer blade body 310 is not in contact with the ground surface G, a load can still be input to the dozer blade 300 from the front. Even when the lower end of the dozer blade body 310 is not in contact with the ground G, if the first line segment L1 and the second line segment L2 intersect with each other and the central axis 23A of the third support shaft 23 is located downward of the central axis 22A of the second support shaft 22 in the specified plan view, such arrangement is suitable for inhibiting the force acting on the dozer blade 300 from the front from reaching the motive power generating device 30.
- The third condition may be eliminated in setting the positions of the support shafts in the connection mechanism 100 and the lengths of the links and the arm 70. - The second condition is not limited to the example in the above embodiment. The second condition may be that the length of the first line segment L1 is set to a predetermined value that is 50% to 200% of the length of the second line segment L2. With such second condition, the movable range of the dozer blade 300 can be reasonably large.
- The second condition may be eliminated in setting the dimensional relationship between the links. - It is not essential that the first condition is satisfied throughout the entire movable range of the dozer blade 300. For example, depending on the upper or lower limit position of the dozer blade 300, the first condition is not necessarily satisfied within the movable range of the dozer blade 300. The first condition should be satisfied in at least part of the movable range of the dozer blade 300, for example, in the base posture.
- The configuration of the link mechanism 40 is not limited to the example in the above embodiment. The dimensions and shapes of the link components can be changed as needed from the example in the above embodiment. Furthermore, the number of link components constituting the link mechanism 40 can be changed as needed from the example in the above embodiment. The link mechanism 40 may have any configuration to transmit the torque generated by the motive power generating device 30 as a rotational motion of the dozer blade 300 around the central axis 21A of the first support shaft 21.
- The configuration of the arm 70 is not limited to the example in the above embodiment. The dimensions and shapes of the arm 70 can be modified as needed from the example in the above embodiment. The arm 70 may have any configuration to be rotatably connected to the vehicle body 520 and capable of having the dozer blade 300 mounted to the side opposite to the connection point to the vehicle body 520. The manner in which the arm 70 is mounted to the dozer blade 300 may be modified as needed. As will be described in the following modification examples, the connection point in the vehicle body 520 for connecting the arm 70 to the vehicle body 520 is not limited to the case main portion 410 or even the lower case 400.
- The configuration of the motive power generating device 30 is not limited to the example in the above embodiment. The motive power generating device 30 may have any configuration to include an electric motor 31 that serves as the drive source and to be capable of generating torque around a central axis parallel to the rotation central axis of the arm 70. For example, the positions of the motor 31 and the speed reducer 35, which are on the left and right sides, may be interchanged, as compared to the example in the above embodiment. The configuration for connecting the motive power generating device 30 and the link mechanism 40 may be modified accordingly. The transmission member 36 may be eliminated from the motive power generating device 30. In addition, the speed reducer 35 and the link mechanism 40 may be connected together so that the torque output from the speed reducer 35 is directly transmitted to the link mechanism 40.
- The structure of the vehicle body 520 for mounting the motive power generating device 30 to the vehicle body 520 is not limited to the example in the above embodiment. The vehicle body 520 may have any structure that allows the motive power generating device 30 to be mounted to the vehicle body 520.
- The manner in which the arm 70 is connected to the vehicle body 520 is not limited to the example in the above embodiment. For example, the arm 70 and the first support shaft 21 may be fixed together. In addition, the first support shaft 21 may be connected to the case main portion 410 so that the first support shaft 21 is rotatable relative to the case main portion 410. The arm 70 may be connected to the vehicle body 520 in any manner that allows rotation of the arm 70 relative to the vehicle body 520.
- As with the above modification example, the manner in which the first link 50 and the second link 60 are connected together is not limited to the example in the above embodiment. For example, the second support shaft 22 may be fixed to one of the first link 50 or the second link 60. The first link 50 and the second link 60 may be connected together in any manner that allows relative rotation thereof. The same applies to the manner in which the second link 60 is connected to the dozer blade 300.
- The arrangement of the link mechanism 40, the arm 70, and the motive power generating device 30 is not limited to the example in the above embodiment. For example, the arm 70 may be located outside the traveling unit 550 in the Y direction. In other words, the arm 70 may be located opposite the lower case 400 across the traveling unit 550. The arm 70 may be connected to the wall or other part of the operating mechanism in the traveling unit 550. For example, the arrangement of the link mechanism 40 and the motive power generating device 30 may be modified from the example in the above embodiment to match the modified arrangement of the arm 70. In accordance with the modified arrangement, the positional relationship among the link mechanism 40, the arm 70, and the motive power generating device 30 can be modified from the example in the above embodiment. This case is possible as long as the first condition is satisfied.
- The movable range of the dozer blade 300 is not limited to the example in the above embodiment. The movable range of the dozer blade 300 can vary depending on the configuration of the link mechanism 40, the arm 70, and other components. - The configuration of the dozer blade 300 is not limited to the example in the above embodiment. For example, the structure in the dozer blade 300 for mounting the link mechanism 40 may be different from the example in the above embodiment. The dozer blade 300 may have any configuration to attain the required application, for example, leveling, excavation, and raking of earth and sand.

The construction machines to which the connection mechanism 100 for the dozer blade 300 is applicable are not limited to the example in the above embodiment. For example, the connection mechanism 100 may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Second Embodiment>

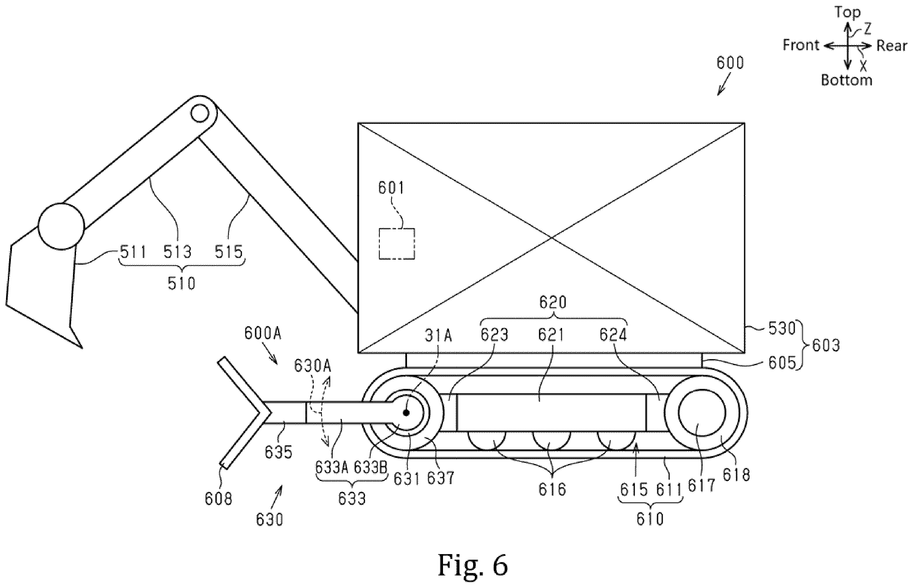

A dozer blade drive mechanism relating to the second embodiment will be described with reference to Figs. 6 to 10. The drawings may show the components in an enlarged manner for the sake of better intelligibility. The dimensions of the components and the ratios thereof may be different from those of the actual components, and among the drawings. In Figs. 6 to 10, the same reference labels as in Figs. 1 to 5 are used for the components that function the same or substantially the same as the corresponding components shown in Figs. 1 to 5. In the following, redundant description of the same features as in the first embodiment may be omitted or simplified.

As shown in Fig. 6, an excavator 600, serving as a construction machine, includes a vehicle body 603. The vehicle body 603 includes a lower body 605 and an upper body 530. The lower body 605 is configured in substantially the same manner as the case main portion 410 in the first embodiment. The upper body 530 is configured in the same manner as in the first embodiment. The upper body 530 is located opposite the ground surface across the lower body 605. In this embodiment, the up and down, left and right, and front and rear are defined in the same manner as in the first embodiment. The upper body 530 is rotatable about an axis extending substantially in the Z direction to the left and right relative to the lower body 605.

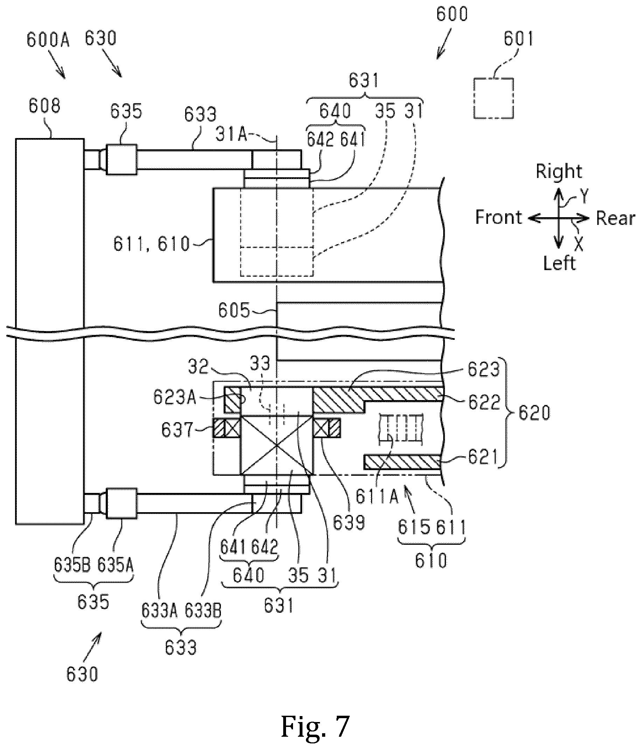

As shown in Fig. 6, the excavator 600 includes a work attachment 510. The work attachment 510 is configured in the same manner as in the first embodiment. The excavator 600 includes a dozer blade 608. The dozer blade 608 is positioned frontward of the lower body 605. The dozer blade 608 is shaped like a plate. When viewed in the Y direction, the dozer blade 608 is bent at a middle portion in the Z direction so that it is convex toward the rear. As shown in Fig. 7, the dozer blade 608 is long in the Y direction. The upper body 530 and the work attachment 510 are not shown in Fig. 7.

### <Traveling Units>

As shown in Fig. 7, the excavator 600 includes a pair of traveling units 610. The traveling units 610 are provided at the left and right sides across the lower body 605. The traveling units 610 are horizontally symmetrical. Therefore, the following description of the traveling units 610 is focused on one of the traveling units 610 located on the left side of the lower body 605.

As shown in Fig. 6, the traveling unit 610 includes an operating mechanism 615 and a traveling crawler 611. The operating mechanism 615 includes a crawler frame 620, a plurality of rollers 616, an output unit 617, and a driving sprocket 618. In the traveling unit 610, the operating mechanism 615 is included in the elements of the vehicle body 603.

As shown in Fig 7, the crawler frame 620 includes a first side wall 621 and a second side wall 622. The first side wall 621 and the second side wall 622 are arranged in the Y direction. The first side wall 621 is located opposite the lower body 605 across the second side wall 622. Both the first side wall 621 and the second side wall 622 are shaped like rectangular plates. Both the first side wall 621 and the second side wall 622 are long in the X direction. The principal surfaces of the first and second side walls 621 and 622 are opposed to each other. The principal surface is the surface with the largest area among the external surfaces of a plate-like member. The first and second side walls 621 and 622 are connected to each other via a top wall not shown.

The crawler frame 620 includes a front wall 623. The front wall 623 extends frontward from the front end of the second side wall 622. The front wall 623 has a housing hole 623A. The housing hole 623A extends through the front wall 623 in the Y direction. The housing hole 623A is contoured like a circular column.

As shown in Fig 6, the crawler frame 620 includes a rear wall 624. Although not shown in detail, the rear wall 624 extends rearward from the rear end of the second side wall 622. Although not shown in detail, the plurality of rollers 616 are located between the first and second side walls 621 and 622. There are, for example, three rollers 616. The plurality of rollers 616 are arranged in the X direction. The plurality of rollers 616 are rotatably supported by the first and second side walls 621 and 622. The rotation central axis of each roller 616 extends in the Y direction.

The output unit 617 is supported by the rear wall 624. The output unit 617 includes an electric motor and a speed reducer that decelerates the rotation of the motor and outputs the decelerated rotation. The motor can rotate in both forward and reverse directions. In other words, the output unit 617 can output torque in both forward and reverse directions.

The driving sprocket 618 is mounted onto the output unit 617. The driving sprocket 618 has an annular shape. The output unit 617 is fixed to the center hole of the driving sprocket 618. The central axis of the driving sprocket 618 extends in the Y direction. The driving sprocket 618 has a plurality of teeth on the outer peripheral surface. The teeth are arranged at equal intervals in the circumferential direction around the central axis of the driving sprocket 618. The driving sprocket 618 rotates in accordance with the torque output by the output unit 617.

As shown in Fig. 6, the traveling crawler 611 is shaped like an endless belt. The traveling crawler 611 is made of metal or rubber, for example. The traveling crawler 611 surrounds the operating mechanism 615. The traveling crawler 611 as a whole extends in the X direction and is open on both sides in the Y direction. The traveling crawler 611 has a predetermined width in the Y direction.

As shown in Fig. 7, a plurality of grooves 611A are formed in the inner peripheral surface of the traveling crawler 611. The grooves 611A are located in the middle of the traveling crawler 611 in the Y direction. The plurality of grooves 611A are arranged at equal intervals over the entire periphery of the traveling crawler 611.

As shown in Fig. 6, the driving sprocket 618 is located at the rearmost portion of the traveling crawler 611. The teeth of the driving sprocket 618 engage with the grooves 611A of the traveling crawler 611. The plurality of rollers 616 are located near the middle of the traveling crawler 611 in the X direction. The outer circumferential surfaces of the rollers 616 are in contact with the inner peripheral surface of the traveling crawler 611. A driven sprocket 637, described below, is located at the forefront of the traveling crawler 611.

### <Dozer Blade Drive Mechanism>

As shown in Fig. 7, the excavator 600 includes a dozer blade drive mechanism 600A. The dozer blade drive mechanism 600A includes two power transmission mechanisms 630. The two power transmission mechanisms 630 are provided for one and the other of the pair of traveling crawlers 611. In other words, each traveling crawler 611 is provided with a power transmission mechanism 630. The two power transmission mechanisms 630 are horizontally symmetrical. Therefore, the following description of the power transmission mechanisms 630 is focused on one of the two power transmission mechanisms 630 located on the left side of the lower body 605.

The power transmission mechanism 630 is constituted by a motive power generating device 631, a connection member 633, a universal coupling 635, a driven sprocket 637, and a bearing 639. The motive power generating device 631 includes a motor 31, a speed reducer 35, and a transmission member 640. The motor 31 is located in the front portion of the crawler frame 620. The motor 31 is the drive source of the motive power generating device 631. The motor 31 includes a housing 32 and an output shaft 33. The motor 31 operates electrically upon receiving electricity fed from a battery, which is not shown. The housing 32 is fixed to the housing hole 623A in the front wall 623. Thus, with respect to the Y direction, the housing 32 is located within the range of the traveling crawler 611. The housing 32 as a whole is shaped like a circular column. The central axis of the housing 32 extends in the Y direction. Most part of the output shaft 33 is located inside the housing 32. A part of the output shaft 33 protrudes from the housing 32 toward the opposite side to the lower body 605. The output shaft 33 is shaped like a circular column. The central axis 31A of the output shaft 33 extends in the Y direction. The output shaft 33 is rotatable relative to the housing 32. The output shaft 33 rotates about its own central axis 31A. The output shaft 33 can rotate in both forward and reverse directions in accordance with the power supplied to the motor 31. The central axis 31A of the output shaft 33 may be hereinafter referred to as the central axis 31A of the motor 31.

The speed reducer 35 is adjacent to the motor 31 in the direction along the central axis 31A of the motor 31. The speed reducer 35 is positioned on the opposite side of the motor 31 to the lower body 605. In the Y direction, the speed reducer 35 is located within the range of the traveling crawler 611. The speed reducer 35 as a whole is shaped like a circular column. The central axis of the speed reducer 35 substantially coincides with the central axis 31A of the motor 31. The speed reducer 35 is connected to the output shaft 33 of the motor 31. The speed reducer 35 receives the torque of the output shaft 33 of the motor 31. The speed reducer 35 multiplies the torque of the output shaft 33 of the motor 31 with a predetermined ratio and outputs the resulting torque. The speed reducer 35 may be of, for example, an eccentric oscillation gear type or planetary gear type. The speed reducer 35 can be of any type as long as it is capable of multiplying the torque from the motor 31 and outputting the resulting torque.

The transmission member 640 is adjacent to the speed reducer 35 in the direction along the central axis 31A of the motor 31. The transmission member 640 is positioned opposite the motor 31 with respect to the speed reducer 35. In the Y direction, the transmission member 640 is exposed from the traveling crawler 611. The transmission member 640 is connected to the speed reducer 35. The transmission member 640 as a whole is shaped like a circular column. The central axis of the transmission member 640 substantially coincides with the central axis 31A of the motor 31. The transmission member 640 will be described in details later . The transmission member 640 receives the torque output from the speed reducer 35. The transmission member 640 rotates by the torque received from the speed reducer 35. The rotation central axis of the transmission member 640 coincides with the central axis 31A of the motor 31. Thus, the transmission member 640 outputs torque around the central axis 31A of the motor 31, in accordance with the rotation of the motor 31 and thus the speed reducer 35. As described above, the motive power generating device 631 generates torque around the central axis 31A of the motor 31 using the motor 31 as the drive source. The central axis 31A of the motor 31 may be hereinafter referred to as the central axis 31A of the motive power generating device 631. Also, the central axis 31A of the motor 31 may be referred to as the rotation central axis of the motive power generating device 631. Fig. 6 shows only the outer shape of the transmission member 640 as the motive power generating device 631.

### <Connection Member>

As shown in Fig. 7, the connection member 633 is adjacent to the transmission member 640 in the direction along the central axis 31A of the motor 31. The connection member 633 is positioned opposite the speed reducer 35 with respect to the transmission member 640. The connection member 633 includes a rod-shaped main body 633A and a connecting portion 633B located at one end of the main body 633A in its longitudinal direction. The connecting portion 633B is shaped like a plate. The principal surface of the connecting portion 633B faces the end surface of the transmission member 640 opposite to the speed reducer 35. The connecting portion 633B is connected to the transmission member 640 via a mounting means. Various mounting means, such as bolting or welding, can be employed.

As shown in Fig. 6, the main body 633A of the connection member 633 extends straight from the connecting portion 633B to the forward side. In other words, the connection member 633 extends from the connection point where it connects with the motive power generating device 631, toward the opposite side to the driving sprocket 618. The dozer blade 608 can be mounted to the front end of the main body 633A of the connection member 633, i.e., the end of the connection member 633 opposite to the connection point to the motive power generating device 631. In this embodiment, the connection member 633 is mounted to the dozer blade 608 via the universal coupling 635.

As described with Fig. 7, the connecting portion 633B of the connection member 633 is connected to the transmission member 640. Therefore, the connection member 633 rotates together with the transmission member 640. Specifically, the connection member 633 can rotate around the central axis 31A of the motor 31 and thus the motive power generating device 631 by the torque received from the motive power generating device 631.

### <Universal Coupling>

As shown in Fig. 7, the universal coupling 635 is a ball joint. Thus, the universal coupling 635 includes a socket 635A and a rod 635B. The socket 635A is contoured like a circular column. The main body 633A of the connection member 633 is fixed to one end surface of the socket 635A in the direction of the central axis of the socket 635A. The end of the socket 635A opposite to the side to which the connection member 633 is fixed forms a spherical housing space.

The rod 635B as a whole is shaped like a circular column. The head of rod 635B has a spherical shape. The head of the rod 635B is received in the housing space of the socket 635A. The head of the rod 635B can rotate freely within the housing space of the socket 635A. The mutual angles of the rod 635B and the socket 635A can be changed freely. Although not shown, the end of the rod 635B opposite to the head has a flange protruding from the outer circumference of the rod 635B. The flange is mounted to the rear surface of the dozer blade 608 using a mounting means. Various mounting means, such as bolting or welding, can be employed. Thus, the universal coupling 635 is located at the mounting point of the dozer blade 608 in the connection member 633 and connects the connection member 633 and the dozer blade 608.

### <Driven Sprocket>

As shown in Fig. 6, the driven sprocket 637 is located at the forefront within the traveling crawler 611. In other words, the driven sprocket 637 is located at the end of the inside of the traveling crawler 611 opposite to the driving sprocket 618 across the center of the traveling crawler 611 in the front-rear direction. The driven sprocket 637 has an annular shape. As shown in Fig. 7, the central axis of the driven sprocket 637 substantially coincides with the central axis 31A of the motive power generating device 631. In other words, the driven sprocket 637 is arranged coaxially with the motive power generating device 631. The speed reducer 35 is inserted into a center hole of the driven sprocket 637. The driven sprocket 637 has a plurality of teeth on the outer peripheral surface. The teeth are arranged at equal intervals in the circumferential direction around the central axis of the driven sprocket 637. The teeth of the driven sprocket 637 engage with the grooves 611A of the traveling crawler 611.

The bearing 639 is located between the driven sprocket 637 and the speed reducer 35. The bearing 639 as a whole has a cylindrical shape. The bearing 639 is, for example, a roller bearing. The bearing 639 includes an inner race, an outer race, and a plurality of rolling elements. Both the inner and outer races have a cylindrical shape. The outer diameter of the inner race is smaller than the inner diameter of the outer race. The central axes of the inner and outer races substantially coincide with the central axis 31A of the motive power generating device 631. The rolling elements are shaped like, for example, a circular column or a sphere. The inner peripheral surface of the inner race is fixed to the outer peripheral surface of the speed reducer 35. The outer peripheral surface of the outer race is fixed to the inner peripheral surface of the driven sprocket 637. As a result of these, the bearing 639 supports the driven sprocket 637 so as to be rotatable relative to the speed reducer 35. Fig. 6 does not show the bearing 639.

### <Transmission Member>

A detailed description is given of the transmission member 640. As shown in Fig 7, the transmission member 640 includes a first member 641 and a second member 642. Both the first member 641 and the second member 642 as a whole are shaped like a disc. The diameter of the first member 641 and the diameter of the second member 642 are the same. The central axis of the first member 641 substantially coincides with the central axis 31A of the motive power generating device 631. The central axes of the second member 642 also substantially coincides with the central axis 31A of the motive power generating device 631. The first member 641 and the second member 642 are arranged in the direction along the central axis 31A of the motive power generating device 631. In this embodiment, the first member 641 is adjacent to the speed reducer 35. The second member 642 is positioned opposite the speed reducer 35 across the first member 641.

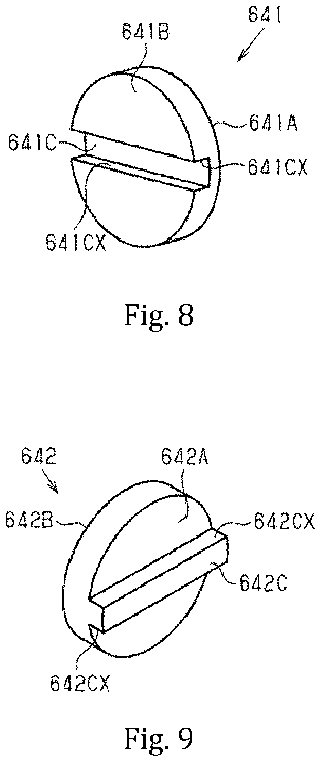

As shown in Fig. 8, the first member 641 has a first mounting surface 641A facing the speed reducer 35. The first mounting surface 641A is flat. The first mounting surface 641A is in surface contact with the end surface of the speed reducer 35. The first mounting surface 641A is fixed to the end surface of the speed reducer 35.

The surface of the first member 641 opposite to the first mounting surface 641A is the first facing surface 641B facing the second member 642. The first facing surface 641B is flat and constitutes the first flat surface. The first facing surface 641B has a recess 641C formed therein. The recess 641C is concave from the first facing surface 641B toward the speed reducer 35 in the Y direction. The recess 641C extends straight along a first axis parallel to the first facing surface 641B. The first axis extends in the longitudinal direction of the main body 633A of the connection member 633. In plan view of the first member 641 toward the Y direction, the recess 641C extends through the center of the circle of the first member 641. In plan view of the first member 641 toward the Y direction, both ends of the recess 641C reach the outer edge of the first facing surface 641B. With respect to the direction along the first axis, both ends of the recess 641C are open toward the outside of the first member 641. The recess 641C is contoured like a rectangular parallelepiped.

As shown in Fig. 9, the second member 642 has a second facing surface 642A facing the first facing surface 641B of the first member 641. The second facing surface 642B is flat and constitutes the second flat surface. A protrusion 642C protrudes from the second facing surface 642A. The protrusion 642C extends straight along the first axis mentioned above. In plan view of the second member 642 toward the Y direction, the protrusion 642C is positioned to face the recess 641C of the first member 641. In plan view of the second member 642 toward the Y direction, the protrusion 642C extends through the center of the circle of the second member 642. In plan view of the second member 642 toward the Y direction, both ends of the protrusion 642C reach the outer edge of the second facing surface 642A. The protrusion 642C is contoured like a rectangular parallelepiped.

The dimensions of the rectangular parallelepiped of the protrusion 642C are basically the same as the dimensions of the rectangular parallelepiped of the recess 641C in the first member 641. More specifically, the protruding length of the protrusion 642C from the second facing surface 642A is slightly smaller than the depth of the recess 641C from the first facing surface 641B. The dimension of the protrusion 642C in the direction perpendicular to both the first axis and the central axis of the second member 642 is slightly smaller than the dimension of the recess 641C in the direction perpendicular to both the first axis and the central axis of the first member 641. With such relationship in size between the protrusion 642C and the recess 641C, the protrusion 642C is received in the recess 641C. In addition, the second facing surface 642A is in surface contact with the first facing surface 641B.

The surface of the second member 642 opposite to the second facing surface 642A is the second mounting surface 642B facing the connecting portion 633B of the connection member 633. The second mounting surface 642B is flat. The second mounting surface 642B is in surface contact with the connecting portion 633B. The second mounting surface 642B is fixed to the connecting portion 633B.

Although not shown, the transmission member 640 includes a stopper or other structure to prevent the protrusion 642C from coming off the recess 641C. The structure for preventing the protrusion 642C from coming off the recess 641C may be, for example, an annular cover that covers the outer circumference of the first and second members 641 and 642. Elastic members such as springs may be provided between the cover and the two end surfaces of the protrusion 642C in the direction along the first axis.

### <Control>

As shown in Fig. 6, the excavator 600 includes a control device 601. The control device 601 is installed in, for example, the upper body 530. The control device 601 may include processing circuitry including one or more processors that perform various processes in accordance with computer programs (software). The control device 601 may include processing circuitry including one or more dedicated hardware circuits such as application-specific integrated circuits (ASICs) that perform at least some of the various processes, or processing circuitry including a combination of the above processors and dedicated hardware circuits. The processors include a CPU and a memory such as a RAM or ROM. The memory stores program codes or instructions configured to cause the CPU to perform processes. The memory, or a computer-readable medium, encompasses any kind of available medium accessible to a general-purpose or dedicated computer. The memory includes an electrically rewritable nonvolatile memory. The control device 601 controls the respective motors 31 of the two power transmission mechanisms 630. The control device 601 also controls the motor of the output unit 617.

### <Operation of Second Embodiment>

The control device 601 drives the motor of the output unit 617 in response to instructions from the operator. When the motor of the output unit 617 is driven, the driving sprocket 618 rotates. Along with that, the driving sprocket 618 drives the circling of the traveling crawler 611. As the traveling crawler 611 circles, the excavator 600 travels forward or backward. When the traveling crawler 611 circles, the plurality of rollers 616 guide the circling of the traveling crawler 611. When the traveling crawler 611 circles, the driven sprocket 637 is driven to follow the circling of the traveling crawler 611.

The control device 601 drives the respective motors 31 of the two power transmission mechanisms 630 in response to instructions from the operator. In driving these motors 31, the control device 601 controls the motors 31 in either synchronous mode or separate mode, depending on the instructions from the operator.

In the synchronous mode, the control device 601 controls the two motors 31 synchronously. Specifically, in the synchronous mode, the control device 601 causes the output shafts 33 of the two motors 31 to rotate in the same rotational direction at the same rotational speed. When the control device 601 causes the output shafts 33 of the two motors 31 to rotate in the synchronous mode, the left and right connection members 633 rotate in the same direction around the central axis 31A of the motive power generating devices 631. Along with that, the dozer blade 608 rotates around the central axis of the motive power generating devices 631. Such rotation control in the same direction causes the dozer blade 608 to rotate upward or downward, as indicated by the arrow 630A. Thus, the control device 601 raises and lowers the dozer blade 608.

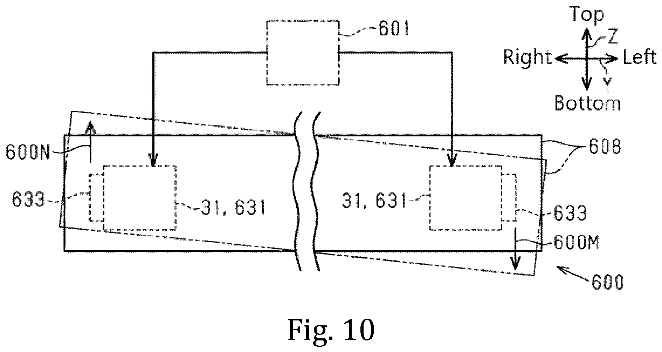

In the separate mode, the control device 601 controls the two motors 31 separately. Specifically, in the separate mode, the control device 601 stops one of the output shafts 33 of the two motors 31 while rotating the other, rotates one and the other in the same rotational direction at different rotational speeds, or rotates one and the other in opposite directions. For example, the control device 601 rotates the left-side connection member 633 downward as indicated by the arrow 600M in Fig. 10, while rotating the right-side connection member 633 upward as indicated by the arrow 600N in Fig. 10. As a result, as indicated by the dashed-two dotted line in Fig. 10, the dozer blade 608 is inclined so that the right-side edge is positioned higher than the left-side edge.

### <Advantageous Effects of Second Embodiment>

(2-1) In the excavator 600 of this embodiment, the motive power generating device 631 is located within the traveling crawler 611. Therefore, it is not necessary to provide a mounting space for the motive power generating device 631 in the upper body 530 and the lower body 605. Thus, the upper body 530 and the lower body 605 can be downsized or have a larger space for other applications.

In transmitting the torque of the motive power generating device 631 to the dozer blade 608, the motive power generating device 631 and the dozer blade 608 could be connected via a link mechanism. In addition, apart from the link mechanism, the connection member 633 could be provided to support the dozer blade 608 so as to be rotatable relative to the vehicle body 603. However, if this approach is used, not only the connection member 633 but also the link mechanism needs to be mounted on the excavator 600, resulting in an increased number of parts to be mounted on the excavator 600 due to addition of the link mechanism. By contrast, in the excavator 600 of this embodiment, the motive power generating device 631 and the connection member 633 are directly connected, allowing the torque of the motive power generating device 631 to be directly transmitted to the connection member 633. This arrangement eliminates the need of the link mechanism in the excavator 600, because the connection member 633 can perform the functions of both supporting the dozer blade 608 rotatably relative to the vehicle body 603 and transmitting the torque of the motive power generating device 631 to the dozer blade 608. Therefore, the configuration of this embodiment reduces the number of parts mounted on the excavator 600.

(2-2) The excavator 600 of this embodiment includes two power transmission mechanisms 630 and thus includes two motive power generating devices 631. Therefore, in raising and lowering the dozer blade 608, the torque output by each of the motive power generating device 631 can be smaller. This contributes to downsizing of the individual motive power generating devices 631.

(2-3) In the excavator 600 of this embodiment, the connection member 633 is connected to the dozer blade 608 via the universal coupling 635. In addition, in the excavator 600 of this embodiment, the motors 31 of the left and right power transmission mechanisms 630 can be controlled in the separate mode. By operating the left and right motors 31 separately in this separate mode, the dozer blade 608 in the excavator 600 of this embodiment can be inclined upward and downward.

(2-4) In the excavator 600 of this embodiment, the motive power generating device 631 is located within the traveling crawler 611 such that the driven sprocket 637 is wound around the speed reducer 35 of the motive power generating device 631 via the bearing 639. This allows the motive power generating device 631 to be located at the forefront within the traveling crawler 611. In addition, since the motive power generating device 631 is located at the forefront within the traveling crawler 611, the distance can be smaller between the motive power generating device 631 and the dozer blade 608 which is located forward of the traveling crawler 611. This allows the dimension of the connection member 633 in the X direction to be smaller.

(2-5) In the excavator 600 of this embodiment, the transmission member 640 is constituted by two members, the first member 641 and the second member 642. The protrusion 642C of the second member 642 is fitted into the recess 641C of the first member 641. This fitting relationship between the recess and the protrusion allows the following. As shown in Fig. 8, among the wall surfaces that define the recess 641C of the first member 641, the two surfaces extending in the direction perpendicular to both the first axis and the central axis of the first member 641 are referred to as the first side surfaces 641CX. As shown in Fig. 9, among the outer surfaces that define the protrusion 642C of the second member 642, the two surfaces extending in the direction perpendicular to both the first axis and the central axis of the second member 642 are referred to as the second side surfaces 642CX. When the motor 31 is driven in the motive power generating device 631, of the first and second members 641 and 642, the first member 641 rotates by the torque received from the speed reducer 35. When the first member 641 rotates, the first side surface 641CX of the recess 641C of the first member 641 contacts the second side surface 642CX of the protrusion 642C of the second member 642. The first side surface 641CX then transmits the torque to the second side surface 642CX. Specifically, in the transmission member 640, the torque is transmitted between the first and second members 641 and 642 by means of the fitting between the recess and the protrusion. The second member 642 then transmits the torque to the connection member 633. Thus, the transmission member 640 can reliably transmit the torque output by the speed reducer 35 to the connection member 633.

As described above, in the excavator 600 of this embodiment, the motive power generating device 631 and the connection member 633 are directly connected, allowing the torque of the motive power generating device 631 to be directly transmitted to the connection member 633. In this case, while the effect of (2-1) can be achieved, there is a conflict as follows. In the case where the motive power generating device 631 is directly connected to the connection member 633, when an external force acts on the dozer blade 608 from the front, there is a risk that a load related to this external force is input through the connection member 633 to the motive power generating device 631. The motive power generating device 631 of this embodiment has the function of releasing such a load. Specifically, the transmission member 640 in the motive power generating device 631 performs this function. This is now described. The precondition is that the above load acting on the dozer blade 608 has a component in the longitudinal direction of the connection member 633. In other words, the above load acts, in the longitudinal direction of the connection member 633, on the connection member 633 and thus on the second member 642 of the transmission member 640 connected to the connection member 633. On the other hand, the recess 641C of the first member 641 and the protrusion 642C of the second member 642 extend in the first axis and thus in the longitudinal direction of the connection member 633. Therefore, when the above load acts on the second member 642 of the transmission member 640 via the connection member 633, the protrusion 642C of the second member 642 moves slightly in the recess 641C of the first member 641 in the direction along the first axis. This movement releases the above load acting on the second member 642 from the connection member 633. In such configuration of this embodiment, the external force acting on the dozer blade 608 is inhibited from reaching the speed reducer 35 and the motor 31. This inhibits an increase in the size of the motive power generating device 631, as described in, for example, (1-3) for the first embodiment.

### <Modification Examples of Second Embodiment>

The second embodiment can be modified as described below. The first to second embodiments and the following modification examples can be combined with each other to such an extent that they are technically consistent with each other.
- It is not essential that the transmission member 640 is divided into two members, the first member 641 and the second member 642. For example, the transmission member 640 may be shaped like a circular column having the first member 641 and the second member 642 integrated together. The transmission member may have any configuration to transmit the torque from the speed reducer 35 to the connection member 633.
- It is not essential that the motive power generating device 631 includes the speed reducer 35 and the transmission member 640. The motive power generating device 631 may have any configuration as long as it includes the electric motor 31. For example, it is also possible that the motive power generating device 631 is constituted by only the motor 31, and the motor 31 is directly connected to the connection member 633.
- Of the parts constituting the motive power generating device 631, the mating part that penetrates the driven sprocket 637 is not limited to the speed reducer 35. Any one or more of the parts constituting the motive power generating device 631 penetrate the driven sprocket 637.

The driven sprocket 637 may be replaced with a roller as the driven component for the traveling crawler 611, which is located on the periphery of the motive power generating device 631. In other words, a driven component may be used that does not have teeth formed on its peripheral surface.
- It is not essential to provide, on the periphery of the motive power generating device 631, a driven component that is driven by the traveling crawler 611. Regardless of whether the driven component is present, the traveling unit 610 and other devices may be configured as appropriate to allow smooth circling of the traveling crawler 611.
- The position of the motive power generating device 631 within the traveling crawler 611 is not limited to the example in the above embodiment. For example, within the traveling crawler 611, the output unit 617 and the driving sprocket 618 may be located at the forefront within the traveling crawler 611, and the motive power generating device 631 and the driven sprocket 637 may be located at the rearmost position within the traveling crawler 611. In such arrangement, for example, if the dozer blade 608 is located rearward of the traveling crawler 611, the distance in the X direction from the motive power generating device 631 to the dozer blade 608 is small, as in the above embodiment. Thus, the connection member 633 that connects the motive power generating device 631 to the dozer blade 608 can be shortened.
- The universal coupling 635 is not limited to the example in the above embodiment. The universal coupling 635 may have any configuration to freely change the connection angle between the connection member 633 and the dozer blade 608. - The universal coupling 635 is not an essential component. In other words, the connection member 633 may be directly connected to the dozer blade 608.

When the universal coupling 635 is eliminated, the separate mode of the control device 601 may be eliminated. Thus, it is not essential that the control device 601 can operate in the separate mode. - One of the left and right motive power generating devices 631 may be eliminated. When one of the left and right motive power generating devices 631 is eliminated, the connection member 633 on the side without the motive power generating device 631 can be rotatably connected, at the side opposite to the connection point to the dozer blade 608, to the front wall 623 of the crawler frame 620 using a shaft-shaped member, such as the first support shaft 21 in the first embodiment. In this case, the connection member 633 on the side without the motive power generating device 631 rotates up and down around the shaft-shaped member, following the raising and lowering of the dozer blade 608. Eliminating one of the left and right motive power generating devices 631 is equivalent to eliminating one of the left and right power transmission mechanisms 630. Thus, it is not essential to provide a power transmission mechanism 630 for both of the two traveling crawlers 611.
- The configuration of the connection member 633 is not limited to the example in the above embodiment. For example, the connection member 633 may be shaped like a rectangular plate. The connection member 633 may have any configuration to be connected to the motive power generating device 631 and to have the dozer blade 608 mounted to the side opposite to the connection point to the motive power generating device 631.
- The configuration of the crawler frame 620 is not limited to the example in the above embodiment. The crawler frame 620 may have any configuration to support the output unit 617, the rollers 616, and the motive power generating device 631.

It is not essential that the crawler frame 620 supports the motive power generating device 631. For example, the lower body 605 may support the motive power generating device 631. Any configuration to support the motive power generating device 631 is possible as long as the motive power generating device 631 can be located within the traveling crawler 611.
- The configuration of the dozer blade 608 is not limited to the example in the above embodiment. The dozer blade 608 may have any configuration to attain the required application, for example, leveling, excavation, and raking of earth and sand.
- The construction machines to which the dozer blade drive mechanism 600A is applicable are not limited to the example in the above embodiment. For example, the dozer blade drive mechanism 600A may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Third Embodiment>

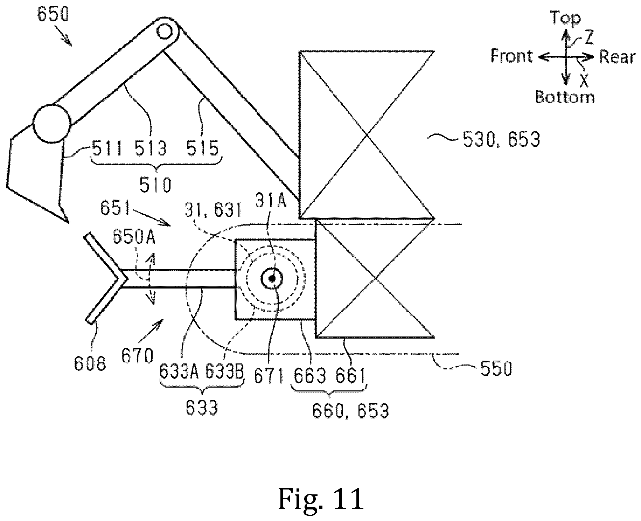

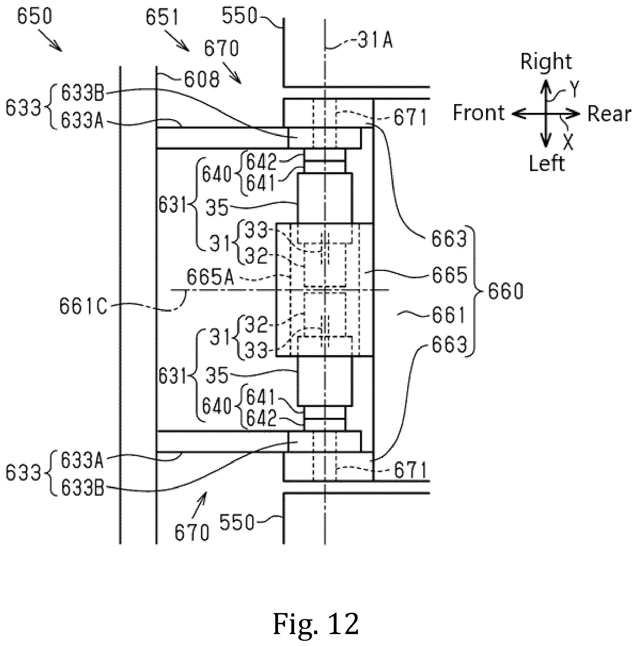

A dozer blade drive mechanism relating to the third embodiment will be described with reference to Figs. 11 and 12. The drawings may show the components in an enlarged manner for the sake of better intelligibility. The dimensions of the components and the ratios thereof may be different from those of the actual components, and among the drawings. In Figs. 11 and 12, the same reference labels as in Figs. 1 to 10 are used for the components that function the same or substantially the same as the corresponding components shown in Figs. 1 to 10. In the following, redundant description of the same features as in the first or second embodiment may be omitted or simplified.

As shown in Fig. 11, an excavator 650, serving as a construction machine, includes a vehicle body 653. The vehicle body 653 includes a lower body 660 and an upper body 530. The upper body 530 is configured in the same manner as in the first embodiment. The configuration of the lower body 660 will be described later. The upper body 530 is located opposite the ground surface across the lower body 660. In this embodiment, the up and down, left and right, and front and rear are defined in the same manner as in the first embodiment. The upper body 530 is rotatable about an axis extending substantially in the Z direction to the left and right relative to the lower body 660.

As shown in Fig. 11, the excavator 650 includes a work attachment 510 and a dozer blade 608. The work attachment 510 is configured in the same manner as in the first embodiment. The dozer blade 608 is configured in the same manner as in the second embodiment. As shown in Figs. 11 and 12, the excavator 650 includes a pair of traveling units 550. The traveling units 550 are configured in the same manner as in the first embodiment. Specifically, the pair of traveling units 550 each include an endless belt-like crawler and an operating mechanism that circles the crawler. The operating mechanism is included in the vehicle body 653 of the excavator 650. The upper body 530 and the work attachment 510 are not shown in Fig. 12.

### <Dozer Blade Drive Mechanism>

The excavator 650 includes a dozer blade drive mechanism 651. In this embodiment, the lower body 660 is included in the elements of the dozer blade drive mechanism 651. As shown in Fig. 12, the lower body 660 includes a main portion 661, a support wall 665, and a pair of extension walls 663. The main portion 661 is contoured like a rectangular parallelepiped, for example. The main portion 661 houses various mechanisms necessary to operate the excavator 650. The main portion 661 is not limited to a box-like shape, but can have any shape capable of having necessary components mounted thereto.

The support wall 665 protrudes frontward from the front surface of the main portion 661. The support wall 665 is fixed to the main portion 661. The middle of the main portion 661 in the Y direction is referred to as the main portion middle 661C. The main portion middle 661C is also the middle between the left and right traveling units 550 and thus between the crawlers in the Y direction. In the Y direction, the support wall 665 extends across the main portion middle 661C. In other words, in the left-right direction of the excavator 500, the support wall 665 extends to include the main portion middle 661C. The support wall 665 is contoured like a rectangular parallelepiped. One side of the rectangular parallelepiped of the support wall 665 extends along the Y direction. The middle of the support wall 665 in the Y direction is located at the main portion middle 661C. The support wall 665 has a housing hole 665A. The housing hole 665A penetrates the support wall 665 in the Y direction. The support wall 665 constitutes a wall for mounting the motive power generating device 631 described later.

The pair of extension walls 663 are located on the left and right sides across the main portion middle 661C. The pair of extension walls 663 protrude frontward from the front surface of the main portion 661. The pair of extension walls 663 are fixed to the main portion 661. One of the pair of extension walls 663 is located at the left end of the main portion 661. The other of the pair of extension walls 663 is located at the right end of the main portion 661. The extension walls 663 are shaped like a plate. The principal surfaces of the extension walls 663 face in the Y direction. As already described, the principal surface is the surface with the largest area among the external surfaces of a plate-like member. Although not shown, the extension walls 663 have a support hole. The support holes penetrate the extension walls 663 in the Y direction.

As shown in Fig. 12, the dozer blade drive mechanism 651 includes two power transmission mechanisms 670. The two power transmission mechanisms 670 are provided for the left and right sides across the main portion middle 661C. The two power transmission mechanisms 670 are horizontally symmetrical. Therefore, the following description of the power transmission mechanisms 670 is focused on one of the two power transmission mechanisms 670 located on the left side of the main portion middle 661C.

The power transmission mechanisms 670 is constituted by a motive power generating device 631 and a connection member 633. The motive power generating device 631 includes a motor 31, a speed reducer 35, and a transmission member 640.

The motor 31 is located in the housing hole 665A of the support wall 665. Specifically, the motor 31 is located on the left side of the main portion middle 661C in the housing hole 665A. The motor 31 is the drive source of the motive power generating device 631. The motor 31 includes a housing 32 and an output shaft 33. The motor 31 operates electrically upon receiving electricity fed from a battery, which is not shown. The housing 32 is fixed to the inner surface of the housing hole 665A. Most part of the output shaft 33 is located inside the housing 32. A part of the output shaft 33 protrudes from the housing 32 toward the opposite side to the main portion middle 661C. The output shaft 33 is shaped like a circular column. The central axis 31A of the output shaft 33 extends in the Y direction. The output shaft 33 is rotatable relative to the housing 32. The output shaft 33 rotates about its own central axis 31A. The output shaft 33 can rotate in both forward and reverse directions in accordance with the power supplied to the motor 31. The central axis 31A of the output shaft 33 may be hereinafter referred to as the central axis 31A of the motor 31.

The speed reducer 35 is adjacent to the motor 31 in the direction along the central axis 31A of the motor 31. The speed reducer 35 is located opposite the main portion middle 661C across the motor 31. A part of the speed reducer 35 is located in the housing hole 665A of the support wall 665. The remaining part of the speed reducer 35 is exposed to the outside of the support wall 665. The speed reducer 35 is fixed to the inner surface of the housing hole 665A at the portion located inside the housing hole 665A. The speed reducer 35 as a whole is shaped like a circular column. The central axis of the speed reducer 35 substantially coincides with the central axis 31A of the motor 31. The speed reducer 35 is connected to the output shaft 33 of the motor 31. The speed reducer 35 receives the torque of the output shaft 33 of the motor 31. The speed reducer 35 multiplies the torque of the output shaft 33 of the motor 31 with a predetermined ratio and outputs the resulting torque. The speed reducer 35 may be of, for example, an eccentric oscillation gear type or planetary gear type. The speed reducer 35 can be of any type as long as it is capable of multiplying the torque from the motor 31 and outputting the resulting torque.

The transmission member 640 is adjacent to the speed reducer 35 in the direction along the central axis 31A of the motor 31. The transmission member 640 is positioned opposite the motor 31 with respect to the speed reducer 35. The transmission member 640 is connected to the speed reducer 35. The transmission member 640 is configured in the same manner as in the second embodiment. Specifically, the transmission member 640 includes a first member 641 and a second member 642. The transmission member 640 receives the torque output from the speed reducer 35. The transmission member 640 rotates by the torque received from the speed reducer 35. The rotation central axis of the transmission member 640 coincides with the central axis 31A of the motor 31. Thus, the transmission member 640 outputs torque around the central axis 31A of the motor 31. As described above, the motive power generating device 631 generates torque around the central axis 31A of the motor 31 using the motor 31 as the drive source. The central axis 31A of the motor 31 may be hereinafter referred to as the central axis 31A of the motive power generating device 631.

The connection member 633 is adjacent to the transmission member 640 in the direction along the central axis 31A of the motor 31. Specifically, the connection member 633 is positioned opposite the speed reducer 35 across the transmission member 640. The connection member 633 is configured in the same manner as in the second embodiment. Specifically, as shown in Fig. 11, the connection member 633 includes a rod-shaped main body 633A and a connecting portion 633B located at one end of the main body 633A in its longitudinal direction. As shown in Fig. 12, the connecting portion 633B is located between the transmission member 640 and the extension wall 663. The connecting portion 633B is fixed to the second member 642 of the transmission member 640 via a mounting means. Various mounting means, such as bolting or welding, can be employed. The connecting portion 633B is penetrated by a support shaft 671. The support shaft 671 protrudes from the support hole in the extension wall 663. The support shaft 671 is fixed to the inner surface of the support hole. The support shaft 671 is shaped like a circular column. The central axis of the support shaft 671 extends in the Y direction. The central axis of the support shaft 671 substantially coincides with the central axis 31A of the motor 31. The support shaft 671 and the connecting portion 633B are not fixed to each other and can rotate relative to each other.

The main body 633A of the connection member 633 extends straight from the connecting portion 633B to the forward side. The dozer blade 608 can be mounted by a mounting means to the front end of the connection member 633, i.e., the end of the connection member 633 opposite to the connection point to the motive power generating device 631. Various mounting means, such as bolting or welding, can be employed. In this embodiment, the rear surface of the dozer blade 608 is mounted to the front end of the main body 633A of the connection member 633. Although not shown, as in the second embodiment, the longitudinal direction of the main body 633A substantially coincides with the direction of extension of the recess 641C and the protrusion 642C in the transmission member 640.

### <Operation of Third Embodiment>

As described above, the connecting portion 633B of the connection member 633 is connected to the transmission member 640. Therefore, when the transmission member 640 rotates as the output shaft 33 of the motor 31 rotates, the connection member 633 rotates together with the transmission member 640. Specifically, as indicated by the arrow 650A in Fig. 11, the connection member 633 rotates upward or downward around the central axis 31A of the motor 31 by the torque received from the motive power generating device 631. Along with that, the dozer blade 608 rotates upward or downward around the central axis 31A of the motor 31. In other words, the dozer blade 608 is raised or lowered.

### <Advantageous Effects of Third Embodiment>

(3-1) As described in (2-1), a link mechanism could be mounted on the excavator 650 in addition to the connection member 633 to transmit the torque of the motive power generating device 631 to the dozer blade 608. However, this would increase the number of parts mounted on the excavator 650. By contrast, in the excavator 650 of this embodiment, the motive power generating device 631 and the connection member 633 are directly connected, allowing the torque of the motive power generating device 631 to be directly transmitted to the connection member 633. This arrangement eliminates the need of the link mechanism, because the connection member 633 can perform the functions of both supporting the dozer blade 608 rotatably relative to the vehicle body 653 and transmitting the torque of the motive power generating device 631 to the dozer blade 608. Such configuration of this embodiment reduces the number of parts mounted on the excavator 650.

In addition, the motive power generating device 631 in this embodiment includes the transmission member 640 constituted by the first member 641 and the second member 642. Accordingly, as described in (2-5) for the second embodiment, the external force acting on the dozer blade 608 is inhibited from reaching the speed reducer 35 and the motor 31.

(3-2) In the excavator 650 of this embodiment, the support wall 665 for supporting the motive power generating device 631 extends across the main portion middle 661C. In the case where the support wall 665 is located at such a position, the weight of the motive power generating device 631 is received substantially at the middle of the main portion 661 of the lower body 660 in the Y direction, unlike, for example, the case where the support wall 665 is located at a position offset to either left or right side from the main portion middle 661C. Therefore, the weight acting on the pair of traveling units 550 from the main portion 661 can be inhibited from being unevenly distributed to the left and right sides of the excavator 650. This stabilizes the balance of the excavator 650 during traveling, for example.

(3-3) The excavator 650 of this embodiment includes two power transmission mechanisms 670 and thus includes two motive power generating devices 631. Therefore, in raising and lowering the dozer blade 608, the torque output by each of the motive power generating device 631 can be smaller. This contributes to downsizing of the individual motive power generating devices 631.

### <Modification Examples of Third Embodiment>

The third embodiment can be modified as described below. The first to third embodiments and the following modification examples can be combined with each other to such an extent that they are technically consistent with each other.
- The shape of the support wall 665 is not limited to the example in the above embodiment. The support wall 665 may have any configuration to support the motive power generating device 631. - The configuration of the support wall 665 for supporting the motive power generating device 631 is not limited to the example in the above embodiment. For example, the support wall 665 may be provided with a structure having a recess and a protrusion for supporting the motive power generating device 631, or the motive power generating device 631 may be fixed to the outer surface of the support wall 665 with a bolt or the like.
- The position of the support wall 665 is not limited to the example in the above embodiment. The support wall 665 may be offset from the main portion middle 661C to either left or right side. Furthermore, the support wall 665 does not necessarily extend across the main portion middle 661C.
- The motive power generating device 631 is not necessarily mounted to an area included in the support wall 665. In other words, the support wall 665 is not an essential component. The motive power generating device 631 may be mounted to any area of the lower body 660. Furthermore, the motive power generating device 631 may be mounted to any area of the vehicle body 653 of the excavator 650.
- The shape of the extension walls 663 is not limited to the example in the above embodiment. The extension walls 663 may have any configuration to support the support shafts 671. - The extension walls 663 may be eliminated.
- One of the left and right motive power generating devices 631 may be eliminated. When one of the left and right motive power generating devices 631 is eliminated, the connection member 633 on the side without the motive power generating device 631 can be rotatably supported, for example, at the side opposite to the connection point to the dozer blade 608, by the support shaft 671. Eliminating one of the left and right motive power generating devices 631 is equivalent to eliminating one of the left and right power transmission mechanisms 670.
- The configuration of the connection member 633 is not limited to the example in the above embodiment. The connection member 633 may have any configuration to be connected to the motive power generating device 631 and to have the dozer blade 608 mounted to the side opposite to the connection point to the motive power generating device 631.
- It is not essential that the transmission member 640 is divided into two members, the first member 641 and the second member 642. For example, the transmission member 640 may be shaped like a circular column having the first member 641 and the second member 642 integrated together. The transmission member may have any configuration to transmit the torque from the speed reducer 35 to the connection member 633.
- It is not essential that the motive power generating device 631 includes the speed reducer 35 and the transmission member 640. For example, it is also possible that the motive power generating device 631 is constituted by only the motor 31, and the motor 31 is directly connected to the connection member 633. The motive power generating device 631 may have any configuration as long as it includes the electric motor 31.
- The configuration of the dozer blade 608 is not limited to the example in the above embodiment. The dozer blade 608 may have any configuration to attain the required application, for example, leveling, excavation, and raking of earth and sand.
- The construction machines to which the dozer blade drive mechanism 651 is applicable are not limited to the example in the above embodiment. For example, the dozer blade drive mechanism 651 may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Fourth Embodiment>

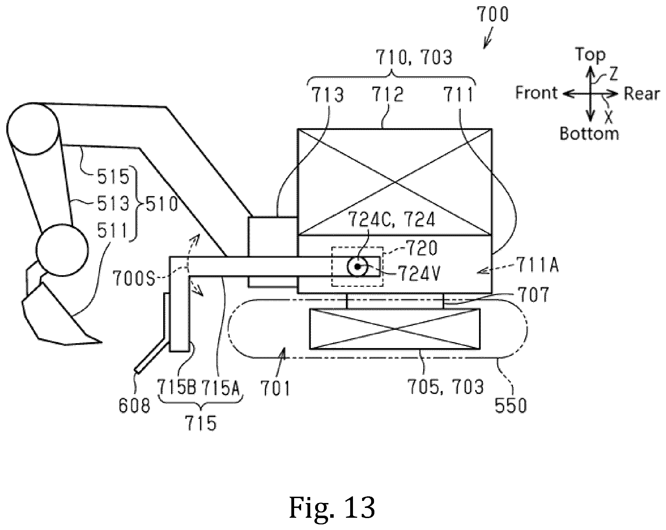

A dozer blade drive mechanism relating to the fourth embodiment will be described with reference to Figs. 13 to 17. The drawings may show the components in an enlarged manner for the sake of better intelligibility. The dimensions of the components and the ratios thereof may be different from those of the actual components, and among the drawings. In Figs. 13 to 17, the same reference labels as in Figs. 1 to 12 are used for the components that function the same or substantially the same as the corresponding components shown in Figs. 1 to 12. In the following, redundant description of the same features as in the first to third embodiments may be omitted or simplified.

As shown in Fig. 13, an excavator 700, serving as a construction machine, includes a vehicle body 703. The vehicle body 703 includes a lower body 705 and an upper body 710. The lower body 705 is configured in substantially the same manner as the case main portion 410 in the first embodiment. The configuration of the upper body 710 will be described later. The upper body 710 is located opposite the ground surface across the lower body 705. In this embodiment, the up and down, left and right, and front and rear are defined in the same manner as in the first embodiment.

The excavator 700 includes a slewing mechanism 707. The slewing mechanism 707 connects the upper body 710 to the lower body 705 in a rotatable manner. Although not shown, the slewing mechanism 707 includes an annular inner race, an annular outer race, a plurality of rolling elements, and a slewing drive unit. The outer diameter of the inner race is less than the inner diameter of the outer race. The central axis of the inner race substantially coincides with the central axis of the outer race. The central axes of the inner and outer races both extend substantially in the Z direction. The rolling elements are, for example, spheres. The rolling elements are interposed between the inner race and the outer race. The rolling elements support the inner and outer races such that they can rotate relative to each other. The outer race is thus rotatable about the its own central axis relative to the inner race. The inner race is fixed to the lower body 705. The outer race is fixed to the upper body 710. Thus, the upper body 710 is rotatable about an axis extending substantially in the Z direction relative to the lower body 705. The slewing drive unit includes a motor, and a speed reducer for decelerating the rotation of the motor and outputting the resulting rotation. The motor can rotate in both forward and reverse directions. As the motor can rotate in both forward and reverse directions, the slewing drive unit can output torque in both forward and reverse directions. The torque output from the slewing drive unit drives the rotation of the outer race relative to the inner race. Accordingly, the upper body 710 rotates to the left and right relative to the lower body 705.

A detailed description is given of the upper body 710. As shown in Fig. 13, the upper body 710 has a casing 711, an operator compartment 712 and an extension portion 713. The casing 711 is contoured like a rectangular parallelepiped. The casing 711 is hollow. The interior of the casing 711 is hereafter referred to as the casing chamber 711A. The bottom surface of the casing 711 faces the lower body 705. The bottom surface of the casing 711 is fixed to the outer race of the slewing mechanism 707.

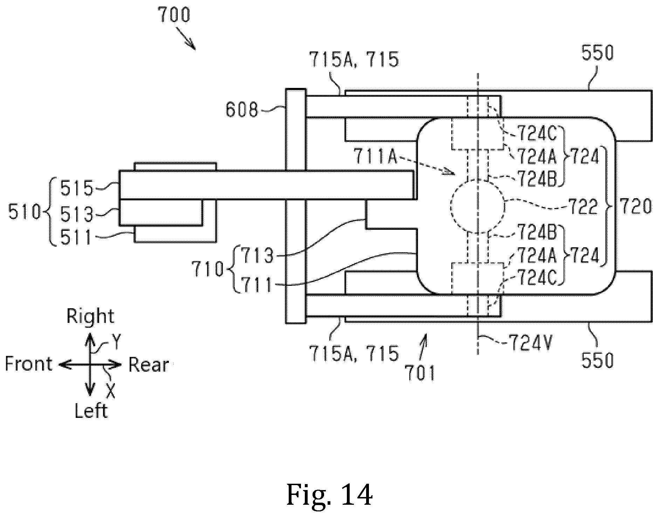

The operator compartment 712 is positioned higher than the casing 711. The operator compartment 712 includes a passenger seat for the operator, and the like. The extension portion 713 protrudes frontward from the front surface of the casing 711. The extension portion 713 is fixed to the casing 711. As shown in Fig. 14, the extension portion 713 is located substantially at the middle of the casing 711 in the Y direction. Figs. 14, 16, and 17 do not show the operator compartment 712.

As shown in Figs. 13 and 14, the excavator 700 includes a pair of traveling units 550 and a dozer blade 608. The traveling units 550 are configured in the same manner as in the first embodiment. The dozer blade 608 is configured in the same manner as in the second embodiment.

As shown in Figs. 13 and 14, the excavator 700 includes a work attachment 510. The work attachment 510 is configured in the same manner as in the first embodiment. Specifically, the work attachment 510 includes a boom 515 shaped like a column, a work arm 513 shaped like a column, and a bucket 511 shaped like a box. The boom 515 is connected to the extension portion 713 of the upper body 710. The bucket 511 is capable of excavating earth, sand, and other materials.

### <Dozer Blade Drive Mechanism>

The excavator 700 includes a dozer blade drive mechanism 701. As shown in Figs. 13 and 14, the dozer blade drive mechanism 701 includes a motive power generating device 720 and a pair of connection members 715.

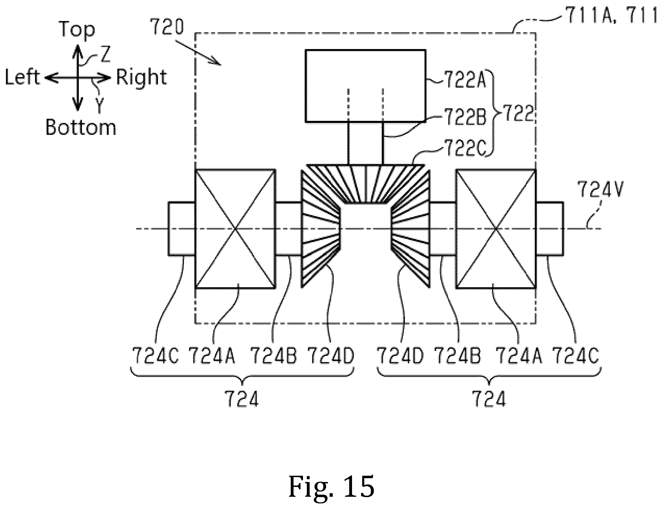

As shown in Fig. 15, most part of the motive power generating device 720 is located in the casing chamber 711A. The motive power generating device 720 includes a motor 722 and a pair of speed reducers 724. As shown in Fig. 14, the motor 722 is positioned on the frontward portion of the casing chamber 711A. The motor 722 is also positioned substantially at the middle of the casing chamber 711A in the Y direction. The motor 722 is the drive source of the motive power generating device 720. The motor 722 operates electrically upon receiving electricity fed from a battery, which is not shown. As shown in Fig. 15, the motor 722 includes a housing 722A, an output shaft 722B, and a bevel gear 722C. The housing 722A is fixed to the wall surface of the casing chamber 711A. The output shaft 722B is shaped like a circular column. The central axis of the output shaft 722B extends substantially in the Z direction. A part of the output shaft 722B protrudes downward beyond the housing 722A. The output shaft 722B is rotatable relative to the housing 722A. The output shaft 722B rotates about its own central axis. The output shaft 722B can rotate in both forward and reverse directions in accordance with the power supplied to the motor 722. The bevel gear 722C is mounted to the end portion of the output shaft 722B that protrudes from the housing 722A. The bevel gear 722C is shaped like a truncated cone. The central axis of the bevel gear 722C substantially coincides with the central axis of the output shaft 722B. The diameter of the bevel gear 722C is smaller downward. The bevel gear 722C has a plurality of teeth on the outer peripheral surface.

The pair of speed reducers 724 are provided at the left and right sides across the motor 722. The pair of speed reducers 724 are positioned lower than the motor 722. The pair of speed reducers 724 are horizontally symmetrical. Therefore, the following description of the speed reducers 724 is focused on one of the speed reducers 724 located on the left side of the motor 722.

The speed reducer 724 includes a bevel gear 724D, an input shaft 724B, a main body 724A, and an output shaft 724C. The input shaft 724B is shaped like a circular column. The central axis 724V of the input shaft 724B extends in the Y direction. The bevel gear 724D is mounted to the input shaft 724B. The bevel gear 724D is shaped like a truncated cone. The central axis 724V of the bevel gear 724D substantially coincides with the central axis 724V of the input shaft 724B. In this embodiment, axes that substantially coincide with the central axis of the input shaft 724B are denoted by the unified sign 724V. The diameter of the bevel gear 724D is larger toward the direction away from the motor 722 in the Y direction. The bevel gear 724D has a plurality of teeth on the outer peripheral surface. The teeth of the bevel gear 724D are engaged with the teeth of the bevel gear 722C of the motor 722. In Fig. 15, the bevel gear 724D is drawn away from the bevel gear 722C of the motor 722 for convenience.

The main body 724A is connected to the input shaft 724B. The main body 724A receives the torque of the motor 722 input via the input shaft 724B. The main body 724A multiplies the torque of the motor 722 with a predetermined ratio and outputs the resulting torque to its own output shaft 724C. The main body 724A may be of, for example, an eccentric oscillation gear type or planetary gear type. The main body 724A can be of any type as long as it is capable of multiplying and outputting the torque from the motor 722.

The output shaft 724C is shaped like a circular column. The central axis 724V of the output shaft 724C substantially coincides with the central axis 724V of the input shaft 724B. A part of the output shaft 724C protrudes to the outside of the casing chamber 711A.

The motive power generating device 720 is configured as described above. In this motive power generating device 720, when the output shaft 722B of the motor 722 is rotated, the torque of the motor 722 is input to the speed reducer 724 through the engagement between the bevel gear 722C of the motor 722 and the bevel gear 724D of the speed reducer 724. The speed reducer 724 generates a torque around the central axis 724V of the output shaft 724C of the speed reducer 724 in accordance with the rotation of the output shaft 722B of the motor 722. In this embodiment, the central axis 724V of the output shaft 724C of the speed reducer 724 is the rotation central axis of the motive power generating device 720. As described above, the motive power generating device 720 is housed in the casing chamber 711A of the casing 711. Thus, the motive power generating device 720 is mounted to the upper body 710.

As shown in Fig. 14, the pair of connection members 715 are located on the left and right sides of the upper body 710. The pair of connection members 715 are horizontally symmetrical. Therefore, the following description of the connection members 715 is focused on one of the connection members 715 located on the left side.

As shown in Fig. 13, the connection member 715 is L-shaped when viewed in plan from the Y direction. Specifically, the connection member 715 includes a first portion 715A corresponding to the vertical side of the L-shape, and a second portion 715B corresponding to the horizontal side of the L-shape. The first portion 715A is long in the front-rear direction. The second portion 715B extends downward from the front end of the first portion 715A. The second portion 715B is substantially orthogonal to the first portion 715A. The dimension of the second portion 715B is, for example, about half the dimension of the first portion 715A.

As shown in Fig. 14, the rear end of the first portion 715A is penetrated by the output shaft 724C of the speed reducer 724. The rear end of the first portion 715A and the output shaft 724C of the speed reducer 724 are fixed to each other. Thus, the first portion 715A is connected to the motive power generating device 720. The first portion 715A receives torque from the speed reducer 724 and rotates integrally with the output shaft 724C of the speed reducer 724.

As shown in Fig. 13, the dozer blade 608 can be mounted, by a mounting means, to the end of the second portion 715B opposite to the end connected to the first portion 715A. Thus, the dozer blade 608 can be mounted to the end of the connection member 715 opposite to the connection point to the motive power generating device 720. Various mounting means, such as bolting or welding, can be employed. In this embodiment, the upper portion of the rear surface of the dozer blade 608 is mounted to the second portion 715B.

As described above, the first portion 715A of the connection member 715 is connected to the output shaft 724C of the speed reducer 724.. Therefore, the central axis 724V of the output shaft 724C of the speed reducer 724 can be deemed as the connection point to the motive power generating device 720 in the connection member 715. Because of the positional relationship between the connection member 715 and the dozer blade 608 described above, the dozer blade 608 is located forward of the central axis 724V of the output shaft 724C of the speed reducer 724. On the other hand, the bucket 511 located at the distal end of the work attachment 510 is also located forward of the central axis 724V of the output shaft 724C of the speed reducer 724. Thus, the dozer blade 608 and the bucket 511 are located on the same side when viewed from the central axis 724V of the output shaft 724C of the speed reducer 724. Such a positional relationship between the dozer blade 608 and the bucket 511 is referred to as the first relationship. When the excavator 700 is viewed in the Y direction, i.e., viewed in the direction parallel to the central axis 724V of the output shaft 724C of the speed reducer 724, the direction in which the dozer blade 608 is located as viewed from the central axis 724V of the output shaft 724C of the speed reducer 724 is referred to as the first direction. Since the first relationship is satisfied, the bucket 511 is also located on the first direction side as viewed from the central axis 724V of the output shaft 724C of the speed reducer 724.

### <Operation of Fourth Embodiment>

As described above, the first portion 715A of the connection member 715 is connected to the output shaft 724C of the speed reducer 724.. Therefore, when the output shaft 724C of the speed reducer 724 rotates as the output shaft 722B of the motor 722 rotates, the connection member 715 rotates together with the output shaft 724C. Specifically, as indicated by the arrow 700S in Fig. 13, the connection member 715 rotates upward or downward around the central axis 724V of the output shaft 724C of the speed reducer 724 by the torque received from the motive power generating device 720. Along with that, the dozer blade 608 rotates upward or downward around the output shaft 724C of the speed reducer 724. In other words, the dozer blade 608 is raised or lowered.

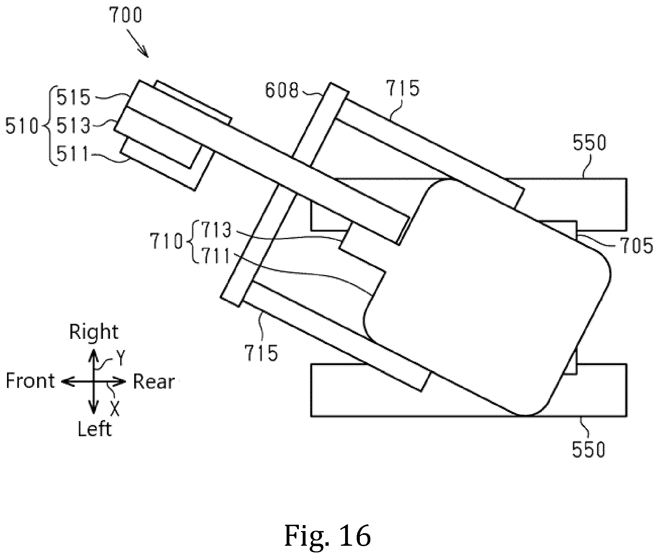

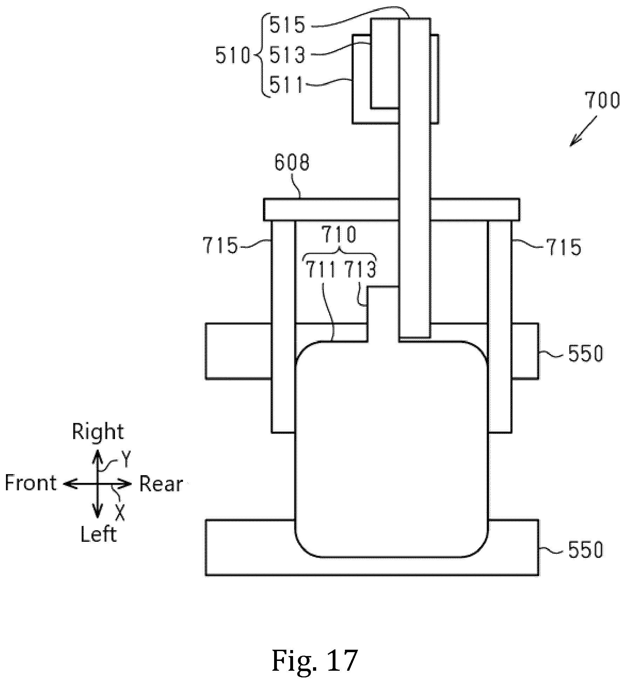

In addition to the raising and lowering operation as described above, the dozer blade 608 of this embodiment can slew to the left and right together with the upper body 710. In other words, in this embodiment, the connection member 715 and thus the dozer blade 608 are mounted to the upper body 710. Thus, as shown in Fig. 16, for example, when the upper body 710 slews about 30 degrees to the right relative to the lower body 705, the dozer blade 608 slews about 30 degrees to the right together with the upper body 710. Further, as shown in Fig. 17, for example, when the upper body 710 slews about 90 degrees to the right relative to the lower body 705, the dozer blade 608 slews about 90 degrees to the right together with the upper body 710. These examples are for the case where the upper body 710 slews to the right relative to the lower body 705, but the dozer blade 608 also slews together with the upper body 710 when the upper body 710 slews to the left relative to the lower body 705.

### <Advantageous Effects of Fourth Embodiment>

(4-1) In the excavator 700 of this embodiment, the motive power generating device 720, the connection member 715, and the dozer blade 608 are mounted to the upper body 710. Therefore, as described above in the operation of the embodiment, when the upper body 710 is slewed, the dozer blade 608 slews together with the upper body 710. This allows, for example, the following. Suppose that the dozer blade 608 is slewed about 30 degrees to the right relative to the X direction, as shown in Fig. 16. When the excavator 700 in this state travels forward, the operator can use the dozer blade 608 at an angle to the direction of traveling of the excavator 700. Such use is not limited to excavation of earth and sand, but is effective for shoveling snow, for example.

(4-2) Suppose that the dozer blade 608 is mounted to the lower body 705. In this case, when the upper body 710 is slewed, the work attachment 510 and the dozer blade 608 could be located on opposite sides in the front-rear direction. If excavation is performed with the bucket 511 while the dozer blade 608 holds on the ground in this state, the long distance from the dozer blade 608 to the bucket 511 may cause the excavator 700 to tip forward or otherwise lose stability in the support condition of the excavator 700. By contrast, in the excavator 700 of this embodiment, when the upper body 710 is slewed, the bucket 511 and the dozer blade 608 are always located on the same side as the upper body 710. Therefore, when the dozer blade 608 holds on the ground, the distance between the dozer blade 608 and the bucket 511 is small. Therefore, the support condition of the excavator 700 is stabilized when excavation is performed while the dozer blade 608 holds on the ground.

(4-3) In the excavator 700 of this embodiment, the connection member 715 is directly connected to the speed reducer 724. Therefore, when an external force acts on the dozer blade 608 from the front, a load related to this external force may be input through the connection member 715 to the speed reducer 724. In the motive power generating device 720 of this embodiment, the central axis of the output shaft 722B of the motor 722 is orthogonal to the central axis 724V of the output shaft 724C of the speed reducer 724. This inhibits the above load acting on the speed reducer 724 from reaching the motor 722.

### <Modification Examples of Fourth Embodiment>

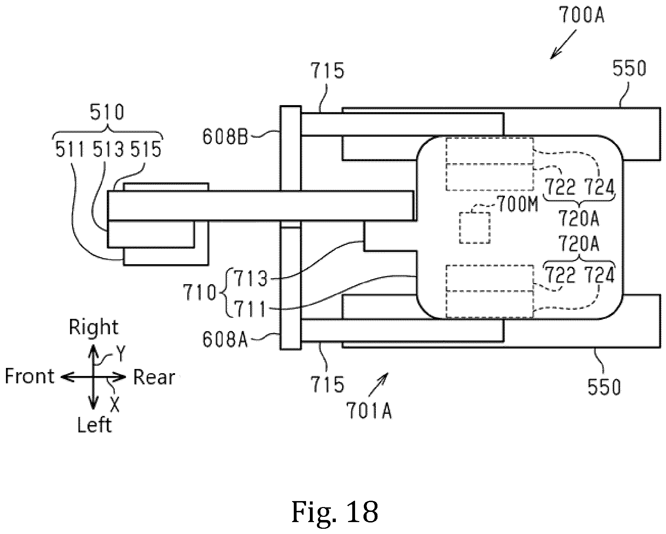

The fourth embodiment can be modified as described below. The first to fourth embodiments and the following modification examples can be combined with each other to such an extent that they are technically consistent with each other.
- The connection member 715 and the speed reducer 724 may be connected via the transmission member 640 described for the second embodiment. In placing the motor 722 in the casing chamber 711A, the orientation of the motor 722 is not limited to the example in the above embodiment. For example, the motor 722 may be placed so that its output shaft 722B extends in the Y direction. In this case, for example, a dual shaft motor may be used which has the output shaft 722B protruding on both sides of the housing 722A in the Y direction. Thus, when the motor 722 is placed so that the output shaft 722B extends in the Y direction, the bevel gear 722C of motor 722 and the bevel gear 724D of the speed reducer 724 can be eliminated, and the output shaft 722B of the motor 722 and the input shaft 724B of the speed reducer 724 can be directly connected.
- One of the pair of speed reducers 724 may be eliminated. In addition, the torque of the motive power generating device 720 may be transmitted to only one of the pair of connection members 715. In this case, the connection member 715 on the side without the speed reducer 724 can be rotatably connected, at the side opposite to the connection point to the dozer blade 608, to the upper body 710 using a shaft-shaped member, such as the first support shaft 21 in the first embodiment. With such configuration, the connection member 715 on the side without the speed reducer 724 rotates up and down around the shaft-shaped member, following the raising and lowering of the dozer blade 608.
- As in the excavator 700A shown in Fig. 18, two motive power generating devices 720A each including the motor 722 and the speed reducer 724 may be provided in the dozer blade drive mechanism 701A. The motive power generating devices 720A may separately transmit torque to the left and right connection members 715. Furthermore, two separate dozer blades may be provided, one is the first dozer blade 608A mounted to the connection member 715 on the left side, and the other is the second dozer blade 608B mounted to the connection member 715 on the right side. For example, the first dozer blade 608A and the second dozer blade 608B are the two parts of the dozer blade 608 of the above embodiment divided at the middle in the Y direction. In addition to such configuration, a control device 700M for controlling the motors 722 of the two motive power generating devices 720A may be configured to separately control the respective motors 722 of the two motive power generating devices 720A. As with Fig. 14, Fig. 18 does not show the operator compartment 712. In Fig. 18, the same reference labels as in Figs. 1 to 17 are used for the components that function the same or substantially the same as the corresponding components shown in Figs. 1 to 17.
- When the excavator 700 is viewed in the direction parallel to the rotation central axis of the motive power generating device 720, it is not essential that the bucket 511 is located on one side of the connection member 715 where the dozer blade 608 is located as viewed from the connection point to the motive power generating device 720. For example, the dozer blade 608 and the bucket 511 may be located on opposite sides across the upper body 710 in the X direction. In any case, the motive power generating device 720, the connection member 715, and thus the dozer blade 608 should be mounted to the upper body 710. In addition, the dozer blade 608 should be able to slew together with the upper body 710 relative to the lower body 705.
- The configuration of the connection member 715 is not limited to the example in the above embodiment. The connection member 715 may have any configuration to be connected to the motive power generating device 720 and to have the dozer blade 608 mounted to the side opposite to the connection point to the motive power generating device 720.
- It is not essential that the motive power generating device 720 includes the speed reducer 724. For example, it is also possible that the motive power generating device 720 is constituted by only the motor 722, and the motor 722 is directly connected to the connection member 715. When the motive power generating device 720 is constituted by only the motor 722, the central axis of the output shaft 722B of the motor 722 is the rotation central axis of the motive power generating device 720. The motive power generating device 720 may have any configuration as long as it includes the electric motor 722.
- The configuration of the dozer blade 608 is not limited to the example in the above embodiment. The dozer blade 608 may have any configuration to attain the required application, for example, leveling, excavation, and raking of earth and sand.
- The construction machines to which the dozer blade drive mechanism 701 is applicable are not limited to the example in the above embodiment. For example, the dozer blade drive mechanism 701 may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Fifth Embodiment>

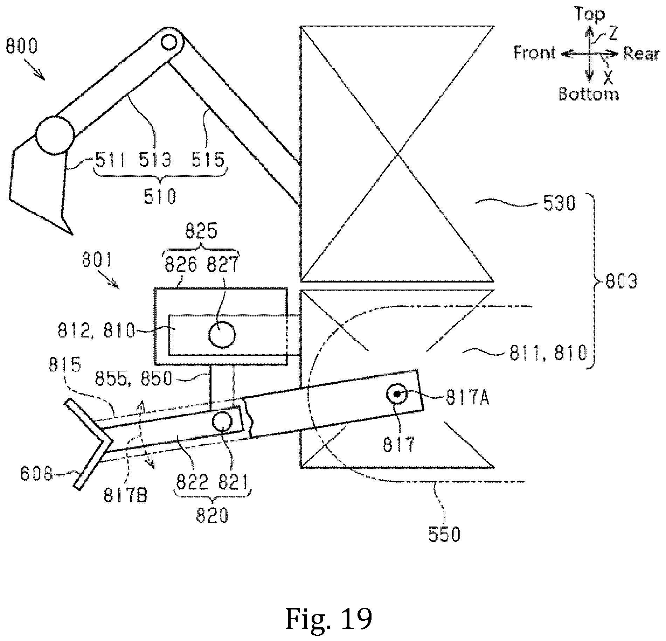

A dozer blade drive mechanism relating to the fifth embodiment will be described with reference to Figs. 19 to 24. The drawings may show the components in an enlarged manner for the sake of better intelligibility. The dimensions of the components and the ratios thereof may be different from those of the actual components, and among the drawings. In Figs. 19 to 24, the same reference labels as in Figs. 1 to 18 are used for the components that function the same or substantially the same as the corresponding components shown in Figs. 1 to 18. In the following, redundant description of the same features as in the first to fourth embodiments may be omitted or simplified.

As shown in Fig. 19, an excavator 800, serving as a construction machine, includes a vehicle body 803. The vehicle body 803 includes an upper body 530 and a lower body 810. The upper body 530 is configured in the same manner as in the first embodiment. The configuration of the lower body 810 will be described later. The upper body 530 is located opposite the ground surface across the lower body 810. In this embodiment, the up and down, left and right, and front and rear are defined in the same manner as in the first embodiment. The upper body 530 is rotatable about an axis extending substantially in the Z direction to the left and right relative to the lower body 810.

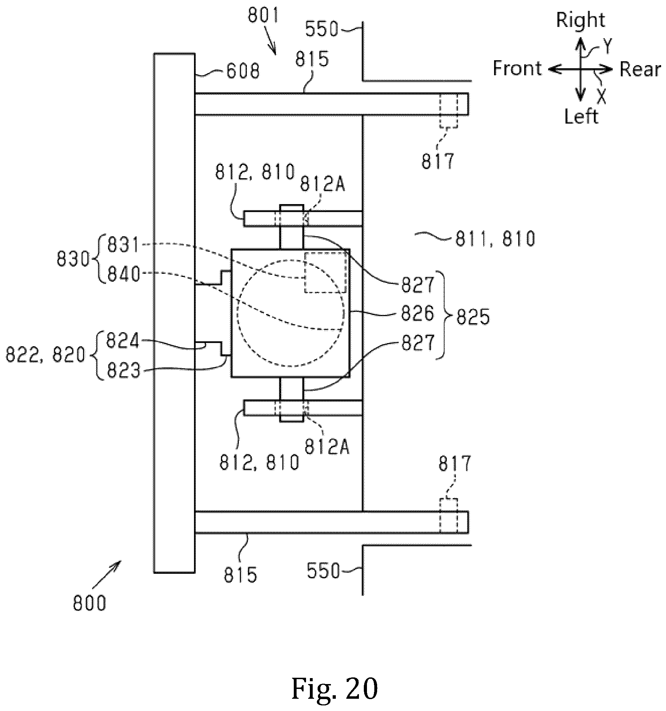

A detailed description is given of the lower body 810. As shown in Figs. 19 and 20, the lower body 810 includes a main portion 811 and a pair of extension walls 812. The main portion 811 is contoured like a rectangular parallelepiped, for example. The main portion 811 houses various mechanisms necessary to operate the excavator 800. The main portion 811 is not limited to a box-like shape, but can have any shape capable of having necessary components mounted thereto.

The pair of extension walls 812 are positioned frontward of the main portion 811. The pair of extension walls 812 are fixed to the main portion 811. As shown in Fig. 20, the pair of extension walls 812 are located on the left and right sides across the middle of the main portion 811 in the Y direction. The extension walls 812 are shaped like a plate. The principal surfaces of the extension walls 812 face in the Y direction. As already described, the principal surface is the surface with the largest area among the external surfaces of a plate-like member. The extension walls 812 have a support hole 812A. The support holes 812A penetrate the extension walls 812 in the Y direction. The central axes of the pair of support holes 812A substantially coincide with each other. In Fig. 20, the support holes 812A are exaggeratedly shown in a larger size.

As shown in Figs. 19 and 20, the excavator 800 includes a pair of traveling units 550, a work attachment 510, and a dozer blade 608. The traveling units 550 and the work attachment 510 are configured in the same manner as in the first embodiment. The dozer blade 608 is configured in the same manner as in the second embodiment. The upper body 530 and the work attachment 510 are not shown in Fig. 20.

### <Dozer Blade Drive Mechanism>

As shown in Fig. 20, the excavator 800 includes a dozer blade drive mechanism 801. The dozer blade drive mechanism 801 includes a pair of connection members 815. The pair of connection members 815 are located on the left and right sides of the lower body 810. The pair of connection members 815 are horizontally symmetrical. Therefore, only one of the pair of connection members 815 will be detailed below.

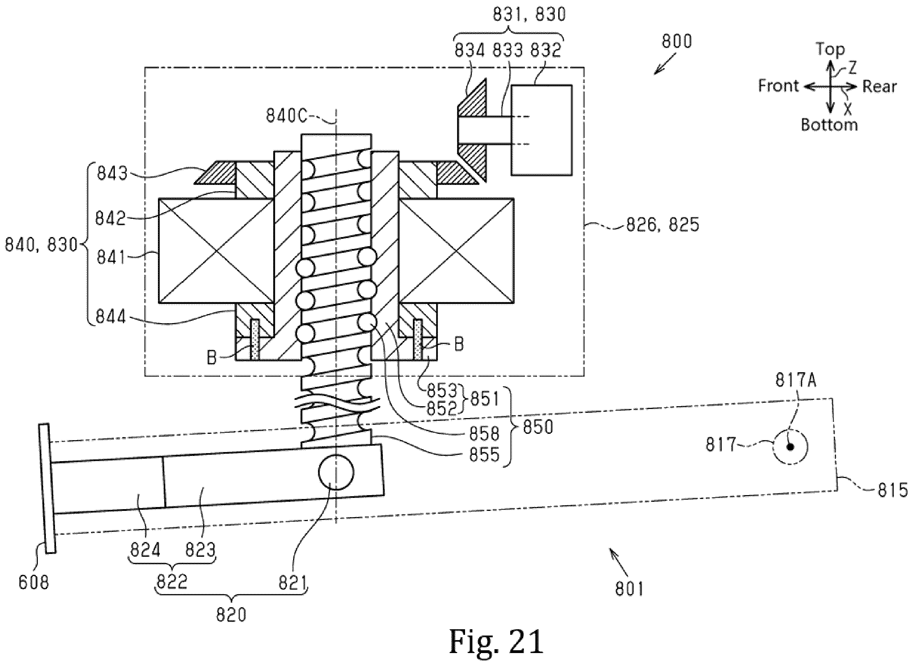

The connection member 815 is long in the front-rear direction. The rear end portion of the connection member 815 is penetrated by a support shaft 817. The support shaft 817 is fixed to the main portion 811 of the lower body 810. Thus, the connection member 815 is connected to the main portion 811 via the support shaft 817. The support shaft 817 is shaped like a circular column. The central axis 817A of the support shaft 817 extends substantially in the Y direction. As indicated by the arrow 817B in Fig. 19, the connection member 815 can rotate up and down around the central axis 817A of the support shaft 817 relative to the main portion 811. Thus, the central axis 817A of the support shaft 817 is the rotation central axis of the connection member 815. The connection member 815 extends straight from the support shaft 817 to the forward side. The dozer blade 608 can be mounted via a mounting means to the front end of the connection member 815, i.e., the end of the connection member 815 opposite to the connection point to the main portion 811 of the lower body 810. Various mounting means, such as bolting or welding, can be employed. In this embodiment, the rear surface of the dozer blade 608 is mounted to the front end of the connection member 815. In Fig. 19, the connection member 815 is partially cut out to elucidate the positional relationship between the components. In Figs. 21 to 24, the dozer blade 608 is shown in a simplified manner.

### <Case>

As shown in Fig. 19, the dozer blade drive mechanism 801 includes a case 825. The case 825 is positioned frontward of the main portion 811 of the lower body 810. The case 825 is positioned lower than the upper body 530 in the Z direction. As shown in Fig. 20, the case 825 is located between the pair of extension walls 812 in the Y direction.

The case 825 includes a case body 826 and a pair of pins 827. The case body 826 is contoured like a rectangular parallelepiped. The case body 826 is hollow. Two of the plurality of side surfaces of the case body 826 constitute lateral surfaces facing the Y direction. The pair of pins 827 protrude in the Y direction from the two lateral surfaces. The pair of pins 827 are horizontally symmetrical. Each of the pins 827 is shaped like a circular column. The central axis of the pin 827 extends in the Y direction. The pin 827 extends through the support hole 812A in the extension wall 812. The pin 827 is rotatably supported on the support hole 812A. As described above, the rotation central axis of the connection member 815 extends in the Y direction. Thus, the central axis of the pin 827 is parallel to the rotation central axis of the connection member 815. Because of this arrangement, the case 825 can rotate about a central axis parallel to the rotation central axis of the connection member 815.

### <Motive Power Generating Device>

As shown in Fig. 20, the dozer blade drive mechanism 801 includes a motive power generating device 830. The motive power generating device 830 is housed in the case body 826. The motive power generating device 830 includes a motor 831 and a speed reducer 840. The motor 831 is the drive source of the motive power generating device 830.

As shown in Fig. 21, the motor 831 includes a housing 832, an output shaft 833, and a bevel gear 834. The motor 831 operates electrically upon receiving electricity fed from a battery, which is not shown. The housing 832 is fixed to the inner side of the case body 826. The output shaft 833 protrudes from the inside to the outside of the housing 832. Specifically, the output shaft 833 protrudes forward of the housing 832. The output shaft 833 is shaped like a circular column. The output shaft 833 is rotatable relative to the housing 832. The output shaft 833 rotates about its own central axis. The central axis of the output shaft 833 extends substantially in the X direction. The output shaft 833 can rotate in both forward and reverse directions in accordance with the power supplied to the motor 831. The bevel gear 834 is mounted to the portion of the output shaft 833 that protrudes from the housing 832. The bevel gear 843 is contoured like a truncated cone. The output shaft 833 is fixed to the hole at the middle of the bevel gear 834. The central axis of the bevel gear 834 substantially coincides with the central axis of the output shaft 833. The outer periphery of the bevel gear 834 has a diameter that is smaller toward the front. The bevel gear 834 has a plurality of teeth on the outer peripheral surface.

The speed reducer 840 includes an input member 842, a bevel gear 843, a reducer body 841, and an output member 844. The input member 842 is shaped like a circular tube. The central axis 840C of the input member 842 extends substantially in the Z direction. The upper end surface of the input member 842 is located slightly lower than the output shaft 833 of the motor 831. The input member 842 is connected to the reducer body 841 so as to be rotatable around its own central axis 840C.

The bevel gear 843 is mounted to the input member 842. The bevel gear 843 is contoured like a truncated cone. The input member 842 is fixed to the hole at the middle of the bevel gear 843. The central axis 840C of the bevel gear 843 substantially coincides with the central axis 840C of the input member 842. In this embodiment, axes that substantially coincide with the central axis 840C of the input member 842 are denoted by the unified sign 840C. The diameter of the bevel gear 843 is smaller upward. The bevel gear 843 has a plurality of teeth on the outer peripheral surface. The teeth of the bevel gear 843 are engaged with the teeth of the bevel gear 834 of the motor 831. In Fig. 21, the bevel gear 843 is drawn away from the bevel gear 834 of the motor 831 for convenience.

The reducer body 841 is positioned lower than the input member 842. The reducer body 841 is fixed to the inner side of the case body 826. The reducer body 841 is shaped like a circular tube. The central axis 840C of the reducer body 841 substantially coincides with the central axis 840C of the input member 842. The inner diameter of the reducer body 841 is substantially equal to the inner diameter of the input member 842. For example, the outer diameter of the reducer body 841 is larger than the outer diameter of the input member 842. The upper end surface of the reducer body 841 is connected to the lower end surface of the input member 842. The reducer body 841 receives the torque of the motor 831 input via the input member 842. The reducer body 841 multiplies the torque of the motor 831 with a predetermined ratio and outputs the resulting torque to the output member 844. In other words, the reducer body 841 reduces the rotational speed of the output shaft 833 of the motor 831 and outputs the resulting rotational speed to the output member 844. The reducer body 841 may be of, for example, an eccentric oscillation gear type or planetary gear type. The reducer body 841 can be of any type as long as it is capable of multiplying the torque from the motor 831 and outputting the resulting torque.

The output member 844 is positioned lower than the reducer body 841. The output member 844 is shaped like a circular tube. The central axis 840C of the output member 844 substantially coincides with the central axis 840C of the reducer body 841. The inner diameter of the output member 844 is substantially equal to the inner diameter of the reducer body 841. For example, the outer diameter of the output member 844 is substantially equal to the outer diameter of the input member 842. The upper end surface of the output member 844 is connected to the lower end surface of the reducer body 841. The output member 844 can rotate about its own central axis 840C by the torque received from the reducer body 841. The output member 844 outputs the torque received from the reducer body 841 to a nut 851, which is described later. Thus, the motive power generating device 830 generates a torque around the central axis 840C of the speed reducer 840 in accordance with the rotation of the output shaft 833 of the motor 831. In this embodiment, the central axis 840C of the speed reducer 840 is the rotation central axis of the motive power generating device 830.

As described above, the case body 826 is connected to the extension wall 812 so as to be rotatable about the central axis parallel to the rotation central axis of the connection member 815. Accordingly, the motive power generating device 830 housed in the case body 826 is also connected to the extension wall 812 so as to be rotatable about the central axis parallel to the rotation central axis of the connection member 815.

### <Conversion Mechanism>

As shown in Fig. 21, the dozer blade drive mechanism 801 includes a conversion mechanism 850. The conversion mechanism 850 includes a nut 851, a threaded shaft 855, and a plurality of balls 858.

The nut 851 includes a nut body 852 and a connecting portion 853. The nut body 852 is shaped like a circular tube. The central axis 840C of the nut body 852 substantially coincides with the central axis 840C of the speed reducer 840. The outer diameter of the nut body 852 is substantially equal to the inner diameter of the reducer body 841. The nut body 852 penetrates the input member 842, the reducer body 841, and the output member 844 of the speed reducer 840. A gap is provided between the outer peripheral surface of the nut body 852 and the inner peripheral surfaces of the components of the speed reducer 840. The outer peripheral surface of the nut body 852 is configured to slide relative to the inner peripheral surfaces of the components of the speed reducer 840. The inner peripheral surface of the nut body 852 is internally threaded. The internal threads are formed over the entire length of the nut body 852 in the direction along its central axis 840C. Fig. 21 shows the internal threads of only a part of the nut body 852.

The connecting portion 853 is located near the lower end of the nut body 852. The connecting portion 853 projects outward from the outer periphery of the nut body 852 in the radial direction around the central axis 840C of the nut body 852. The connecting portion 853 extends over the entire circumference of the nut body 852. In other words, the connecting portion 853 has an annular shape. The central axis 840C of the connecting portion 853 substantially coincides with the central axis 840C of the nut body 852. The upward-facing surface of the connecting portion 853 is in surface contact with the lower end surface of the output member 844 of the speed reducer 840. The connecting portion 853 and the output member 844 are fixed together with bolts B, for example. Thus, the connecting portion 853 is connected to the output member 844. The connecting portion 853, and thus the entire nut 851, rotates together with the output member 844 around the central axis 840C of the nut 851 by the torque received from the output member 844.

The threaded shaft 855 extends inside and outside the nut 851. The threaded shaft 855 is shaped like a circular column. The central axis 840C of the threaded shaft 855 substantially coincides with the central axis 840C of the speed reducer 840. The diameter of the threaded shaft 855 is smaller than the inner diameter of the nut body 852. The outer peripheral surface of the threaded shaft 855 is externally threaded. The external threads are formed over the entire length of the threaded shaft 855 in the direction along its central axis 840C. The threaded shaft 855 penetrates the nut 851 and thus the speed reducer 840. The lower portion of the threaded shaft 855 penetrates the lower surface of the case body 826. The lower portion of the threaded shaft 855 is exposed to the outside of the case 825.

The balls 858 are interposed between the inner peripheral surface of the nut body 852 and the outer peripheral surface of the threaded shaft 855. The balls 858 are retained between the internal threads of the nut body 852 and the external threads of the threaded shaft 855. The balls 858 guide the relative rotation between the nut body 852 and the threaded shaft 855. Fig. 21 representatively shows six of the balls 858. The number of balls 858 is not limited to six.

The central axis 840C of the speed reducer 840 is referred to as the power central axis 840C. Since the central axis 840C of the reducer body 841 extends substantially in the Z direction, the power central axis 840C extends along the top-bottom direction of the excavator 800. As described above, the nut 851 rotates in accordance with the torque from the speed reducer 840. The rotation of the nut 851 is transmitted to the threaded shaft 855 via the balls 858. Accordingly, the threaded shaft 855 moves upward or downward along the power central axis 840C. Thus, in the conversion mechanism 850, the torque generated by the speed reducer 840 is converted to linear motion in the direction along the power central axis 840C.

### <Link Mechanism>

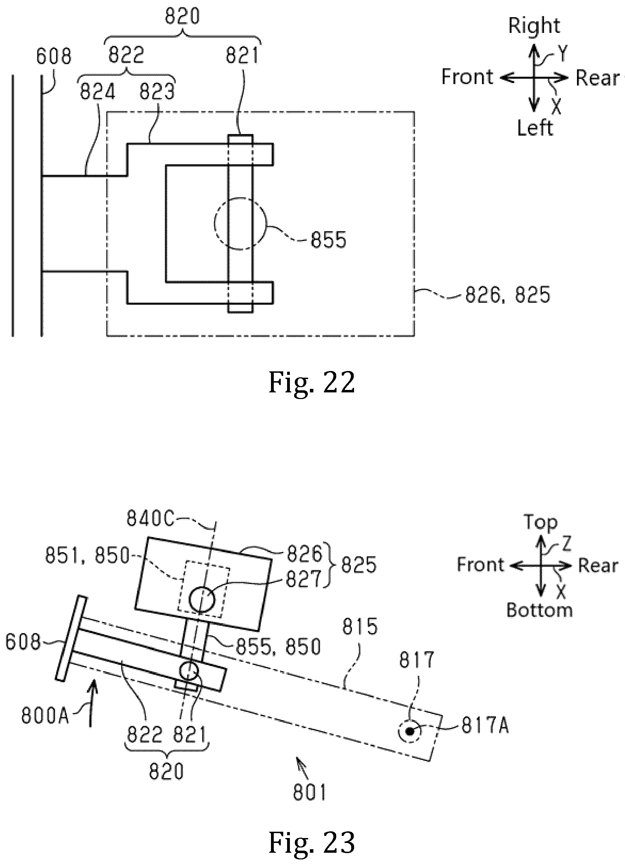

As shown in Fig. 21, the dozer blade drive mechanism 801 includes a link mechanism 820. The link mechanism 820 is positioned lower than the case 825. As shown in Fig. 22, the link mechanism 820 includes a link 822 and a joint 821.

As shown in Fig. 21, when the link 822 is viewed in the Y direction, the link 822 extends straight in the X direction. On the other hand, as shown in Fig. 22, the link 822 has a U-shaped leg portion 823 and a trunk portion 824 that extends straight from the bottom of the U shape in the leg portion 823 toward the opposite side to the bifurcated parts of the U shape, as viewed in the Z direction. The end of the trunk portion 824 opposite to the leg portion 823 is mounted to the rear surface of the dozer blade 608 by a mounting means. Various mounting means, such as bolting or welding, can be employed.

The lower end portion of the threaded shaft 855 is located between the bifurcated parts of the U shape in the leg portion 823. The leg portion 823 and the lower end portion of the threaded shaft 855 are penetrated by the joint 821. Thus, the leg portion 823 and the threaded shaft 855 are connected via the joint 821. The joint 821 is retained to the leg portion 823 by means of a retainer not shown. The joint 821 is shaped like a circular column. The central axis of the joint 821 extends substantially in the Y direction. Thus, the central axis of the joint 821 is substantially parallel to the central axis of the support shaft 817, which is the rotation central axis of the connection member 815. The central axis of the joint 821 is also substantially parallel to the central axis of the pin 827 in the case 825. The joint 821 connects the leg portion 823 and the threaded shaft 855 so as to be rotatable relative to each other. In other words, the leg portion 823 and the threaded shaft 855 can rotate around the joint 821 relative to each other.

### <Operation of Fifth Embodiment>

The following now describes how the dozer blade 608 is raised and lowered. Suppose that the components of the dozer blade drive mechanism 801 are now in the first posture shown in Figs. 19 and 21. In the first posture, the amount of protrusion of the threaded shaft 855 from the case body 826 is the first value. Also, in the first posture, the connection member 815 is inclined slightly downward relative to an imaginary straight line extending through the support shaft 817 in the X direction.

A description is first given of how the dozer blade 608 is raised. In the first posture described above, the output shaft 833 of the motor 831 rotates, and then the output member 844 of the speed reducer 840, and thus the nut 851, rotate around the power central axis 840C through the engagement between the bevel gear 834 of the motor 831 and the bevel gear 843 of the speed reducer 840. This rotational motion of the nut 851 drives the linear motion of the threaded shaft 855 through the relative rotation between the nut 851 and the threaded shaft 855. Specifically, as shown in Fig. 23, the threaded shaft 855 moves upward relative to the nut 851. Accordingly, the amount of protrusion of the threaded shaft 855 from the case body 826 falls below the first value. As the threaded shaft 855 moves upward, the joint 821 moves upward along with the threaded shaft 855. Then, the link 822 connected to the joint 821, the dozer blade 608 connected to the link 822, and the connection member 815 connected to the dozer blade 608 move upward. Thus, the upward movement of the threaded shaft 855 acts as a force to pull up the link 822, the dozer blade 608, and the connection member 815. On the other hand, the connection member 815 is rotatable around the support shaft 817. Therefore, the upward movement of the threaded shaft 855 causes the link 822, the dozer blade 608, and the connection member 815 to rotate upward around the support shaft 817, as indicated by the arrow 800A in Fig. 23. Thus, the link mechanism 820, which is constituted by the joint 821 and the link 822, performs the function of transmitting the linear motion, produced by conversion of the conversion mechanism 850, to the dozer blade 608 and the connection member 815 as the rotational motion of the dozer blade 608.

As described above, the joint 821 is connected to the connection member 815 via the link 822 and the dozer blade 608. In relation to this arrangement, when the joint 821 moves upward, the joint 821 moves, in a strict sense, in a virtual circle around the central axis 817A of the support shaft 817, which is the rotation central axis of the connection member 815. Thus, the joint 821 does not simply move straight in the Z direction but rotates when the threaded shaft 855 moves up and down. To allow such rotation of the joint 821, the case 825 in this embodiment is pivotably connected to the extension walls 812. Therefore, when the joint 821 rotates, the case body 826, which is integrated with the joint 821, rotates around the pins 827. As a result, the power central axis 840C is slightly tilted with respect to the Z direction, as shown in Fig. 23. Thus, the direction of extension of the power central axis 840C does not always coincide with the Z direction, but may be tilted, for example, within about 15 degrees with respect to the Z direction. Including such cases, the power central axis 840C can be deemed as extending along the Z direction if it generally extends in the top-bottom direction. The tilt angle of the power central axis 840C shown in Fig. 23 is an example for illustrating the rotation of the case body 826 and does not necessarily correspond to an actual tilt angle.

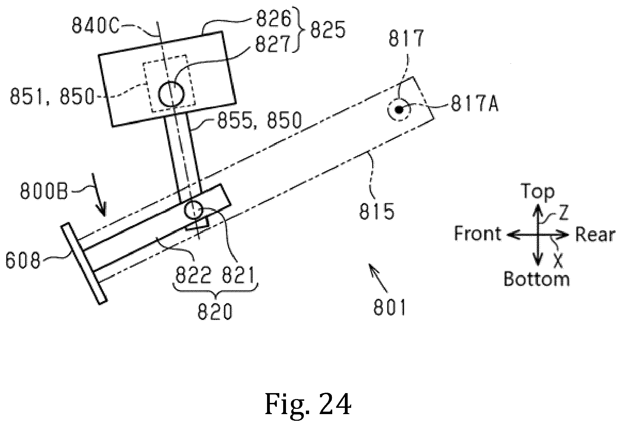

A description is now given of how the dozer blade 608 is lowered. Suppose that the output member 844 of the speed reducer 840, and thus the nut 851, rotates from the first posture described above in the opposite direction than in the upward movement, in response to driving of the motor 831. This rotational motion of the nut 851 drives the linear motion of the threaded shaft 855 through the relative rotation between the nut 851 and the threaded shaft 855. Specifically, as shown in Fig. 24, the threaded shaft 855 moves downward relative to the nut 851. Accordingly, the amount of protrusion of the threaded shaft 855 from the case body 826 exceeds the first value. This downward movement of the threaded shaft 855 acts as a force to push down the link 822, the dozer blade 608, and the connection member 815. On the other hand, the connection member 815 is rotatable using the support shaft 817 as a fulcrum. Therefore, the movement of the threaded shaft 855 causes the link 822, the dozer blade 608, and the connection member 815 to rotate downward around the support shaft 817, as indicated by the arrow 800B in Fig. 24. In the rotation of the dozer blade 608, the link 822 and the joint 821 performs the function of transmitting the linear motion, produced by conversion of the conversion mechanism 850, to the dozer blade 608 and the connection member 815 as the rotational motion of the dozer blade 608. As in the raising operation, when the dozer blade 608 rotates, the case body 826 rotates around the pin 827 to the opposite side than in the raising operation. Accordingly, the power central axis 840C is slightly tilted with respect to the Z direction. As in the Fig. 23, the tilt angle of the power central axis 840C shown in Fig. 24 is an example for illustrating the rotation of the case body 826 and does not necessarily correspond to an actual tilt angle.

### <Advantageous Effects of Fifth Embodiment>

(5-1) Suppose that the speed reducer 840 is mounted to the lower body 810 such that its central axis 840C extends in the Y direction. In this case, the outer diameter of the speed reducer 840 is restricted by the need to avoid interference with the ground surface and the upper body 530. By contrast, in the excavator 800 of this embodiment, the speed reducer 840 is mounted to the lower body 810 such that its central axis 840C extends generally in the top-bottom direction. Therefore, even when the outer diameter of the speed reducer 840 is increased, space can be secured to mount the speed reducer 840 on the excavator 800. In such configuration of this embodiment, for example, it is possible to install a relatively large-sized speed reducer 840 to output a large torque.

An external force may act on the dozer blade 608 from the front. The load acting on the dozer blade 608 from the front includes mainly a component in the X direction. Therefore, as described in (1-3) for the first embodiment, this load hardly acts as a force to move the components in the direction intersecting the X direction. Thus, this load is unlikely to be a force that moves the threaded shaft 855, which extends generally in the Z direction, to the upward side, and is unlikely to affect the conversion mechanism 850 and the motive power generating device 830. In such configuration of this embodiment, the external force acting on the dozer blade 608 is inhibited from reaching the speed reducer 840 and the motor 831. This inhibits an increase in the size of the motive power generating device 830, as described in, for example, (1-3) for the first embodiment.

(5-2) In the excavator 800 of this embodiment, the so-called ball screw mechanism is used as the mechanism for power conversion between the motive power generating device 830 and the link mechanism 820. This ball screw mechanism is suitable for converting the rotational motion of the speed reducer 840 into a linear motion.

(5-3) In the excavator 800 of this embodiment, the speed reducer 840 is shaped like a circular tube. The speed reducer 840 receives therein the nut 851 and the threaded shaft 855 that constitute the conversion mechanism 850. Thus, the interior of the speed reducer 840 is used as a space for receiving the conversion mechanism 850, thereby reducing the overall installation space for the motive power generating device 830 and the conversion mechanism 850. This allows downsizing of the case 825, which houses the motive power generating device 830 and the conversion mechanism 850, as well as the structural part of the lower body 810, in which the case 825 is located.

(5-4) As described above in Operation of Fifth Embodiment, in the configuration of this embodiment, when the joint 821 moves in response to the upward or downward movement of the threaded shaft 855, the joint 821 moves in a virtual circle around the central axis 817A of the support shaft 817. Supposing that the case body 826 is not supported in a rotatable manner, it is necessary to interpose, for example, a universal coupling between the joint 821 and the threaded shaft 855 to allow the above-mentioned rotation of the joint 821. In this case, however, installing the universal coupling between the joint 821 and the threaded shaft 855 increases the number of parts and complicates the connection between the joint 821 and the threaded shaft 855. By contrast, in the excavator 800 of this embodiment, the case body 826 is rotatably supported by the extension walls 812. This allows movement of the joint 821 without an increase in the number of parts or an increase in the complexity of the configuration, with respect to the connection between the conversion mechanism 850 and the link mechanism 820.

### <Modification Examples of Fifth Embodiment>

The fifth embodiment can be modified as described below. The first to fifth embodiments and the following modification examples can be combined with each other to such an extent that they are technically consistent with each other.
- The shape of the case 825 is not limited to the example in the above embodiment. The case 825 may have any shape capable of housing the motive power generating device 830. - The case 825 may be eliminated. If the case 825 is eliminated, for example, the housing 832 of the motor 831 may be fixed to the outer surface of the reducer body 841, such that the motor 831 and the speed reducer 840 can be configured as a single assembly. If the case 825 is eliminated, for example, the speed reducer 840 could be directly connected to the vehicle body 803. This configuration is explained in the next modification example.
- The configuration for connecting the motive power generating device 830 to the vehicle body 803 in a rotatable manner is not limited to the example in the above embodiment. For example, if the case 825 is eliminated as in the above modification example, shaft-shaped members may be provided to protrude from the outer circumference of the reducer body 841 to both the left and right sides. These shaft-shaped members may be rotatably supported by the extension walls 812. The motive power generating device 830 may be connected to the vehicle body 803 in any manner so as to be rotatable around a central axis parallel to the rotation central axis of the connection members 815. The vehicle body 803 mentioned here is not limited to the lower body 810, but can be the upper body 530 or the operating mechanisms of the traveling units 550.
- It is not essential that the motive power generating device 830 be rotatably connected to the vehicle body 803. If the motive power generating device 830 is not rotatably connected to the vehicle body 803, for example, a universal coupling may be provided between the joint 821 and the threaded shaft 855. Any connection is possible between the motive power generating device 830, the conversion mechanism 850, the link mechanism 820, the dozer blade 608, and the connection member 815, as long as their components can operate smoothly in raising and lowering the dozer blade 608.
- As described above, the structure of the vehicle body 803 for mounting the motive power generating device 830 to the vehicle body 803 is not limited to the example in the above embodiment. The vehicle body 803 may have any structure that allows the motive power generating device 830 to be mounted to the vehicle body 803. As described above, the vehicle body 803 mentioned here includes the operating mechanisms of the traveling units 550, in addition to the lower body 810 and the upper body 530.
- The shape of the speed reducer 840 is not limited to the example in the above embodiment. Specifically, the shape of the speed reducer 840 is not limited to a circular tube. For example, the reducer body 841 may be shaped like a rectangular tube. If the speed reducer 840 is shaped like a tube, various components of the conversion mechanism 850 can be located inside the speed reducer 840. Furthermore, the speed reducer 840 may have a shape other than a tube, such as a circular column. Regardless of the shape of the speed reducer 840, the speed reducer 840 should be able to change the rotational speed of the motor 831 and output a resulting rotational speed. In addition, the speed reducer 840 and the conversion mechanism 850 should be connected as appropriate so that the output of the speed reducer 840 can be transmitted to the conversion mechanism 850.
- The configuration of the conversion mechanism 850 is not limited to the example in the above embodiment. The conversion mechanism 850 may have any configuration to convert the rotational motion from the motive power generating device 830 into a linear motion. For example, in the conversion mechanism 850, the balls 858 may be eliminated from between the nut 851 and the threaded shaft 855. The inner surface of the nut 851 and the outer surface of threaded shaft 855 may be threadably engaged. This arrangement also allows the linear motion of the threaded shaft 855 through the relative rotation between the nut 851 and the threaded shaft 855.
- The configuration of the link mechanism 820 is not limited to the example in the above embodiment. The link mechanism 820 may have any configuration to transmit the linear motion produced by conversion of the conversion mechanism 850 to the dozer blade 608 as a rotational motion. For example, in the above embodiment, the link 822 is connected to the dozer blade 608. Instead of this arrangement, the shape of link 822 may be altered so that the link 822 connects to the connection member 815. The linear motion of the threaded shaft 855 may be transmitted from the joint 821 and thus the link 822 to the connection member 815. In this case, the dozer blade 608 can still be raised and lowered by the upward and downward movement of the connection member 815 together with the joint 821, for example. The link mechanism 820 may be configured without using the joint 821. Furthermore, the link mechanism 820 may be constituted by three or more link components.
- The configuration of the connection member 815 is not limited to the example in the above embodiment. The connection member 815 may have any configuration to be connected to the vehicle body 803 and to have the dozer blade 608 mounted to the side opposite to the connection point to the vehicle body 803.
- The manner in which the connection member 815 is connected to the vehicle body 803 is not limited to the example in the above embodiment. For example, the connection member 815 and the support shaft 817 may be fixed together. In addition, the support shaft 817 may be connected to the main portion 811 of the lower body 810 so that the support shaft 817 is rotatable relative to the main portion 811. The connection member 815 may be connected to the vehicle body 803 in any manner that allows rotation of the connection member 815 relative to the vehicle body 803.
- The transmission mechanism for inputting the rotation of the motor 831 to the speed reducer 840 does not necessarily include the bevel gears. For example, this transmission mechanism may use a worm gear mechanism. The transmission mechanism may have any configuration to input the rotation of the motor 831 to the speed reducer 840.
- It is not essential that the motive power generating device 830 includes the speed reducer 840. For example, it is also possible that the motive power generating device 830 is constituted by only the motor 831, and the motor 831 is connected to the conversion mechanism 850. In this case, the motor 831 could be arranged so that the central axis of its output shaft 833 extends along the Z direction. When the motive power generating device 830 is constituted by only the motor 831, the central axis of the output shaft 833 of the motor 831 may constitute the power central axis. The motive power generating device 830 may have any configuration as long as it includes the electric motor 831.
- The configuration of the dozer blade 608 is not limited to the example in the above embodiment. The dozer blade 608 may have any configuration to attain the required application, for example, leveling, excavation, and raking of earth and sand.
- The construction machines to which the dozer blade drive mechanism 801 is applicable are not limited to the example in the above embodiment. For example, the dozer blade drive mechanism 801 may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Sixth Embodiment>

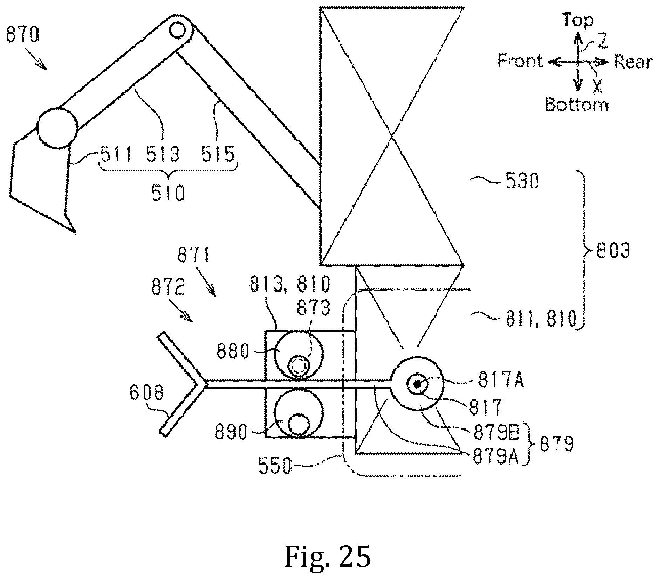

A dozer blade drive mechanism relating to the sixth embodiment will be described with reference to Figs. 25 to 29. In Figs. 25 to 29, the same reference labels as in Figs. 1 to 24 are used for the components that function the same or substantially the same as the corresponding components shown in Figs. 1 to 24. In the following, redundant description of the same features as in the first to fifth embodiments may be omitted or simplified.

As shown in Fig. 25, an excavator 870, serving as a construction machine, includes a vehicle body 803. The vehicle body 803 is configured in the same manner as in the fifth embodiment, except for an extension wall 813 described later. In this embodiment, the up and down, left and right, and front and rear are defined in the same manner as in the first embodiment.

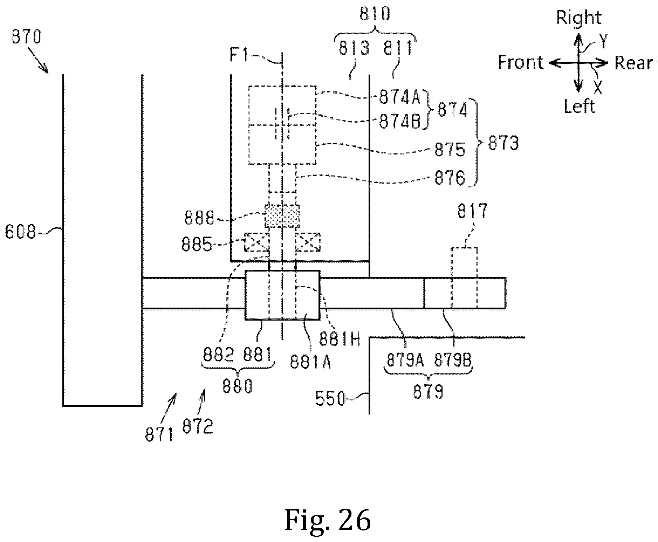

A detailed description is given of the lower body 810. As shown in Figs. 25 and 26, the lower body 810 includes a main portion 811 and an extension wall 813. The main portion 811 is contoured like a rectangular parallelepiped, for example. The main portion 811 houses various mechanisms necessary to operate the excavator 870. The main portion 811 is not limited to a box-like shape, but can have any shape capable of having necessary components mounted thereto. In the following description, with respect to the Y direction, the middle of the main portion 811 in the left-right direction may be referred to as the main portion middle.

The extension wall 813 is positioned frontward of the main portion 811. The extension wall 813 is fixed to the main portion 811. The extension wall 813 is shaped like a rectangular parallelepiped, for example. The interior of the extension wall 813 is hollow. The extension wall 813 may have any shape as long as it can support a motive power generating device 873 described later.

As shown in Figs. 25 and 26, the excavator 870 includes a pair of traveling units 550, a work attachment 510, and a dozer blade 608. The traveling units 550 and the work attachment 510 are configured in the same manner as in the first embodiment. The dozer blade 608 is configured in the same manner as in the second embodiment. The upper body 530 and the work attachment 510 are not shown in Fig. 26. Fig. 26 shows only one of the pair of traveling units 550.

### <Dozer Blade Drive Mechanism>

The excavator 870 includes a dozer blade drive mechanism 871. The dozer blade drive mechanism 871 includes two power transmission mechanisms 872. Figs. 25 and 26 show only one of the two power transmission mechanisms 872. The two power transmission mechanisms 872 are provided on the left and right sides across the main portion middle. The two power transmission mechanisms 872 are horizontally symmetrical. Therefore, the following description of the power transmission mechanisms 872 is focused on one of the two power transmission mechanisms 872 located on the left side of the main portion middle.

As shown in Figs. 25 and 26, the power transmission mechanism 872 includes a connection member 879. As shown in Fig. 25, the connection member 879 extends from the main portion 811 of the lower body 810 to the forward side. As shown in Fig. 26, the connection member 879 is located between the lower body 810 and the traveling unit 550 in the Y direction. As shown in Fig. 25, the connection member 879 includes a rod-shaped main body 879A and a connecting portion 879B located at one end of the main body 879A in its longitudinal direction. The connecting portion 879B is shaped like a plate. As shown in Fig. 26, the principal surface of the connecting portion 879B faces the main portion 811 of the lower body 810. As already described, the principal surface is the surface with the largest area among the external surfaces of a plate-like member. The connecting portion 879B is penetrated by a support shaft 817. The support shaft 817 is fixed to the main portion 811 of the lower body 810. Thus, the connecting portion 879B is connected to the main portion 811 via the support shaft 817. The support shaft 817 is shaped like a circular column. The central axis 817A of the support shaft 817 extends substantially in the Y direction. Fig. 26 does not show the central axis 817A of the support shaft 817. The connection member 879 can rotate up and down around the support shaft 817 relative to the main portion 811. Thus, the central axis 817A of the support shaft 817 is the rotation central axis of the connection member 879.

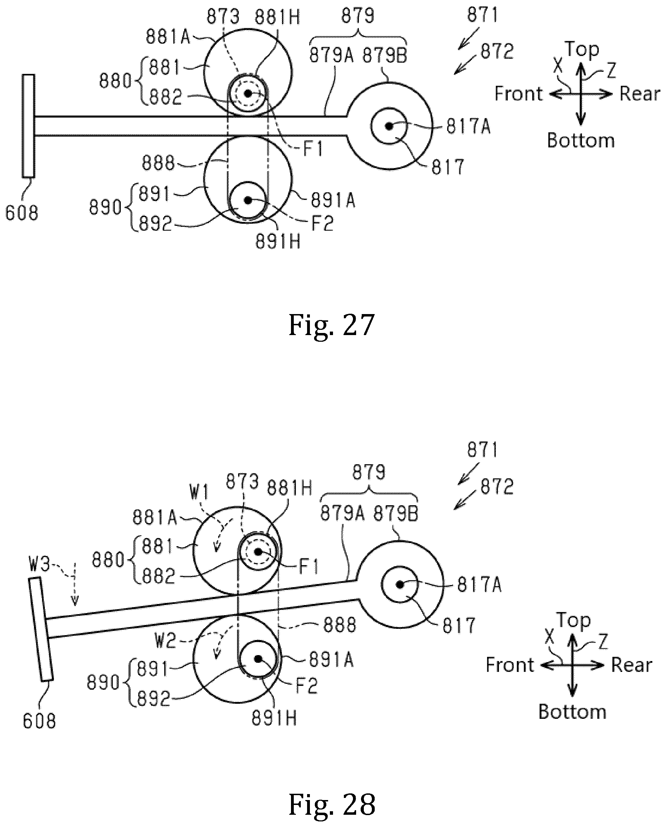

As shown in Fig. 25, the main body 879A of the connection member 879 extends straight from the connecting portion 879B to the forward side. The dozer blade 608 can be mounted via a mounting means to the front end of the main body 879A of the connection member 879, i.e., the end of the connection member 879 opposite to the connection point to the lower body 810. Various mounting means, such as bolting or welding, can be employed. In this embodiment, the connection member 879 is mounted to the rear surface of the dozer blade 608. In Figs. 27 to 29, the dozer blade 608 is shown in a simplified manner.

As shown in Fig. 26, the power transmission mechanism 872 includes a motive power generating device 873. The motive power generating device 873 is located in the extension wall 813 of the lower body 810. The motive power generating device 873 includes a motor 874, a speed reducer 875, and a transmission member 876.

The motor 874 is the drive source of the motive power generating device 873. The motor 874 includes a housing 874A and an output shaft 874B. The motor 874 operates electrically upon receiving electricity fed from a battery, which is not shown. The housing 874A is fixed to the inner wall of the extension wall 813. Most part of the output shaft 874B is located inside the housing 874A. A part of the output shaft 874B protrudes from the housing 874A toward the opposite side to the main portion middle. The output shaft 874B is shaped like a circular column. The central axis F1 of the output shaft 874B extends in the Y direction. The output shaft 874B is rotatable relative to the housing 874A. The output shaft 874B rotates about its own central axis F1. The output shaft 874B can rotate in both forward and reverse directions in accordance with the power supplied to the motor 874. The central axis F1 of the output shaft 874B may be hereinafter referred to as the central axis F1 of the motor 874. In this embodiment, axes that substantially coincide with the central axis F1 of the output shaft 874B are denoted by the unified sign F1.

The speed reducer 875 is adjacent to the motor 874 in the direction along the central axis F1 of the motor 874. With respect to the Y direction, the speed reducer 875 is located opposite the main portion middle across the motor 874. The speed reducer 875 is fixed to the inner wall of the extension wall 813. The speed reducer 875 is connected to the output shaft 874B of the motor 874. The speed reducer 875 receives the torque of the output shaft 874B of the motor 874. The speed reducer 875 multiplies the torque of the output shaft 874B of the motor 874 with a predetermined ratio and outputs the resulting torque. The speed reducer 875 may be of, for example, an eccentric oscillation gear type or planetary gear type. The speed reducer 875 can be of any type as long as it is capable of multiplying the torque from the motor 874 and outputting the resulting torque.

The transmission member 876 is adjacent to the speed reducer 875 in the direction along the central axis F1 of the motor 874. The transmission member 876 is positioned opposite the motor 874 with respect to the speed reducer 875. The transmission member 876 is connected to the speed reducer 875. The transmission member 876 is shaped like a circular column. The central axis F1 of the transmission member 876 substantially coincides with the central axis F1 of the motor 874. The transmission member 876 receives the torque output from the speed reducer 875. The transmission member 876 rotates on its own central axis F1 upon receiving the torque from the speed reducer 875. Thus, the transmission member 876 outputs torque around the central axis F1 of the motor 874. As described above, the motive power generating device 873 generates torque around the central axis F1 of the motor 874 using the motor 874 as the drive source. The central axis F1 of the motor 874 may be hereinafter referred to as the central axis F1 of the motive power generating device 873. The central axis F1 of the motive power generating device 873 is parallel to the rotation central axis of the connection member 879.

### <Eccentric Cams>

As shown in Figs. 25 and 26, the power transmission mechanism 872 includes a first eccentric cam 880. As shown in Fig. 26, the first eccentric cam 880 is adjacent to the transmission member 876 in the direction along the central axis F1 of the motive power generating device 873. The first eccentric cam 880 is positioned opposite the speed reducer 875 with respect to the transmission member 876. The first eccentric cam 880 includes a first cam body 881 and a first input shaft 882. The first input shaft 882 is connected to the transmission member 876. The first input shaft 882 is shaped like a circular column. The central axis F1 of the first input shaft 882 substantially coincides with the central axis F1 of the transmission member 876. The first input shaft 882 rotates together with the transmission member 876 around the same axis as the transmission member 876. Specifically, the first input shaft 882 rotates around the central axis F1 of the motive power generating device 873 upon receiving the torque generated by the motive power generating device 873. With respect to the Y direction, about half of the first input shaft 882 closer to the transmission member 876 is located in the extension wall 813. The first input shaft 882 is rotatably supported by a bearing 885 in the extension wall 813. About half of the first input shaft 882 opposite the transmission member 876 protrudes from the extension wall 813. The bearing 885 is fixed to the inner wall of the extension wall 813. Since the first input shaft 882 is supported by the bearing 885, the central axis F1 of the first input shaft 882 is constantly retained at the same position.

The first cam body 881 is located outside the extension wall 813. In the Y direction, the first cam body 881 is located at the same position as the main body 879A of the connection member 879. As shown in Fig. 27, with respect to the Z direction, the first cam body 881 is located on the upper side of the main body 879A of the connection member 879. The first cam body 881 is contoured like a circular column. The central axis of the circular column of the first cam body 881 extends in the Y direction. The first cam body 881 has a first through hole 881H. The first through hole 881H extends through the first cam body 881 in the Y direction. The central axis F1 of the first through hole 881H is offset from the central axis of the circular column of the first cam body 881. On the other hand, the central axis F1 of the first through hole 881H substantially coincides with the central axis F1 of the first input shaft 882 and thus the motive power generating device 873. The diameter of the first through hole 881H is substantially equal to the diameter of the first input shaft 882. The first input shaft 882 is located in the first through hole 881H. The inner surface of the first through hole 881H and the first input shaft 882 are fixed together. The first cam body 881 rotates together with the first input shaft 882 around the same axis as the first input shaft 882. Thus, the central axis F1 of the first input shaft 882 is the rotation central axis of the first cam body 881 and thus the first eccentric cam 880. This rotation central axis may be hereinafter referred to as the first rotation central axis F1. In Figs. 25 and 27, the motive power generating device 873 is shown for convenience in a circle with a diameter smaller than that of the first through hole 881H.

The entire outer circumference of the first cam body 881 constitutes the first cam surface 881A. With respect to the circumferential direction around the central axis of the circular column of the first cam body 881, a part of the first cam surface 881A is in contact with the main body 879A of the connection member 879 from the upper side.

As shown in Fig. 27, the power transmission mechanism 872 includes a second eccentric cam 890. The second eccentric cam 890 is positioned lower than the first eccentric cam 880. Specifically, with respect to the Z direction, the second eccentric cam 890 is located opposite the first eccentric cam 880 across the main body 879A of the connection member 879.

The second eccentric cam 890 includes a second cam body 891 and a second input shaft 892. The second eccentric cam 890 has the same shape and dimensions as the first eccentric cam 880. Specifically, the second input shaft 892 is shaped like a circular column, as is the first input shaft 882. The central axis F2 of the second input shaft 892 extends in the Y direction. Although not indicated in the figures, the second input shaft 892 is located at substantially the same position as the first input shaft 882 in both X and Y directions. A part of the second input shaft 892 is located in the extension wall 813, as with the first input shaft 882. The remaining part of the second input shaft 892 protrudes to the outside of the extension wall 813. The second input shaft 892 is rotatably supported by a bearing on the inner wall of the extension wall 813. The second input shaft 892, which is supported by the bearing, can rotate around the central axis F2 of the second input shaft 892. As with the first input shaft 882, the central axis F2 of the second input shaft 892 is constantly retained at the same position.

The second cam body 891 is located at substantially the same position as the first cam body 881 in both X and Y directions. The second cam body 891 is contoured like a circular column, as is the first cam body 881. The central axis of the circular column of the second cam body 891 extends in the Y direction. The second cam body 891 has a second through hole 891H. The second through hole 891H extends through the second cam body 891 in the Y direction. The central axis F2 of the second through hole 891H is offset from the central axis of the circular column of the second cam body 891. The part of the second input shaft 892 protruding from the extension wall 813 is located in the second through hole 891H. The inner surface of the second through hole 891H and the second input shaft 892 are fixed together. Therefore, when the second input shaft 892 rotates, the second cam body 891 rotates together with the second input shaft 892 around the same axis as the second input shaft 892. Thus, the central axis F2 of the second input shaft 892 is the rotation central axis of the second cam body 891 and thus the entire second eccentric cam 890. This rotation central axis may be hereinafter referred to as the second rotation central axis F2. The second rotation central axis F2 is parallel to the first rotation central axis F1.

The entire outer circumference of the second cam body 891 constitutes the second cam surface 891A. With respect to the circumferential direction around the central axis of the circular column of the second cam body 891, a part of the second cam surface 891A is in contact with the main body 879A of the connection member 879 from the lower side. Thus, the second cam surface 891A is in contact with the main body 879A of the connection member 879 from the opposite side than the first cam surface 881A. The second cam surface 891A is located at substantially the same position as the first cam surface 881A in both X and Y directions. The second cam surface 891A and the first cam surface 881A sandwich the main body 879A of the connection member 879 on both upper and lower sides.

A description is given of the relationship between postures of the first eccentric cam 880 and the second eccentric cam 890. The following description of the postures of the first and second eccentric cams 880 and 890 is based on the assumption that the first and second eccentric cams 880 and 890 are viewed in the Y direction. The posture of the first eccentric cam 880 is the relative positional relationship between the first rotation central axis F1 and the central axis of the circular column of the first cam body 881. The posture of the first eccentric cam 880 can be defined by the first defining direction, which is the direction in which the central axis of the circular column of the first cam body 881 is located as viewed from the first rotation central axis F1. For example, in the first state shown in Fig. 27, the first defining direction is the upward direction. The first defining direction can also be regarded as the direction in which the furthest point of the first cam surface 881A from the first rotation central axis F1 is located as viewed from the first rotation central axis F1. In other words, the first defining direction is the direction in which the distance between the first rotation central axis F1 and the first cam surface 881A is the largest as viewed from the first rotation central axis F1. The posture of the second eccentric cam 890 is the relative positional relationship between the second rotation central axis F2 and the central axis of the circular column of the second cam body 891. The posture of the second eccentric cam 890 can be defined by the second defining direction, which is the direction in which the central axis of the circular column of the second cam body 891 is located as viewed from the second rotation central axis F2. For example, in the first state shown in Fig. 27, the second defining direction is the upward direction. The second defining direction can also be regarded as the direction in which the furthest point of the second cam surface 891A from the second rotation central axis F2 is located as viewed from the second rotation central axis F2. In other words, the second defining direction is the direction in which the distance between the second rotation central axis F2 and the second cam surface 891A is the largest as viewed from the second rotation central axis F2. In this embodiment, the posture of the first eccentric cam 880 is the same as that of the second eccentric cam 890. For example, in the first state shown in Fig. 27, the first defining direction substantially coincides with the second defining direction.. In other words, the first eccentric cam 880 and the second eccentric cam 890 are in a relationship in which one can be translated to the other in the Z direction while maintaining the same posture. As will be described later, the first eccentric cam 880 and the second eccentric cam 890 rotate in conjunction with each other. Even when the first eccentric cam 880 and the second eccentric cam 890 rotate, their postures substantially coincide with each other at all times. Thus, the first eccentric cam 880 and the second eccentric cam 890 rotate in conjunction with each other so that the first defining direction and the second defining direction coincide.

### <Belt>

As shown in Fig. 27, the power transmission mechanism 872 includes an endless belt 888. The belt 888 constitutes an interlocking mechanism. As shown in Fig. 26, the belt 888 is located in the extension wall 813. As shown in Fig. 27, the belt 888 is wound around the first input shaft 882 of the first eccentric cam 880 and the second input shaft 892 of the second eccentric cam 890. As described above, the first input shaft 882 receives torque transmitted from the motive power generating device 873. Accordingly, the first input shaft 882 rotates. The belt 888 transmits the rotation of the first input shaft 882 to the second input shaft 892. Specifically, the belt 888 circles around the first input shaft 882 and the second input shaft 892 in response to the motion of the first input shaft 882. The second input shaft 892 rotates in response to this motion of the belt 888. Thus, the belt 888 causes the second input shaft 892 to rotate in conjunction with the first input shaft 882.

### <Operation of Sixth Embodiment>

Suppose that the dozer blade drive mechanism 871 is now in the first state shown in Fig. 27. In the first state, the first defining direction for the posture of the first eccentric cam 880 and the second defining direction for the posture of the second eccentric cam 890 are the upward direction, as described above. In relation to the first defining direction and the second defining direction being the upward direction, the rotational position of the dozer blade 608 in the first state is at the upper limit of the rotational range of the dozer blade 608. In the first state, the distance from the first rotation central axis F1 to the contact point between the first cam surface 881A and the main body 879A of the connection member 879 is the smallest in one rotation of the first eccentric cam 880. Also in the first state, the distance from the second rotation central axis F2 to the contact point between the second cam surface 891A and the main body 879A of the connection member 879 is the largest in one rotation of the second eccentric cam 890. In the first state, the main body 879A of the connection member 879 extends substantially in the X direction.

In the first state shown in Fig. 27, suppose that the first input shaft 882 of the first eccentric cam 880 rotates counterclockwise in the drawing of Fig. 27 in response to driving of the motor 874. The first cam body 881 then rotates counterclockwise with the first input shaft 882, as indicated by the arrow W1 in Fig. 28. Also, when the first input shaft 882 rotates, the second input shaft 892 rotates counterclockwise with the first input shaft 882, as indicated by the arrow W2 in Fig. 28, through transmission of power by the belt 888. The second cam body 891 then rotates in accordance with the rotation of the second input shaft 892. As a result of rotation of these components, the postures of both the first and second eccentric cams 880 and 890 change. Specifically, in the posture of the first eccentric cam 880 shown in Fig. 28, the central axis of the circular column of the first cam body 881 is located frontward as viewed from the first rotation central axis F1. Also, in the posture of the second eccentric cam 890 shown in Fig. 28, the central axis of the circular column of the second cam body 891 is located frontward as viewed from the second rotation central axis F2. With such rotation of the first eccentric cam 880 and the second eccentric cam 890, the connection member 879 rotates downward, as indicated by the arrow W3 in Fig. 28. The rotation of the connection member 879 is driven through the contact of the first cam surface 881A and the second cam surface 891A with the connection member 879.

Specifically, when the first eccentric cam 880 rotates counterclockwise from the first state, the distance from the first rotation central axis F1 to the contact point between the first cam surface 881A and the main body 879A of the connection member 879 gradually increases due to the eccentricity of the first rotation central axis F1. Accordingly, the first cam surface 881A pushes the connection member 879 gradually downward. On the other hand, when the second eccentric cam 890 rotates counterclockwise from the first state, the distance from the second rotation central axis F2 to the contact point between the second cam surface 891A and the main body 879A of the connection member 879 gradually decreases due to the eccentricity of the second rotation central axis F2. Accordingly, the second cam surface 891A allows the connection member 879 to move downward while supporting the connection member 879 upward. Thus, when the first eccentric cam 880 and the second eccentric cam 890 rotate, the first cam surface 881A and the second cam surface 891A guide the downward rotation of the connection member 879. When the connection member 879 rotates, the dozer blade 608 rotates downward together with the connection member 879 around the support shaft 817.

The downward rotation of the dozer blade 608 was described here for the example case where the first eccentric cam 880 and the second eccentric cam 890 rotate approximately 90 degrees from the first state, but the amount of rotation of the first eccentric cam 880 and the second eccentric cam 890 is not limited to approximately 90 degrees. Depending on the amount of rotation of the first eccentric cam 880 and the second eccentric cam 890, the dozer blade 608 may rotate to a lower position than in the second state shown in Fig. 28. In other words, the rotational position of the dozer blade 608 shown in Fig. 28 does not indicate the lower limit of the rotational range of the dozer blade 608.

In the second state shown in Fig. 28, suppose that the first input shaft 882 of the first eccentric cam 880 rotates clockwise in the drawing of Fig. 28 in response to driving of the motor 874. The entire first eccentric cam 880 then rotates clockwise, and the entire second eccentric cam 890 also rotates clockwise in conjunction with the first eccentric cam 880. In accordance with such rotation of the first eccentric cam 880 and the second eccentric cam 890, the first cam surface 881A and the second cam surface 891A guide the upward rotation of the connection member 879. When the connection member 879 rotates, the dozer blade 608 rotates upward together with the connection member 879 around the support shaft 817.

### <Advantageous Effects of Sixth Embodiment>

(6-1) As described above in Operation of Sixth Embodiment, the excavator 870 of this embodiment can raise and lower the dozer blade 608 through the contact of the first cam surface 881A and the second cam surface 891A with the connection member 879.

As described in (1-3) for the first embodiment, an external force may act on the dozer blade 300 from the front. As already described, the load associated with this external force mainly includes a component in the X direction. Therefore, this load is unlikely to act on parts located in the Z direction relative to the main body 879A of the connection member 879. Thus, this load is unlikely to act on the first eccentric cam 880, which is located upward of the main body 879A of the connection member 879. Likewise, this load is unlikely to act on the second eccentric cam 890, which is located downward of the main body 879A of the connection member 879. Therefore, in this embodiment, when a load acts on the dozer blade 300 from the front, this load can be inhibited from being input to the motive power generating device 873 via the first eccentric cam 880. Also, in this embodiment, the above load can be inhibited from being input to the motive power generating device 873 through the path constituted by the second eccentric cam 890, the belt 888, and the first eccentric cam 880. Since the input of the load to the motive power generating device 873 can be inhibited, the increase in the size of the motive power generating device 873 can be inhibited, as in (1-3) for the first embodiment.

(6-2) In the excavator 870 of this embodiment, the eccentric cams are located upward and downward of the main body 879A of the connection member 879. The upper and lower eccentric cams sandwich the connection member 879. This arrangement of the eccentric cams upward and downward of the connection member 879 allows stable support of the connection member 879 when guiding the rotation of the connection member 879. Besides, in the excavator 870 of this embodiment, the two eccentric cams are operated in conjunction with each other by the belt 888. This allows the postures of the two eccentric cams to be synchronized at all times. Thus, the two eccentric cams can guide the connection member 879 smoothly.

### <Modification Examples of Sixth Embodiment>

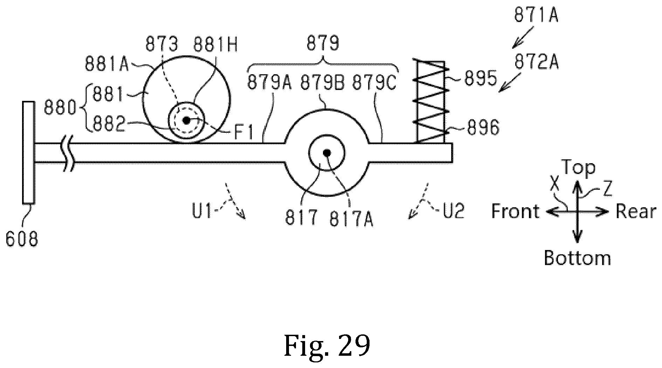

The sixth embodiment can be modified as described below. The first to sixth embodiments and the following modification examples can be combined with each other to such an extent that they are technically consistent with each other.
- The movable range of the dozer blade 608 is not limited to the example in the above embodiment. To achieve a movable range suitable for use of the dozer blade 608, the components such as the connection member 879 can be mounted to the excavator 870, taking into account the postures of the first eccentric cam 880 and the second eccentric cam 890.
- The interlocking mechanism is not limited to the example in the above embodiment. The interlocking mechanism may have any configuration to rotate the first eccentric cam 880 and the second eccentric cam 890 in conjunction with each other. For example, a chain may be used in place of the belt 888 as the interlocking mechanism. When a chain is used as the interlocking mechanism, a plurality of teeth can be formed on the outer circumference of the first input shaft 882 and the second input shaft 892 around which the chain is wound, and these teeth can constitute sprockets.
- The configuration of the first eccentric cam 880 is not limited to the example in the above embodiment. The first eccentric cam 880 may have any outer shape that includes, as viewed in its rotation central axis, a part outside a circle around the rotation central axis. The first eccentric cam 880 should be arranged so that this part constitutes the first cam surface 881A that contacts the connection member 879. For example, the above outer shape may be an arc or ellipse, centered off the rotation central axis of the first eccentric cam 880. The first cam surface 881A that contacts the connection member 879 is not necessarily the entire outer circumference of the first eccentric cam 880, but may be a part of the outer circumference of the first eccentric cam 880. As with the first eccentric cam 880, the configuration of the second eccentric cam 890 is not limited to the example in the above embodiment.
- It is not essential that the postures of the first and second eccentric cams 880 and 890 coincide with each other. - It is also not essential that the first eccentric cam 880 and the second eccentric cam 890 have the same shape and dimensions. Any configuration is possible as long as the contact with cam surfaces causes the connection member 879 to rotate upward and downward.
- The configuration to transmit the torque of the motive power generating device 873 to the eccentric cams is not limited to the example in the above embodiment. For example, one or more additional components may be interposed between the first eccentric cam 880 and the motive power generating device 873. The arrangement of the motive power generating device 873 may be changed from the example in the above embodiment, so as to transmit the torque of the motive power generating device 873 to the second eccentric cam 890, rather than to transmit the torque of the motive power generating device 873 to the first eccentric cam 880. It is also possible to provide two motive power generating devices 873 and transmit the torque to both the first eccentric cam 880 and the second eccentric cam 890, respectively. Any configuration is possible as long as the torque of the motive power generating device 873 can be transmitted to at least one of the eccentric cams.
- One of the two eccentric cams may be eliminated. - If one of the two eccentric cams is eliminated, it is possible to employ, for example, the dozer blade drive mechanism 871A and thus the power transmission mechanism 872A shown in Fig. 29. In Fig. 29, the same reference labels as in Figs. 25 to 28 are used for the components that function the same or substantially the same as the corresponding components shown in Figs. 25 to 28. As in Fig. 27, in the reference state shown in Fig. 29, the connection member 879, and thus the dozer blade 608, is in the upper limit position of its movable range.

In the power transmission mechanism 872A shown in Fig. 29, the connection member 879 includes an extension portion 879C in addition to the main body 879A and the connecting portion 879B. The extension portion 879C is located opposite the main body 879A across the connecting portion 879B. The extension portion 879C is shaped like a rod, for example. The extension portion 879C extends straight in the same line as the main body 879A.

The direction of rotation of the connection member 879 is hereinafter described, assuming that the power transmission mechanism 872A is viewed in the Y direction. As described above, in the reference state shown in Fig. 29, the dozer blade 608 is in the upper limit position of its movable range. Specifically, in the reference state shown in Fig. 29, the central axis of the circular column of the first cam body 881 is located upward as viewed from the first rotation central axis F1. In this state, the distance from the first rotation central axis F1 to the contact point between the first cam surface 881A and the main body 879A of the connection member 879 is the smallest in one rotation of the first eccentric cam 880. Under this situation, the direction of rotation on the side where the above contact point is located, as viewed from the first rotation central axis F1, is referred to as the first rotational direction U1. The first rotational direction U1 is counterclockwise in the drawing of Fig. 29. On the other hand, the direction opposite to the first rotational direction U1 is referred to as the second rotational direction U2. The second rotational direction U2 is clockwise in the drawing of Fig. 29.

The power transmission mechanism 872A includes a spring 896. With respect to the X direction, the spring 896 is located opposite the first eccentric cam 880 across the support shaft 817. With respect to the Y direction, the spring 896 is located at the same position as the extension portion 879C of connection member 879. With respect to the Z direction, the spring 896 is located upward of the extension portion 879C of connection member 879. The spring 896 as a whole is shaped like a circular tube. The lower end of the spring 896 in the direction along its central axis is fixed to the extension portion 879C of the connection member 879. Although not shown, the upper end of the spring 896 is fixed to the vehicle body 803. An example of the vehicle body 803 is the main portion 811 of the lower body 810. The spring 896 imparts a downward biasing force to the extension portion 879C of the connection member 879. In other words, the spring 896 imparts a biasing force to the connection member 879 so that the connection member 879 rotates toward the second rotational direction U2 relative to the vehicle body 803. The rotational center of the connection member 879 at this time is at the support shaft 817, as described above.

The power transmission mechanism 872A includes a damper 895. The damper 895 is inserted in the spring 896. The damper 895 is hydraulically operated, for example. Although not shown, the damper 895 includes a damper body and a rod. The damper body is shaped like a circular tube. The lower end of the damper body in the direction along its central axis is fixed to the extension portion 879C of the connection member 879. The rod protrudes upward of the damper body from the inside of the damper body. The upper end of the rod is fixed to the vehicle body 803. An example of the vehicle body 803 is the main portion 811 of the lower body 810. The damper body has a damping function of damping the rod motion.

The following describes operation of the power transmission mechanism 872A shown in Fig. 29. A description is first given of how the dozer blade 608 is rotated downward. The clockwise and counterclockwise directions in the following description refer to those in the drawing of Fig. 29, as in the above description. Suppose that the first eccentric cam 880 has rotated counterclockwise from the reference state shown in Fig. 29. Then, through the contact between the first cam surface 881A and the main body 879A of the connection member 879, the connection member 879 rotates toward the first rotational direction U1 around the support shaft 817. Specifically, when the first eccentric cam 880 rotates counterclockwise, the distance from the first rotation central axis F1 to the contact point between the first cam surface 881A and the main body 879A of the connection member 879 gradually increases. Accordingly, the first cam surface 881A pushes the main body 879A of the connection member 879 gradually downward. As a result, the main body 879A of the connection member 879, and thus the dozer blade 608, rotates toward the first rotational direction U1. In other words, the dozer blade 608 rotates downward. At this time, the connection member 879 and the dozer blade 608 rotate slowly due to the damping function of the damper 895.

A description is now given of how the dozer blade 608 is rotated upward. Suppose that the dozer blade 608 is positioned downward of its upper limit position. Also suppose that the first eccentric cam 880 has rotated clockwise from this state. If the spring 896 were not present, the first cam surface 881A would move away from the main body 879A of the connection member 879 as the first eccentric cam 880 rotates clockwise. However, in the power transmission mechanism 872A shown in Fig. 29, the extension portion 879C of the connection member 879 is biased toward the second rotational direction U2 by the spring 896. Accordingly, the main body 879A of the connection member 879 is pressed against the first cam surface 881A from the lower side. Therefore, when the first eccentric cam 880 moves away from the main body 879A of the connection member 879, the main body 879A of the connection member 879 follows the first cam surface 881A and rotates upward. Specifically, the main body 879A of the connection member 879 rotates upward around the support shaft 817. Accordingly, the dozer blade 608 rotates upward. Thus, in the power transmission mechanism 872A shown in Fig. 29, the dozer blade 608 can be raised and lowered with the balance between the first eccentric cam 880 and the spring 896.

The power transmission mechanism 872A shown in Fig. 29 provides the following advantages. When two eccentric cams are used, it is necessary to design the shape and dimensions of the eccentric cams appropriately so that the rotation of the connection member 879 can be smoothly guided by these two eccentric cams. Further, when two eccentric cams are used, it is necessary to provide two bearings and an interlocking mechanism, which tends to increase the overall number of parts. In addition, when two eccentric cams are used, it is necessary to mount the two eccentric cams to the vehicle body 803 such that they are in postures coinciding with each other, which may require time-consuming mounting work. By contrast, the use of the spring 896 can eliminate the above-mentioned design complexity, increase in the number of parts, and time-consuming mounting work.
- The power transmission mechanism 872A shown in Fig. 29 does not necessarily include the damper 895. - In the power transmission mechanism 872A shown in Fig. 29, the positions of the first eccentric cam 880 and the spring 896 with respect to the X direction may be interchanged. Specifically, the spring 896 may be located frontward of the support shaft 817, and the first eccentric cam 880 may be located rearward of the support shaft 817. Further, it is also possible that the first eccentric cam 880 and the spring 896 are located on the same side of the support shaft 817 with respect to the X direction. In this case, the first eccentric cam 880 and the spring 896 should be positioned on the upper and lower sides across the connection member 879. In short, the direction in which the first eccentric cam 880 causes the connection member 879 to rotate as the first eccentric cam 880 rotates should be opposite to the direction in which the spring 896 biases the connection member 879.
- In the case where only one eccentric cam is used to raise and lower the connection member 879 and thus the dozer blade 608, it is not essential to employ the spring 896. Any mechanism can be used as long as it can rotate the connection member 879 and thus the dozer blade 608 upward and downward. Even without using any mechanism, the eccentric cam may be located downward of the main body 879A of the connection member 879, such that the connection member 879 and thus the dozer blade 608 can be rotated upward and downward by the dead weight of the main body 879A of the connection member 879 and the contact of the eccentric cam with the connection member 879.
- The shape of the extension wall 813 is not limited to the example in the above embodiment. The extension wall 813 may have any configuration to support the motive power generating device 873 and the eccentric cams. - The extension walls 813 may be eliminated. In this case, the motive power generating device 873 and the eccentric cams can be mounted to the main portion 811 of the lower body 810.
- One of the left and right motive power generating devices 873 may be eliminated. At the same time, the eccentric cam on the side without the motive power generating device 873 may be eliminated. When one of the left and right motive power generating devices 873 is eliminated, the connection member 879 on the side without the motive power generating device 873 can be rotatably supported, for example, at the side opposite to the connection point to the dozer blade 608, by the support shaft 817. Eliminating one of the left and right motive power generating devices 873 is equivalent to eliminating one of the left and right power transmission mechanisms 872.
- The configuration of the connection member 879 is not limited to the example in the above embodiment. The connection member 879 may have any configuration to be connected to the vehicle body 803 and to have the dozer blade 608 mounted to the side opposite to the connection point to the vehicle body 803. The vehicle body 803 mentioned here includes the lower body 810, the upper body 530, and the operating mechanisms of the traveling units 550.
- It is not essential that the motive power generating device 873 includes the speed reducer 875 and the transmission member 876. For example, it is also possible that the motive power generating device 873 is constituted by only the motor 874, and the motor 874 is directly connected to the eccentric cam. The motive power generating device 873 may have any configuration as long as it includes the electric motor 874.
- The configuration of the dozer blade 608 is not limited to the example in the above embodiment. The dozer blade 608 may have any configuration to attain the required application, for example, leveling, excavation, and raking of earth and sand.
- The construction machines to which the dozer blade drive mechanism 871 is applicable are not limited to the example in the above embodiment. For example, the dozer blade drive mechanism 871 may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

### <Seventh Embodiment>

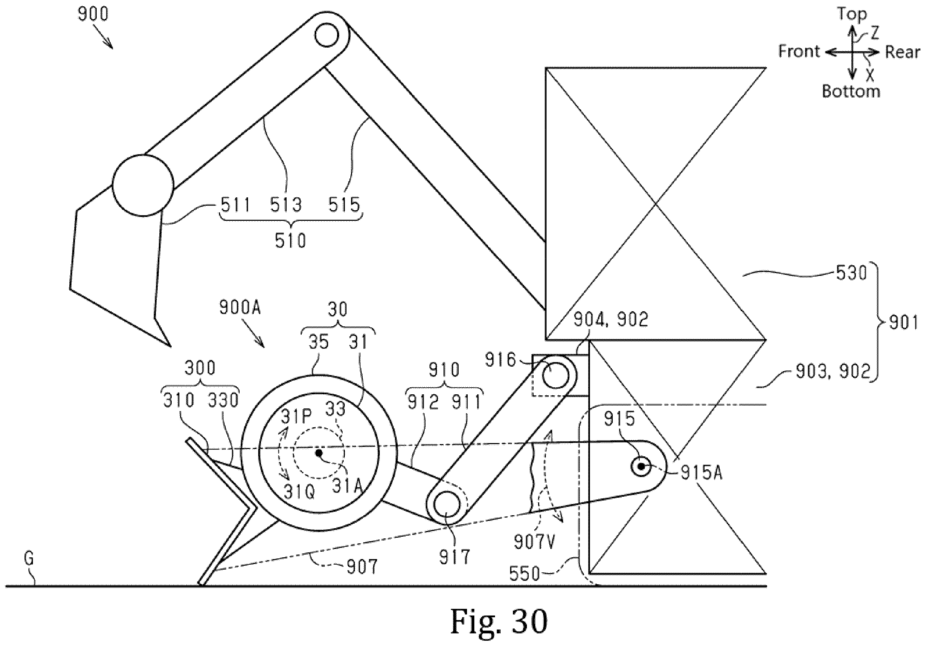

A dozer blade drive mechanism relating to the seventh embodiment will be described with reference to Figs. 30 to 32. The drawings may show the components in an enlarged manner for the sake of better intelligibility. The dimensions of the components and the ratios thereof may be different from those of the actual components, and among the drawings. In Figs. 30 to 32, the same reference labels as in Figs. 1 to 29 are used for the components that function the same or substantially the same as the corresponding components shown in Figs. 1 to 29. In the following, redundant description of the same features as in the first to sixth embodiments may be omitted or simplified.

As shown in Fig. 30, an excavator 900, serving as a construction machine, includes a vehicle body 901. The vehicle body 901 includes an upper body 530 and a lower body 902. The upper body 530 is configured in the same manner as in the first embodiment. The configuration of the lower body 902 will be described later. The upper body 530 is located opposite the ground surface G across the lower body 902. In this embodiment, the up and down, left and right, and front and rear are defined in the same manner as in the first embodiment. The upper body 530 is rotatable about an axis extending substantially in the Z direction to the left and right relative to the lower body 902.

A detailed description is given of the lower body 902. The lower body 902 includes a main portion 903 and a connection wall 904. The main portion 903 is contoured like a rectangular parallelepiped, for example. The main portion 903 houses various mechanisms necessary to operate the excavator 900. The main portion 903 is not limited to a box-like shape, but can have any shape capable of having necessary components mounted thereto.

The connection wall 904 is positioned frontward of the main portion 903. The connection wall 904 protrudes frontward from the front surface of the main portion 903. The connection wall 904 is fixed to the front surface of the main portion 903. The connection wall 904 is shaped like a rectangular plate, for example. The principal surfaces of the connection wall 904 face the left and right sides. The principal surface is the surface with the largest area among the external surfaces of a plate-like member. The connection wall 904 is located near the middle of the main portion 903 in the Y direction. The connection wall 904 is positioned near the top end of the main portion 903 in the Z direction. The external dimensions of the connection wall 904 are considerably smaller than those of the motive power generating device 30 described later.

The excavator 900 includes a pair of traveling units 550, a work attachment 510, and a dozer blade 300. The traveling units 550 and the work attachment 510 are configured in the same manner as in the first embodiment. The dozer blade 300 is basically configured in the same manner as in the first embodiment. However, the dozer blade 300 includes a mounting structure 330 instead of the mounting pieces 320 of the first embodiment. Specifically, the mounting structure 330 is fixed to the rear surface of the dozer blade body 310. The mounting structure 330 constitutes a wall for mounting the motive power generating device 30 described later. The mounting structure 330 may have any shape as long as it can have the motive power generating device 30 mounted thereto.

### <Dozer Blade Drive Mechanism>

The excavator 900 includes a dozer blade drive mechanism 900A. The dozer blade drive mechanism 900A includes a pair of connection members 907. The pair of connection members 907 are located on the left and right sides of the lower body 902. Each of the connection members 907 is configured in the same manner as the arm in the first embodiment. Specifically, the connection member 907 is long in the front-rear direction. The rear end portion of the connection member 907 is penetrated by a support shaft 915. The support shaft 915 is fixed to the main portion 903 of the lower body 902. Thus, the connection member 907 is connected to the main portion 903 via the support shaft 915. The support shaft 915 is positioned rearward of the connection wall 904 of the lower body 902. The support shaft 915 is positioned lower than the connection wall 904 in the Z direction. The support shaft 915 is shaped like a circular column. The central axis 915A of the support shaft 915 extends substantially in the Y direction. As indicated by the arrow 907V in Fig. 30, the connection member 907 can rotate up and down around the central axis 915A of the support shaft 915 relative to the main portion 903. Thus, the central axis 915A of the support shaft 915 is the rotation central axis of the connection member 907. The dozer blade 300 is mounted via a mounting means to the front end of the connection member 907, i.e., the end of the connection member 907 opposite to the connection point to the main portion 903 of the lower body 902. Various mounting means, such as bolting or welding, can be employed. In Fig. 30, the connection member 907 is partially cut out to elucidate the positional relationship between the components.

The dozer blade drive mechanism 900A includes a motive power generating device 30. The motive power generating device 30 is mounted to the mounting structure 330 of the dozer blade 300. The motive power generating device 30 is configured in the same manner as in the first embodiment. Specifically, the motive power generating device 30 includes a motor 31 serving as a drive source, a speed reducer 35, and a transmission member. The transmission member is not shown in the drawings. As described above for the first embodiment, the motor 31 operates electrically upon receiving electricity fed from a battery, which is not shown. The output shaft 33 of the motor 31 is rotatable relative to the housing. The output shaft 33 rotates about its own central axis 31A. The speed reducer 35 is aligned with the motor 31 in the direction along the central axis 31A of the output shaft 33 of the motor 31. The speed reducer 35 is connected to the output shaft 33 of the motor 31. The speed reducer 35 receives the torque output from the output shaft 33 of the motor 31. The speed reducer 35 multiplies the torque from the motor 31 and outputs the resulting torque to the transmission member. The transmission member is aligned with the speed reducer 35 in the direction along the central axis 31A of the output shaft 33 of the motor 31. The transmission member is positioned opposite the motor 31 across the speed reducer 35. The transmission member receives the torque from the speed reducer 35 and outputs torque around the central axis 31A of the output shaft 33 of the motor 31. The rotational direction of the transmission member coincides with the rotational direction of the output shaft 33 of the motor 31. The central axis 31A of the output shaft 33 of the motor 31 is hereinafter referred to as the central axis 31A of the motive power generating device 30. With the motive power generating device 30 mounted to the dozer blade 300, the central axis 31A of the motive power generating device 30 extends in the Y direction. Thus, the central axis 31A of the motive power generating device 30 is substantially parallel to the rotation central axis of the connection member 907. Although not shown, the motive power generating device 30 is covered by a cover, for example, to prevent the adhesion of earth and sand.

The dozer blade drive mechanism 900A includes a link mechanism 910. The link mechanism 910 includes a first link 911 and a second link 912. The first link 911 and the second link 912 are straight link components in plan view in the Y direction.

A first end of the first link 911 is connected to the connection wall 904 of the lower body 902. Specifically, the first end of the first link 911 is penetrated by a first support shaft 916. The first support shaft 916 is fixed to the connection wall 904. Thus, the first link 911 is connected to the connection wall 904 via the first support shaft 916. The first support shaft 916 is shaped like a circular column. The central axis of the first support shaft 916 extends substantially in the Y direction. Thus, the central axis of the first support shaft 916 is substantially parallel to the rotation central axis of the connection member 907. The first link 911 is rotatable relative to the first support shaft 916. The first link 911 is retained to the first support shaft 916 by means of a retainer not shown.

A second end of the first link 911 is connected to a first end of the second link 912. Specifically, the second end of the first link 911 and the first end of the second link 912 are penetrated by a second support shaft 917. The second support shaft 917 is shaped like a circular column. The central axis of the second support shaft 917 extends substantially in the Y direction. Thus, the central axis of the second support shaft 917 is substantially parallel to the central axis of the first support shaft 916. The second support shaft 917 is retained to the first link 911 and the second link 912 by means of a retainer not shown. Both the first link 911 and the second link 912 are rotatable relative to the second support shaft 917. Therefore, the first link 911 and the second link 912 can rotate around the second support shaft 917 relative to each other.

A second end of the second link 912 is fixed to the transmission member of the motive power generating device 30. The second end of the second link 912 rotates together with the transmission member. Thus, the second link 912 rotates around the central axis 31A of the motor 31. As described above, the link mechanism 910 connects the motive power generating device 30 to the connection wall 904, which is a part of the vehicle body 901.

### <Operation of Seventh Embodiment>

The following now describes how the dozer blade 300 is raised and lowered. A base posture refers to the posture of the components of the dozer blade drive mechanism 900A taken when the dozer blade body 310 is in contact with the ground surface G, as shown in Fig. 30. In the base posture, the connection member 907 is positioned generally along the X direction. In the base posture, the first link 911 and the second link 912 are arranged to form a V-shape with the second support shaft 917 at the lower end, when the excavator 900 is viewed in the Y direction. In the following, a first direction 31P refers to the clockwise direction in Fig. 30, that is, the clockwise direction determined when the excavator 900 is viewed in plan view from the left, and a second direction 31Q refers to the direction opposite to the first direction 31P.

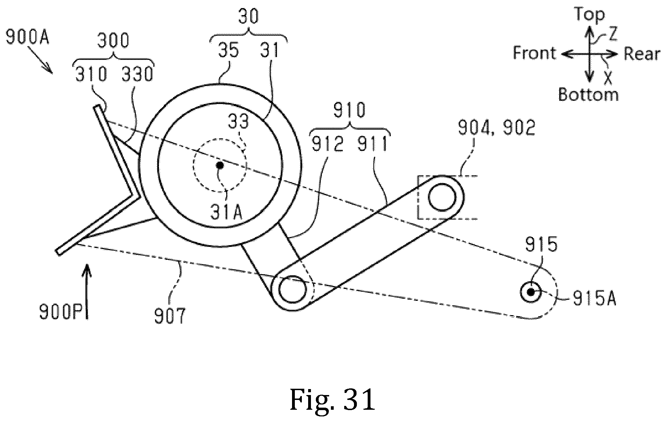

Suppose now that the components of the dozer blade drive mechanism 900A are in the base posture. In this state, suppose that the output shaft 33 of the motor 31 rotates in the first direction 31P. Then, as shown in Fig. 31, the second link 912 and the first link 911 operate in conjunction, and the motive power generating device 30 moves closer to the connection wall 904. Specifically, as shown in Fig. 31, the inferior angle formed by the first link 911 and the second link 912 as viewed from the Y direction is smaller than that in the base posture. Accordingly, the motive power generating device 30 and the dozer blade 300 move upward as compared to the base posture, as indicated by the arrow 900P in Fig. 31. Specifically, the motive power generating device 30 and the dozer blade 300 rotate upward around the support shaft 915. In accomplishing this rotational motion, the first link 911 and the second link 912, having a smaller inferior angle formed by them, transmit the torque generated by the motive power generating device 30 to the dozer blade 300 and the connection member 907 so that the dozer blade 300 rotates upward. Thus, the link mechanism 910 transmits the torque generated by the motive power generating device 30 to the dozer blade 300 and the connection member 907 as the rotational motion of the dozer blade 300 around the rotation central axis of the connection member 907. The inferior angle is the angle formed by the first link 911 and the second link 912 that is smaller than 180 degrees.

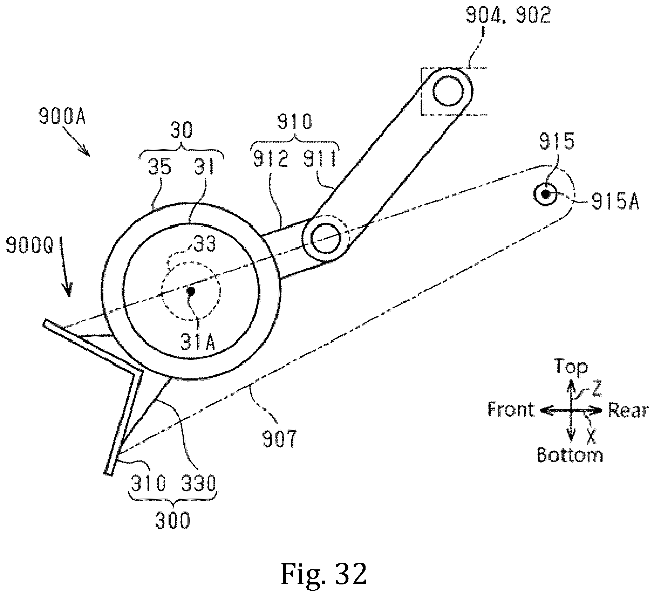

As shown in Fig. 30, suppose again that the components of the dozer blade drive mechanism 900A are in the base posture. In this state, suppose that the output shaft 33 of the motor 31 rotates in the second direction 31Q. When the ground surface G is dug down by the work attachment 510, for example, the excavator 900 can reach the dozer blade 300 to the side downward of the imaginary plane extending from the lower surface of the crawler of the traveling unit 550. Now, when the output shaft 33 of the motor 31 is rotated in the second direction 31Q, as shown in Fig. 32, the second link 912 and the first link 911 operate in conjunction, and the motive power generating device 30 moves away from the connection wall 904. Specifically, the inferior angle formed by the first link 911 and the second link 912 as viewed from the Y direction is larger than that in the base posture. Accordingly, the motive power generating device 30 and the dozer blade 300 move downward as compared to the base posture, as indicated by the arrow 900Q in Fig. 32. The motive power generating device 30 and the dozer blade 300 rotate downward around the support shaft 915. In accomplishing this rotational motion, the first link 911 and the second link 912, having a larger inferior angle formed by them, transmit the torque generated by the motive power generating device 30 to the dozer blade 300 and the connection member 907 so that the dozer blade 300 rotates downward. Thus, the link mechanism 910 transmits the torque generated by the motive power generating device 30 to the dozer blade 300 and the connection member 907 as the rotational motion of the dozer blade 300 around the rotation central axis of the connection member 907.

### <Advantageous Effects of Seventh Embodiment>

According to this embodiment, the rotation of the output shaft 33 of the motor 31 can be transmitted to the dozer blade 300 via the first link 911 and the second link 912. This allows the dozer blade 300 to be raised and lowered. In other words, according to this embodiment, the dozer blade 300 can be raised and lowered using the motor 31 as the power source. In employing such an electrically powered raising and lowering mechanism for the dozer blade 300, this embodiment is configured such that the motive power generating device 30 is mounted to the dozer blade 300, and the motive power generating device 30 is connected to the lower body 902 by the link mechanism 910. Now consider a comparative example in which the motive power generating device 30 is mounted to the lower body 902 and the motive power generating device 30 is connected to the dozer blade 300 by the link mechanism 910, as in the first embodiment. In the comparative example, the motive power generating device 30 is located near the front surface of the main portion 903 of the lower body 902. The external dimensions of the motive power generating device 30 are reasonably large. Therefore, in the comparative example, a large space near the front surface of the main portion 903 is allocated to the motive power generating device 30. As a result, a small space is left for other components near the front surface of the main portion 903.

By contrast, in this embodiment, the motive power generating device 30, which has large external dimensions, is mounted to the dozer blade 300. Thus, the motive power generating device 30 is positioned away from the front surface of the main portion 903. In this case, there is no need to locate the large component near the front surface of the main portion 903. There should be only a small space near the front surface of the main portion 903 for mounting the first support shaft 916, which has smaller external dimensions. In such configuration of this embodiment, it is easy to secure free space near the front surface of the main portion 903. Other components can then be located in this free space.

### <Modification Examples of Seventh Embodiment>

The seventh embodiment can be modified as described below. The first to seventh embodiments and the following modification examples can be combined with each other to such an extent that they are technically consistent with each other.
- The configuration of the link mechanism 910 is not limited to the example in the above embodiment. The dimensions and shapes of the link components can be changed as needed from the example in the above embodiment. Furthermore, the number of link components constituting the link mechanism 910 can be changed as needed from the example in the above embodiment. The link mechanism 910 may have any configuration to transmit the torque generated by the motive power generating device 30 as a rotational motion of the dozer blade 300 around the central axis 915A of the support shaft 915.
- The configuration of the connection member 907 is not limited to the example in the above embodiment. The connection member 907 may have any configuration to be rotatably connected to the vehicle body 901 and capable of having the dozer blade 300 mounted to the side opposite to the connection point to the vehicle body 901. As in the modification example for the first embodiment, the manner in which the connection member 907 is connected to the vehicle body 901 is not limited to the example in the above embodiment. The connection point in the vehicle body 901 for connecting the connection member 907 to the vehicle body 901 is not limited to the main portion 903 of the lower body 902.
- As in the modification example for the first embodiment, the configuration of the motive power generating device 30 is not limited to the example in the above embodiment. The motive power generating device 30 may have any configuration to include an electric motor 31 that serves as the drive source and to be capable of generating torque around a central axis parallel to the rotation central axis of the connection member 907.
- The structure of the dozer blade 300 for mounting the motive power generating device 30 to the dozer blade 300 is not limited to the example in the above embodiment. The dozer blade 300 may have any structure that allows the motive power generating device 30 to be mounted to the dozer blade 300. For example, the motive power generating device 30 may be mounted to the dozer blade body 310.
- The construction machines to which the dozer blade drive mechanism 900A is applicable are not limited to the example in the above embodiment. For example, the dozer blade drive mechanism 900A may be applied to a bulldozer or a compact truck loader.
- The foregoing embodiment describes a plurality of physically separate constituent parts. They may be combined into a single part, and any one of them may be divided into a plurality of physically separate constituent parts. Irrespective of whether or not the constituent parts are integrated, they are acceptable as long as they are configured to solve the problems.

## Claims

1. A dozer blade drive mechanism (100, 600A, 651, 701, 801, 871, 900A) comprising:
a connection member (70, 633, 715, 815, 879, 907) capable of having a dozer blade (300, 608) mounted; and
a motive power generating device (30, 631, 720, 830, 873) including an electric motor (31, 722, 831, 874), the motive power generating device being configured to generate torque.

2. The dozer blade drive mechanism (100) of claim 1,
wherein the connection member (70) is rotatably connected to a vehicle body (520) of a construction machine (500) at a first connection point (21A), the connection member being capable of having the dozer blade (300) mounted to a second connection point (23A) opposite to the first connection point;
wherein the motive power generating device (30) is configured to generate torque around a torque central axis (31A) parallel to a rotation central axis (21A) of the connection member;
wherein the dozer blade drive mechanism further includes a link mechanism (40) configured to transmit the torque generated by the motive power generating device as a rotational motion of the dozer blade around the rotation central axis; and
wherein when viewed in a direction parallel to the torque central axis, with respect to a front-rear direction of the construction machine, the torque central axis is located between the dozer blade and a middle of a line segment connecting the first connection point and the second connection point.

3. The dozer blade drive mechanism (100) of claim 2,
wherein the link mechanism (40) includes a first link (50) and a second link (60), the first link being configured to rotate around the torque central axis (31A) by the torque received from the motive power generating device (30), the second link being rotatably connected to the first link at a third connection point (22A) and rotatably connected to the dozer blade (300) at a fourth connection point (23A), and
wherein when viewed in a direction parallel to the torque central axis, a length of a first line segment (L1) is 50 to 200% of a length of a second line segment (L2), where the first line segment connects the torque central axis and the third connection point, and the second line segment connects the third connection point and the fourth connection point.

4. The dozer blade drive mechanism (100) of claim 2,
wherein the link mechanism (40) includes a first link (50) and a second link (60), the first link being configured to rotate around the torque central axis (31A) by the torque received from the motive power generating device (30), the second link being rotatably connected to the first link at a third connection point (22A) and rotatably connected to the dozer blade (300) at a fourth connection point (23A), and
wherein assuming that the dozer blade is in contact with a ground surface (G) on which the construction machine (500) is located, the fourth connection point is located downward of the third connection point.

5. The dozer blade drive mechanism (100) of claim 4, wherein when viewed in a direction parallel to the torque central axis (31A), assuming that the dozer blade (300) is in contact with the ground surface (G), an inferior angle (θ) formed by a first line segment (L1) and a second line segment (L2) is 75 to 105 degrees, where the first line segment (L1) connects the torque central axis and the third connection point (22A), and the second line segment (L2) connects the third connection point and the fourth connection point (23A).

6. The dozer blade drive mechanism (100) of claim 5, wherein assuming that the dozer blade (300) is in contact with the ground surface (G), the first line segment (L1) is parallel to the ground surface.

7. The dozer blade drive mechanism (600A) of claim 1,
wherein the motive power generating device (631) is located in a traveling crawler (611) of a construction machine (600); and
wherein the connection member (633) is connected to the motive power generating device at a connection point, the connection member being rotatable by the torque received from the motive power generating device and capable of having the dozer blade (608) mounted to a mounting point opposite to the connection point.

8. The dozer blade drive mechanism (600A) of claim 7,
wherein the motive power generating device (631) and the connection member (633) form a first power transmission mechanism (630),
wherein the dozer blade drive mechanism further includes a second power transmission mechanism (630), and
wherein the first power transmission mechanism and the second power transmission mechanism are provided for the traveling crawler (611) and another traveling crawler (611) of the construction machine (600), respectively.

9. The dozer blade drive mechanism (600A) of claim 8,
wherein each of the power transmission mechanisms (630) includes a universal coupling (635) that is located at the mounting point and configured to connect the connection member (633) and the dozer blade (608), and
wherein the dozer blade drive mechanism further includes a control device (601) configured to separately control the electric motors (31) of the first power transmission mechanism and the second power transmission mechanism.

10. The dozer blade drive mechanism (600A) of claim 7, further comprising:
a driven sprocket (637) having an annular shape coaxial with a rotation central axis (31A) of the motive power generating device (631), the driven sprocket having a plurality of teeth on an outer circumferential surface thereof, the driven sprocket being penetrated by the motive power generating device; and
a bearing (639) located between the driven sprocket and the motive power generating device and supporting the driven sprocket so as to be rotatable relative to the motive power generating device,
wherein the driven sprocket is located at an end in the traveling crawler (611), the end being opposite to a driving sprocket (618) for traveling, across a center of the traveling crawler, and
wherein the connection member (633) extends from the connection point toward a side opposite to the driving sprocket.

11. The dozer blade drive mechanism (651) of claim 1,
wherein the motive power generating device (631) is mounted to a vehicle body (653) of a construction machine (650); and
wherein the connection member (633) is connected to the motive power generating device at a connection point, the connection member being rotatable by the torque received from the motive power generating device and capable of having the dozer blade (608) mounted to a side opposite to the connection point.

12. The dozer blade drive mechanism (651) of claim 11, wherein the vehicle body (653) includes a wall (665) for mounting the motive power generating device (631), and the wall extends across a middle between a pair of crawlers.

13. The dozer blade drive mechanism (651) of claim 11,
wherein the motive power generating device (631) and the connection member (633) form a first power transmission mechanism (670),
wherein the dozer blade drive mechanism further includes a second power transmission mechanism (670), and
wherein the first power transmission mechanism and the second power transmission mechanism are located on one side and another side, respectively, across a middle between a pair of crawlers.

14. The dozer blade drive mechanism (701) of claim 1,
wherein the motive power generating device (720) is mounted to an upper body (710) rotatable relative to a lower body (705) of a construction machine (700); and
wherein the connection member (715) is connected to the motive power generating device at a connection point (724V), the connection member being rotatable by the torque received from the motive power generating device and capable of having the dozer blade (608) mounted to a side opposite to the connection point.

15. The dozer blade drive mechanism (701) of claim 14,
wherein the construction machine (700) includes a bucket (511) for excavation, and
wherein when viewed in a direction parallel to a rotation central axis (724V) of the motive power generating device (720), the bucket is located in a first direction as viewed from the connection point (724V), where the first direction is a direction in which the dozer blade (608) is located as viewed from the connection point.

16. The dozer blade drive mechanism (600A, 651, 701) of any one of claims 7, 11, and 14,
wherein the motive power generating device (631, 720) includes a transmission member (640) configured to output torque in accordance with rotation of the electric motor (31, 722),
wherein the transmission member includes a first member (641) and a second member (642) arranged in a direction along a rotation central axis (31A, 724V) of the motive power generating device,
wherein the first member has:
a first flat surface (641B) facing the second member; and
a recess (641C) formed in the first flat surface and extending along a first axis parallel to the first flat surface, and
wherein the second member has:
a second flat surface (642A) facing the first flat surface; and
a protrusion (642C) protruding from the second flat surface at a position facing the recess, the protrusion extending along the first axis.

17. The dozer blade drive mechanism (801) of claim 1,
wherein the connection member (815) is rotatably connected to a vehicle body (803) of a construction machine (800) at a connection point, the connection member being capable of having the dozer blade (608) mounted to a side opposite to the connection point; and
wherein the dozer blade drive mechanism further comprises:
a conversion mechanism (850) configured to convert the torque generated by the motive power generating device into a linear motion in a direction along a power central axis (840C), the power central axis being an axis along a top-bottom direction of the construction machine; and
a link mechanism (820) configured to transmit the linear motion produced by conversion of the conversion mechanism as a rotational motion of the dozer blade.

18. The dozer blade drive mechanism (801) of claim 17, wherein the conversion mechanism (850) includes:
a nut (851) configured to rotate by the torque received from the motive power generating device (830);
a threaded shaft (855) penetrating the nut; and
a plurality of balls (858) interposed between the nut and the threaded shaft.

19. The dozer blade drive mechanism (801) of claim 18,
wherein the motive power generating device (830) includes a speed reducer (840) configured to change a rotational speed of the electric motor (831) and output a resulting rotational speed,
wherein the speed reducer is shaped like a tube having a central axis coinciding with the power central axis (840C), and the speed reducer includes an output member (844) for outputting torque to the nut (851), the output member being located on one end surface side in a direction along the power central axis,
wherein the nut is connected to the output member of the speed reducer, and
wherein the threaded shaft (855) and the nut penetrate the speed reducer.

20. The dozer blade drive mechanism (801) of claim 17, wherein the motive power generating device (830) is connected to the vehicle body (803) so as to be rotatable around a central axis parallel to a rotation central axis (817A) of the connection member (815).

21. The dozer blade drive mechanism (871) of claim 1,
wherein the connection member (879) is rotatably connected to a vehicle body (803) of a construction machine (870) at a connection point, the connection member being capable of having the dozer blade (608) mounted to a side opposite to the connection point;
wherein the dozer blade drive mechanism further comprises an eccentric cam (880) configured to rotate around a rotation central axis (F1) parallel to a rotation central axis (817A) of the connection member by the torque received from the motive power generating device; and
wherein the eccentric cam has a cam surface (881A) forming an outer circumferential surface thereof, and the cam surface is in contact with the connection member.

22. The dozer blade drive mechanism (871) of claim 21,
wherein the eccentric cam (880) constitutes a first eccentric cam, the cam surface (881A) constitutes a first cam surface, and the rotation central axis (F1) of the first eccentric cam constitutes a first rotation central axis,
wherein the dozer blade drive mechanism further comprises:
a second eccentric cam (890) configured to rotate around a second rotation central axis (F2) parallel to the first rotation central axis, and the second eccentric cam being located opposite the first eccentric cam across the connection member (879); and
an interlocking mechanism (888) configured to cause the first eccentric cam and the second eccentric cam to rotate in conjunction with each other,
wherein the second eccentric cam has a second cam surface (891A) forming an outer circumferential surface thereof, and the second cam surface is in contact with the connection member from an opposite side than the first cam surface,
wherein the first eccentric cam and the second eccentric cam have a same shape
and same dimensions, and
wherein the first eccentric cam and the second eccentric cam rotate in conjunction with each other so that a direction in which, as viewed from the first rotation central axis, a furthest point of the first cam surface from the first rotation central axis is located coincides with a direction in which, as viewed from the second rotation central axis, a furthest point of the second cam surface from the second rotation central axis is located.

23. The dozer blade drive mechanism (871) of claim 21, further comprising:
a spring (896) configured to impart a biasing force to the connection member (879) so that the connection member rotates toward one direction side relative to the vehicle body (803),
wherein when a distance from the rotation central axis (F1) of the eccentric cam (880) to a contact point between the cam surface (881A) and the connection member is smallest, the one direction side is opposite to a side on which the contact point is located, as viewed from the rotation central axis of the eccentric cam.

24. The dozer blade drive mechanism (900A) of claim 1,
wherein the connection member (907) is rotatably connected to a vehicle body (901) of a construction machine (900) at a connection point, the connection member having the dozer blade (300) mounted to a side opposite to the connection point;
wherein the motive power generating device (30) is mounted to the dozer blade, the motive power generating device being configured to generate torque around a central axis (31A) parallel to a rotation central axis (915A) of the connection member; and
wherein the dozer blade drive mechanism further comprises a link mechanism (910) connecting the motive power generating device and the vehicle body, the link mechanism being configured to transmit the torque generated by the motive power generating device as a rotational motion of the dozer blade around the rotation central axis.
